(19) **Europäisches Patentamt** **European Patent Office** **Office européen des brevets**

(11) **EP 1 926 616 B1**

(12) **FASCICULE DE BREVET EUROPEEN**

(45) Date de publication et mention de la délivrance du brevet:
**21.11.2012 Bulletin 2012/47**

(21) Numéro de dépôt: **06808325.2**

(22) Date de dépôt: **13.09.2006**

(51) Int Cl.:
**B60G 17/0165** (2006.01)  **B60G 3/20** (2006.01)
**B60G 3/04** (2006.01)  **F16F 9/46** (2006.01)
**B60G 17/018** (2006.01)

(86) Numéro de dépôt international:
**PCT/FR2006/050887**

(87) Numéro de publication internationale:
**WO 2007/034103 (29.03.2007 Gazette 2007/13)**

(54) **DISPOSITIF DE COMMANDE DE SUSPENSION, VEHICULE MUNI DE CELUI-CI, PROCEDE D'OBTENTION ET PROGRAMME**

VORRICHTUNG ZUR AUFHÄNGUNGSREGELUNG, FAHRZEUG MIT DIESER VORRICHTUNG, HERSTELLUNGSVERFAHREN DAFÜR UND ENTSPRECHENDES PROGRAMM

SUSPENSION CONTROL DEVICE, VEHICLE COMPRISING SAID DEVICE, PRODUCTION METHOD THEREOF AND ASSOCIATED PROGRAM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.09.2005 FR 0509703**

(43) Date de publication de la demande:
**04.06.2008 Bulletin 2008/23**

(73) Titulaire: **PEUGEOT CITROËN AUTOMOBILES S.A.**
**78140 Vélizy Villacoublay (FR)**

(72) Inventeur: **POILBOUT, François**
**F-75002 Paris (FR)**

(56) Documents cités:
**EP-A- 0 539 063    US-A- 5 303 155**
**US-A- 5 445 405    US-A1- 2004 254 701**

**Description**

L'invention concerne un dispositif de commande d'une suspension d'un véhicule automobile. Un tel dispositif de commande selon le préambule de la revendication 1 est connu de document US 5 303 155 A.

Un domaine d'application de l'invention concerne les véhicules automobiles ayant une suspension à ressort, une suspension hydropneumatique ou une suspension d'un autre type.

Ces suspensions comportent sur chaque roue un amortisseur à loi d'amortissement variable, pouvant être réglée par un actionneur commandé par un calculateur embarqué sur le véhicule.

Le calculateur reçoit en entrée des mesures fournies par des capteurs et calcule à partir de celles-ci la ou les grandeurs de commande des actionneurs des amortisseurs.

Le calculateur tient compte notamment des accélérations subies par la caisse du véhicule au cours du trajet, telles que par exemple l'accélération modale de pompage dans la direction verticale, l'accélération modale de roulis autour d'un axe longitudinal et l'accélération modale de tangage autour d'un axe transversal.

Par intégration, le calculateur calcule les vitesses modales correspondantes de la caisse.

On connaît ainsi des dispositifs dans lesquels le calculateur met en oeuvre une régulation pour faire tendre vers zéro la vitesse modale verticale en pompage, la vitesse modale angulaire en roulis et la vitesse modale angulaire en tangage, cette logique étant communément appelée "Skyhook" et devant améliorer le confort des personnes dans la voiture.

L'un des problèmes de ces dispositifs est qu'ils ne garantissent pas toujours l'adhérence du véhicule à la route.

En effet, dans certaines circonstances, comme les fortes sollicitations, les suspensions commandées par une logique de type Skyhook jouent au détriment de l'effort vertical sur le pneu. Par exemple, sur une bosse, la logique Skyhook commandera d'abord une souplesse de l'amortisseur pour favoriser le confort au détriment de l'effort vertical.

Egalement, les sollicitations imposées par le conducteur du véhicule entraînent pas ou peu de remontées d'efforts venus du sol vers la caisse du véhicule, ce qui est ressenti comme peu rassurant ou donne l'impression au conducteur que ses actions n'ont pas de prise sur le véhicule.

Il existe donc un besoin en une logique qui fasse suivre à la caisse le profil de la route pour privilégier la tenue de la caisse, sans pour autant nuire au confort apporté par la logique Skyhook.

En effet, une logique qui ne ferait que faire suivre à la caisse le profil de la route serait incompatible avec les exigences en confort d'une suspension, car dans ce cas toutes les irrégularités de la route seraient directement retransmises à la caisse et au conducteur.

L'invention vise à obtenir un dispositif de commande d'une suspension, qui pallie les inconvénients de l'état de la technique et qui fasse un compromis entre la logique Skyhook et une logique de tenue de caisse.

En particulier, la logique utilisée dans le dispositif de commande suivant l'invention doit traiter au moins un mode de caisse, que sont le pompage, le roulis et le tangage.

A cet effet, un premier objet de l'invention est un dispositif de commande d'une suspension d'une caisse de véhicule automobile sur ses roues, comportant un calculateur comportant un moyen de calcul d'une grandeur de commande d'un actionneur d'au moins un amortisseur variable de la suspension en fonction d'un effort modal de consigne de l'amortisseur, calculé en fonction d'au moins une vitesse modale de caisse estimée sur le véhicule, caractérisé en ce que le calculateur comporte :

- un premier moyen de calcul d'un premier effort modal F1 de consigne de l'amortisseur en fonction d'au moins une vitesse modale absolue de caisse, estimée sur le véhicule,
- un deuxième moyen de calcul d'un deuxième effort modal F2 de consigne de l'amortisseur en fonction d'au moins une vitesse modale relative de caisse par rapport au plan moyen des roues, estimée sur le véhicule,
- un moyen de détection d'au moins une sollicitation sur le véhicule,
- un moyen de calcul d'un coefficient $\alpha$ de pondération du premier effort F1 de consigne et du deuxième effort F2 de consigne, pour le calcul dudit effort modal F de consigne de l'amortisseur suivant la formule

$$F = (1- \alpha).F1 + \alpha.F2,$$

où le coefficient $\alpha$ de pondération est supérieur ou égal à 0 et inférieur ou égal à 1, est normalement à 0 et prend la valeur 1 au moins lorsque la sollicitation détectée dépasse un seuil prescrit.

Suivant l'invention, le premier moyen de calcul met en oeuvre une première logique Skyhook, c'est-à-dire de confort.

Le deuxième moyen de calcul met en oeuvre une deuxième logique de type Roadhook, c'est-à-dire qui suit le profil de la route, cette logique étant également appelée logique de tenue de caisse ou logique de comportement.

La première logique de confort est utilisée par défaut et donc la plupart du temps. La deuxième logique de tenue de caisse prend temporairement la main sur la première logique de confort lorsque des sollicitations importantes sont détectées.

Un deuxième objet de l'invention est un véhicule automobile comportant une caisse, des roues, une suspension de la caisse sur les roues et un dispositif de commande de la suspension tel que décrit ci-dessus.

Un troisième objet de l'invention est un procédé d'obtention d'un véhicule automobile,

le véhicule automobile étant muni de roues, d'une caisse, d'une suspension ayant au moins un amortisseur à amortissement variable de la caisse sur les roues, et d'un dispositif de commande de la suspension, le dispositif de commande ayant au moins un calculateur apte à calculer une grandeur de commande d'un actionneur dudit au moins un amortisseur de la suspension,

le procédé d'obtention comportant une étape de montage du calculateur sur le véhicule,

caractérisé en ce que le procédé d'obtention comporte

au moins une étape de programmation du calculateur suivant au moins un programme comportant des instructions de programme mettant en oeuvre les moyens de calcul du dispositif de commande de la suspension tel que décrit ci-dessus.

Un quatrième objet de l'invention est un programme informatique de pilotage d'un calculateur, comportant des instructions de programme pour le calcul d'au moins un premier effort modal F1 de consigne d'amortisseur en fonction d'au moins une vitesse modale absolue de caisse, pour le calcul d'un deuxième effort modal F2 de consigne de l'amortisseur en fonction d'au moins une vitesse modale relative de caisse par rapport au plan moyen des roues, pour la détection d'au moins une sollicitation sur le véhicule, pour le calcul d'un coefficient $\alpha$ de pondération du premier effort F1 de consigne et du deuxième effort F2 de consigne, pour le calcul d'un effort modal F de consigne d'amortisseur suivant la formule

$$F = (1- \alpha).F1 + \alpha.F2,$$

où le coefficient $\alpha$ de pondération est supérieur ou égal à 0 et inférieur ou égal à 1, est normalement à 0 et prend la valeur 1 au moins lorsque la sollicitation détectée dépasse un seuil prescrit, et pour le calcul d'une grandeur de commande d'un actionneur d'au moins un amortisseur variable d'une suspension en fonction dudit effort modal de consigne de l'amortisseur, lorsqu'il est mis en oeuvre dans un dispositif de commande de suspension tel que décrit ci-dessus.

L'invention sera mieux comprise à la lecture de la description qui va suivre, donnée uniquement à titre d'exemple non limitatif en référence aux dessins annexés, sur lesquels :

- la figure 1 est une vue schématique en perspective d'un dispositif de liaison au sol d'un essieu avant d'un véhicule,
- la figure 2 est un schéma fonctionnel montrant le dispositif de commande de suspension,
- la figure 3 est une vue schématique en perspective de la caisse d'un véhicule, muni de la suspension sur ses roues,
- la figure 4 est un synoptique modulaire d'une unité de calcul de vitesses modales du dispositif dé commande selon l'invention,
- la figure 5 est un synoptique modulaire d'un estimateur prévu dans le dispositif de commande suivant la figure 4,
- la figure 6 est un synoptique modulaire d'une unité de calcul d'efforts modaux de type Skyhook,
- la figure 7 est un synoptique modulaire d'une unité de calcul d'une masse suspendue à l'avant et à l'arrière,
- la figure 8 est un organigramme du procédé de calcul des masses suspendues de l'unité selon la figure 7,
- la figure 9 est un synoptique modulaire d'une unité de calcul de niveaux de mouvement et de tressautement de la caisse,
- la figure 10 est un synoptique modulaire d'une unité de calcul d'efforts modaux de type Roadhook,
- la figure 11 est un synoptique modulaire d'une unité de calcul de termes d'efforts modaux anticipatifs,
- la figure 12 est un synoptique modulaire d'une unité de calcul d'efforts de consigne aux roues, comportant l'unité de calcul d'efforts modaux de type Skyhook et l'unité de calcul d'efforts modaux de type Roadhook,
- la figure 13 représente des chronogrammes de signaux de détection de sollicitations et d'un coefficient de pondération intermédiaire calculé en fonction de ceux-ci, intervenant dans l'unité de calcul selon la figure 12,
- la figure 14 montre des chronogrammes de l'angle du volant au cours d'une mise eh virage simple, et d'un coefficient de pondération entre les efforts Skyhook et les efforts Roadhook, intervenant dans l'unité de calcul selon la figure 12,
- la figure 15 représente des lois d'amortissement des amortisseurs variables de la suspension,
- la figure 16 est un synoptique modulaire d'une unité de calcul d'une loi d'amortissement de consigne en cas de détection d'une percussion,
- la figure 17 d'une unité de calcul d'une loi d'amortissement de consigne en cas de détection d'une grande amplitude de mouvement de caisse,

- la figure 18 est un schéma en coupe transversale montrant la liaison d'un capteur de débattement à la caisse et à une roue avant ou arrière.

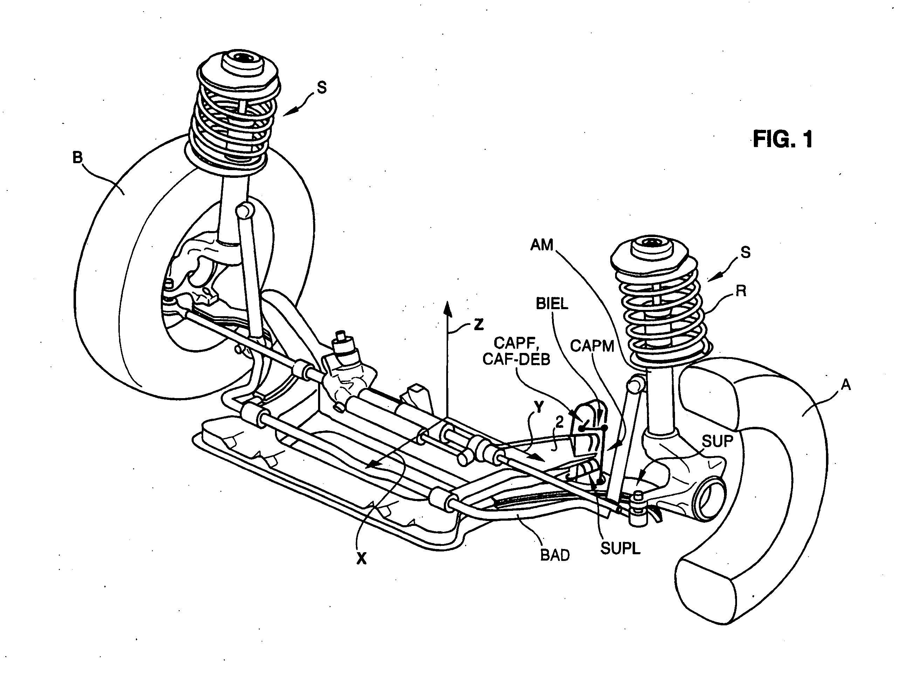

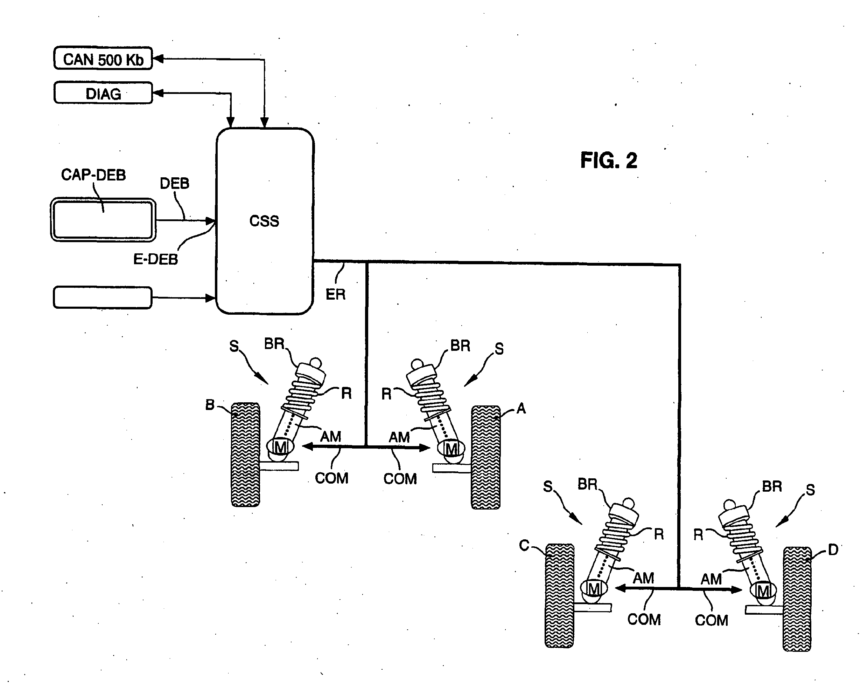

Aux figures 1 à 3, le véhicule 1 comporte une caisse 2 montée sur quatre roues, à savoir une roue avant gauche A, une roue avant droite B, une roue arrière droite C et une roue arrière gauche D.

Chaque roue A, B, C, D est reliée à la caisse 2 par son propre système S de suspension à ressort R entre des butées, mais pourrait également être une suspension hydropneumatique.

Chaque système S de suspension comporte un amortisseur AM muni d'un actionneur M commandé par un calculateur CSS embarqué.

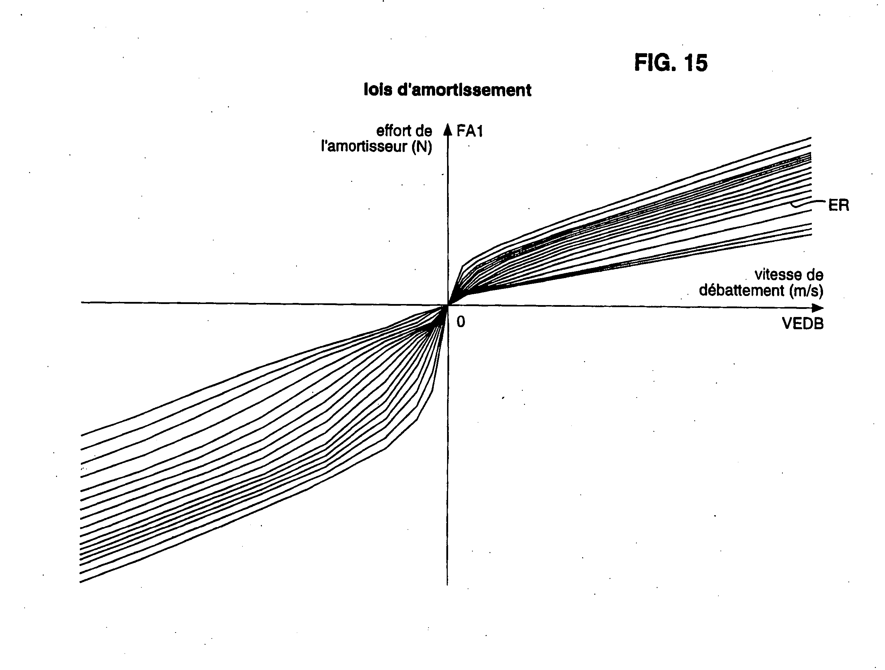

Cet actionneur M est par exemple un moteur qui permet de modifier la section de passage de l'huile dans l'amortisseur AM. Il correspond donc à chaque section de passage de l'huile dans l'amortisseur, une loi d'amortissement différente de celui-ci. Ces lois d'amortissement, également appelés états d'amortissement, sont mémorisées sous la forme de courbes, de tableaux de valeurs, de formules mathématiques ou autres. La figure 15 représente ces lois ER d'amortissement, où chaque loi d'amortissement est une courbe prédéterminée de la force exercée par l'amortisseur vers la caisse en fonction de la vitesse VDEB de débattement de cet amortisseur AM, les lois de plus en plus fermes ayant, à vitesse de débattement constante, des forces plus grandes. Les états ER d'amortissement sont par exemple numérotés dans un ordre croissant pour les états d'amortissement de plus en plus fermes, c'est-à-dire correspondant à une force d'amortisseur de plus en plus grande à vitesse VDEB de débattement constante. Ainsi, un état d'amortissement minimum correspond à un état d'amortissement ayant une fermeté minimale, c'est-à-dire correspondant à une force d'amortisseur supérieure ou égale à un minimum pour chaque vitesse VDEB de débattement.

Le calculateur CSS est relié au réseau CAN du véhicule pour récupérer une grande partie des signaux utiles (vitesse véhicule, régulation ABS, accélérations latérale et longitudinales fournies par le système de freinage, sportivité demandée par le conducteur fournie par une interface avec, l'utilisateur (boîtier de servitude intelligent), etc...). Il utilise également ses propres capteurs (liaisons filaires directes avec les capteurs) pour connaître les mouvements de la voiture à chaque instant. Il est enfin relié aux actionneurs dont il assure le pilotage.

Le moteur peut être pas à pas, auquel cas l'amortisseur AM possède un nombre déterminé N de lois d'amortissement discrètes ou un moteur à courant continu asservi en position, auquel cas l'amortisseur AM possède une infinité de lois d'amortissement.

Par exemple, l'actionneur à moteur pas à pas peut prendre neuf positions stables distinctes, ce qui permet d'obtenir neuf lois d'amortissement, du souple au ferme. En effet, plus la section de passage de l'huile sera petite, plus l'effort d'amortissement sera important, et plus l'amortisseur sera ferme.

Il peut exister des lois stables et des lois instables. Pour les lois stables, il suffit de piloter le moteur pas à pas pour qu'il trouve sa consigne angulaire. Une fois le pilotage terminé, l'actionneur à loi stable reste dans cette position même s'il n'est plus alimenté. A l'inverse, pour les lois instables, le moteur doit être maintenu alimenté pour rester dans cette loi. Par exemple, dans un mode de réalisation, il y a à la fois des lois stables et des lois instables, les lois instables étant par exemple positionnées entre les lois stables consécutives. Par exemple, à la figure 15, on a neuf lois stables et huit lois instables. Dans un autre mode de réalisation, toutes les lois sont stables, par exemple avec 16 lois stables.

Chaque actionneur M possède une entrée COM de commande reliée au calculateur CSS pour recevoir de celui-ci une grandeur ER de commande sélectionnant une position de l'actionneur M parmi plusieurs pour imposer une loi d'amortissement prédéterminée, correspondant à cette position.

Suivant l'invention, il est prévu un capteur CAP-DEB de débattement sur au moins une des roues A, B, C, D du véhicule, et de préférence sur chaque roue A, B, C, D. Chaque capteur CAP-DEB mesure donc le débattement DEB de sa roue associée par rapport à la caisse 2.

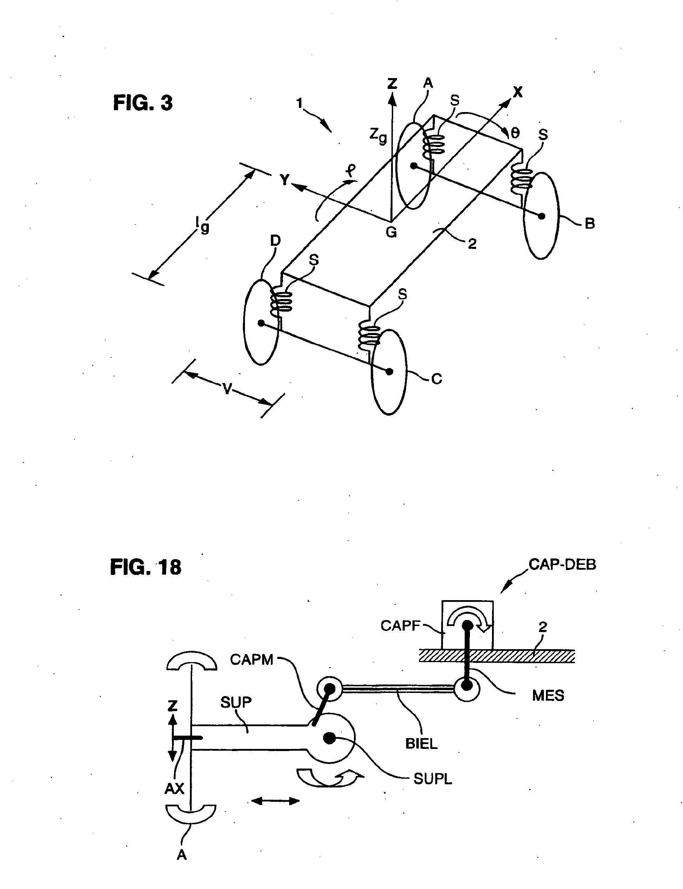

Les capteurs CAP-DEB de débattement de roue sont par exemple angulaires et donnent la valeur instantanée de l'angle compris entre l'axe de rotation de la roue et la caisse 2. Par exemple, aux figures 1 et 18, chaque capteur CAP-DEB de débattement comporte une partie fixe CAPF, telle qu'un boîtier, fixée à la caisse 2, et une partie mobile CAPM, reliée à un élément fixé à la roue. Une biellette BIEL de connexion relie la partie mobile CAPM à la partie fixe CAPF et fait tourner un organe MES de mesure angulaire contenu dans la partie fixe CAPF, lorsque la roue monte ou descend par rapport à la caisse 2. La partie mobile CAPM est par exemple fixée sur un élément SUP de support de l'axe AX de rotation de la roue. Cet élément SUP de support est mobile autour d'un axe sensiblement longitudinal SUPL par rapport à la caisse 2. La partie mobile CAPM est fixée sur l'élément SUP de support à distance de son axe SUPL de rotation.

Les mesures DEB de débattement des roues A, B, C, D sont envoyées des capteurs CAP-DEB au calculateur CSS, qui comporte des entrées E-DEB correspondantes.

Accélérations modales

Le calculateur CSS calcule à partir des mesures DEB de débattement des roues l'accélération modale $\ddot{z}G$ en

pompage de la caisse, l'accélération modale angulaire $\ddot\theta$ en roulis et l'accélération modale angulaire $\ddot\varphi$ en tangage, selon les formules ci-dessous.

$$\begin{cases} \ddot{z}G = \dfrac{FA + FB + FC + FD}{M} \\[2ex] \ddot\theta = \dfrac{\dfrac{v}{2}(FB + FC - FA - FD) + C_{BAD} + C_\theta}{I_\theta} \\[2ex] \ddot\varphi = \dfrac{(e - \mathrm{lg})(FC + FD) - \mathrm{lg}(FA + FB) + C_\varphi}{I_\varphi} \end{cases}$$

où G est le centre de gravité de la caisse 2, zG est l'altitude de G suivant une direction verticale ascendante Z, $\theta$ est l'angle de roulis de la caisse 2 autour d'un axe longitudinal X passant par G et dirigé de l'arrière vers l'avant, $\varphi$ est l'angle de tangage de la caisse 2 autour d'un axe transversal passant par G et dirigé de la droite vers la gauche, les axes X, Y, Z formant un repère orthonormal.

FA, FB, FC, FD sont les forces exercées par les roues respectives A, B, C, D sur la caisse 2 par l'intermédiaire de leur suspension S.

$v$ est la voie de la caisse 2, c'est-à-dire la distance entre les roues droite et les roues gauche dans le sens transversal,

$e$ est l'empattement du véhicule,

1g est la distance longitudinale entre le centre de gravité G et l'axe transversal des roues avant A et B,

M est la masse prédéterminée de la caisse 2 sans occupant du véhicule.

$I_\theta$ est le moment d'inertie en roulis, et $I_\varphi$ est le moment d'inertie en tangage.

CBAD est un couple exercé par la barre anti-devers BAD sur la caisse 2.

$C_\theta$ est un couple de roulis, et $C_\varphi$ un couple de tangage.

Ci-dessous sont décrits les différents moyens de calcul mettant en oeuvre le procédé de commande suivant l'invention.

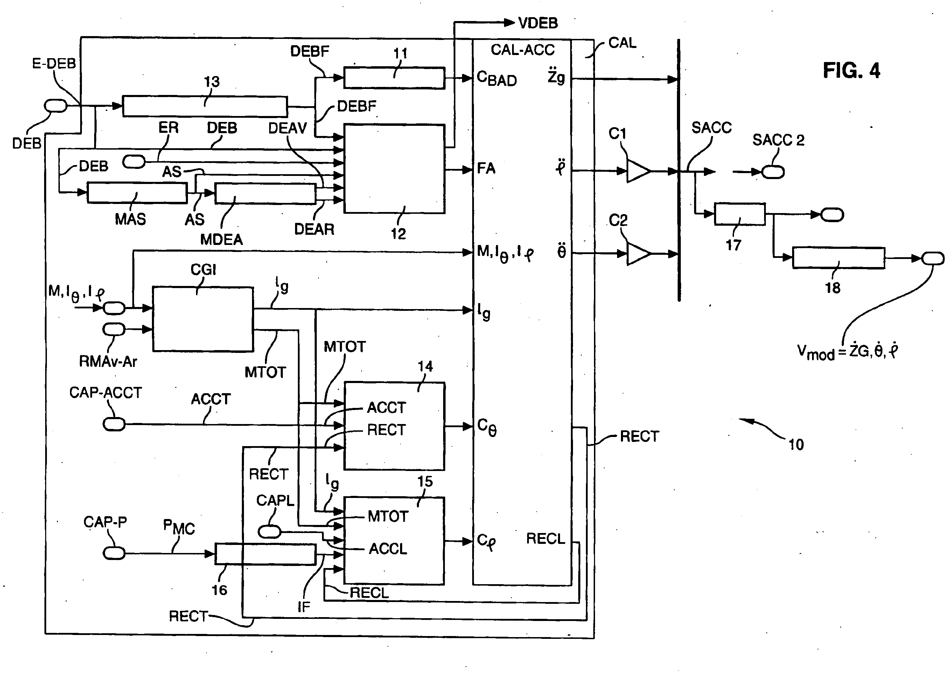

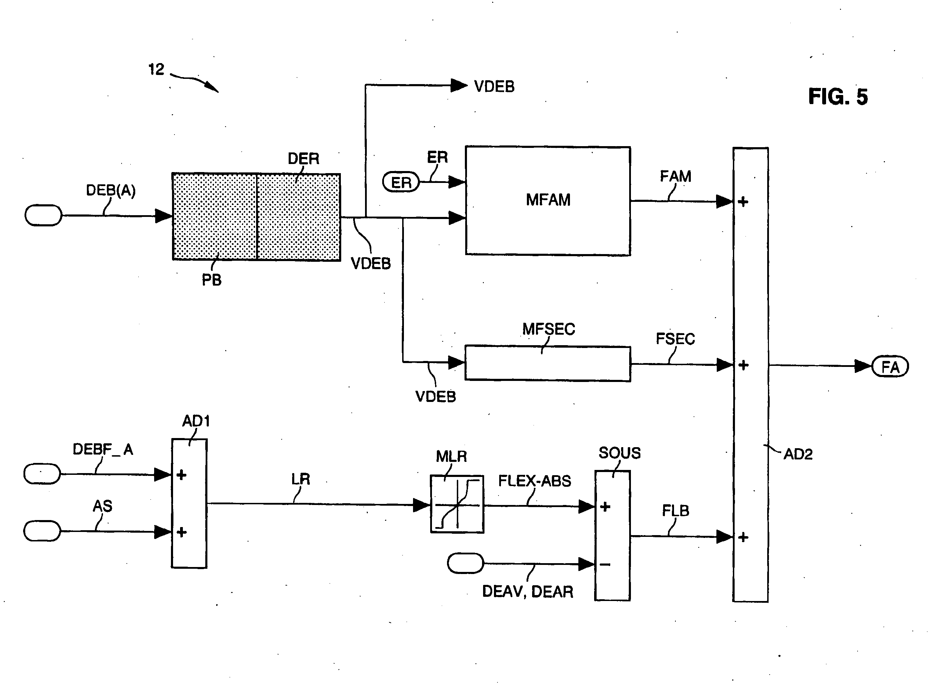

Le mode de calcul des accélérations modales dans le calculateur CSS est par exemple mis en oeuvre par le module 10 représenté aux figures 4 et 5.

Les blocs modulaires décrits aux figures sont mis en oeuvre dans le calculateur CSS par tout moyen automatique approprié, notamment logiciel.

Le module 10 comporte un premier moyen CAL de calcul des accélérations modales $\ddot{z}G$, $\ddot\theta$ et $\ddot\varphi$, recevant en entrée les mesures DEB de débattement des roues .

Le moyen CAL comporte :

- un estimateur 11 du couple $C_{BAD}$ généré par la barre BAD anti-devers,
- un estimateur 12 des forces FA, FB, FC, FD exercées par les roues respectives A, B, C, D sur la caisse 2,
- un filtre 13 de la mesure de débattement DEB fournie en entrée sur le moyen CAL.

Le filtre 13 élimine les basses fréquences de la mesure DEB de débattement fournie par les capteurs CAP-DEB.

Ce filtre 13 comporte par exemple un filtre passe-haut ayant une fréquence de coupure basse supérieure ou égale à 0,2 Hz. Le filtre 13 est par exemple réalisé par un filtre passe-bande ayant donc en plus une fréquence de coupure haute, par exemple supérieure ou égale à 8 Hz, qui permet de garder une phase suffisamment constante dans la bande passante.

Le débattement de roue filtré DEBF fourni à la sortie du filtre 13 à partir de la mesure DEB de débattement de roue est envoyé à l'entrée de l'estimateur 11, ainsi qu'à une autre entrée de l'estimateur 12. A partir des quatre mesures DEB(A), DEB(B), DEB(C), DEB(D) de débattement fournies par les capteurs CAP-DEB sur les roues respectives A, B, C, D, le filtre 13 fournit quatre mesures de débattement filtrées DEBF(A), DEBF(B), DEBF(C), DEBF(D).

Barre anti-devers

L'estimateur 11 calcule le couple $C_{BAD}$ de barre anti-devers en fonction des valeurs de débattement filtrées DEBF fournies par le filtre 13 de la manière suivante :

- pour la roue avant gauche :

$$C_{BAD}(A) = (DEBF(A) - DEBF(B)).(Kbadav)/v^2,$$

- pour la roue avant droite :

$$C_{BAD}(B) = -C_{BAD}(A),$$

- pour la roue arrière gauche :

$$C_{BAD}(D) = (DEBF(D) - DEBF(C)).(Kbadar)/v^2,$$

- pour la roue arrière droite :

$$C_{BAD}(C) = -C_{BAD}(D),$$

Où Kbadav est un paramètre prédéterminé correspondant à la raideur de la barre anti-devers avant BAD,
Kbadar est un paramètre prédéterminé correspondant à la raideur de la barre anti-devers arrière, non représentée.

Effort de suspension

L'estimateur 12 d'effort de suspension comporte une entrée pour les débattements filtrés DEBF, une entrée pour les débattements non filtrés DEB, une entrée pour l'état réel ER de l'actionneur, c'est-à-dire la loi ER d'amortissement qu'il met actuellement en oeuvre, cet état réel et ses changements étant par exemple mémorisés, une entrée DEAV d'effort statique sur les roues avant et une entrée DEAR d'effort statique sur les roues arrière.

Ci-dessous, cet estimateur 12 est décrit à la figure 5 à titre d'exemple pour le calcul de l'effort de suspension FA sur la roue avant gauche A. Bien entendu, le calcul est analogue pour les autres efforts FB, FC, FD, en remplaçant ce qui se rapporte spécifiquement à la roue A par les valeurs correspondant à la roue B, C ou D.

Dans l'estimateur 12, le débattement DEB(A) mesuré par le capteur CAP-DEB sur la roue A est envoyé à un filtre PB passe-bas limitant la bande passante du débattement DEB(A), suivi d'un module dérivateur DER pour l'obtention de la vitesse de débattement VDEB pour la roue A. Les vitesses VDEB de débattement des roues sont fournies sur une sortie de l'estimateur 12 et du module 10.

Un module MFAM de calcul de la force FAM d'amortissement exercée par l'amortisseur AM sur la caisse 2 reçoit en entrée l'état réel ER et la vitesse de débattement VDEB de la roue concernée. Les lois d'amortissement des amortisseurs AM sont par exemple mémorisées à l'avance, ou peuvent être recalculées une fois l'état ER spécifié. Chacune des lois ER d'amortissement permet de calculer ou déterminer la vitesse VDEB de débattement en fonction de la force FAM d'amortissement exercée par l'amortisseur AM et inversement. Le module MFAM détermine à partir de l'état ER la loi d'amortissement actuellement en vigueur pour l'amortisseur AM de la roue A et détermine à partir de la vitesse de débattement VDEB(A) de la roue A pour cette loi sélectionnée, par exemple par lecture de la courbe de cette loi, la force FAM d'amortissement de la roue A.

Un autre module MFSEC de calcul d'une force FSEC de frottement sec de l'amortisseur AM de la roue A reçoit en entrée également la vitesse VDEB de débattement de celle-ci et calcule la force FSEC de frottement sec par la formule suivante :

$$Fsec = (FsAv) . tanh(VDEB/10^{-2})$$

où VDEB est en cm/s, et FsAv est un coefficient de frottement sec des roues avant, ayant été calculé au préalable sur un banc d'essai et est par exemple égal à environ 200 Newton.

Ce coefficient de frottement est remplacé par un coefficient FsAr de frottement pour les roues arrière.

Estimateur de caractéristiques statiques

Un module MAS de calcul d'assiette statique AS reçoit en entrée les débattements DEB des quatre roues A, B, C, D et calcule à partir de ceux-ci l'assiette statique AS, qui représente la position statique d'équilibre de la suspension S lorsque le véhicule est immobile sur un sol horizontal. Ce module MAS calcule une assiette statique avant ASav et une assiette statique arrière ASar. L'assiette statique avant ASav est par exemple calculée comme étant le débattement moyen DEBAVMOY (demi-somme) des débattements DEB des roues avant A, B, filtré par un filtre passe-bas, par exemple de type Butterworth du second ordre, débattement moyen filtré auquel est ensuite rajoutée une constante de décalage d'assiette avant. L'assiette statique arrière ASar est par exemple calculée comme étant le débattement moyen DEBARMOY (demi-somme) des débattements DEB des roues arrières C, D, filtré par un filtre passe-bas, par exemple de type Butterworth du second ordre, débattement moyen filtré auquel est ensuite rajoutée une constante de décalage d'assiette arrière. On suppose que le capteur de débattement CAP-DEB est calibré pour mesurer le débattement par rapport à cette assiette statique AS. Un additionneur AD1 additionne le débattement filtré DEBF-A de la roue A à l'assiette statique AS calculée pour la roue A, c'est-à-dire l'assiette statique avant, pour obtenir la longueur réelle LR du ressort R associée à la roue A.

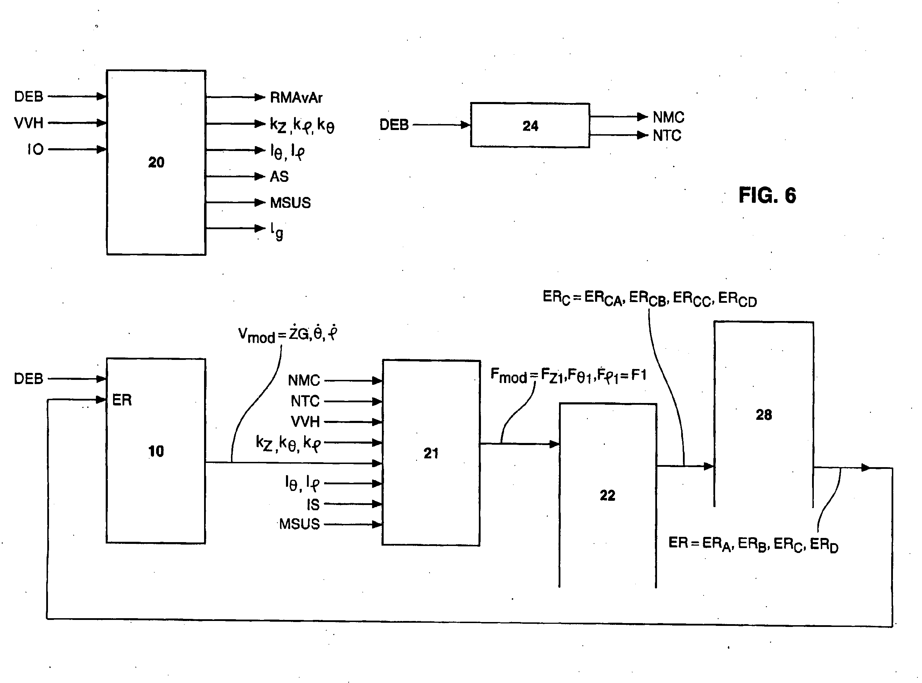

Le module MAS de calcul d'assiette statique AS fait par exemple partie d'un estimateur 20 de caractéristiques statiques représenté à la figure 6, recevant en entrée les débattements DEB des quatre roues A, B, C, D, une pression statique avant et une pression statique arrière dans le cas d'une suspension hydropneumatique, la vitesse VVH du véhicule, une information d'ouvrant IO. La vitesse VVH du véhicule est par exemple fournie par un capteur de vitesse ou tout autre moyen de calcul.

L'estimateur 20 de caractéristiques statiques comporte :

- un moyen de calcul d'une masse dynamique apparente avant MDAAV et d'une masse dynamique apparente arrière MDAAR, en fonction des débattements DEB,
- un moyen de calcul d'un biais aérodynamique avant BAAV et d'un biais aérodynamique arrière BAAR, en fonction de la vitesse du véhicule VVH,
- un moyen de calcul de la masse suspendue MSUS du véhicule et d'une valeur de répartition de masse RMAvAr entre l'avant et l'arrière du véhicule, en fonction de la masse dynamique apparente avant MDAAV, de la masse dynamique apparente arrière MDAAR, du biais aérodynamique avant BAAV et du biais aérodynamique arrière BAAR,
- un moyen de calcul du moment d'inertie en roulis $I_\theta$ et du moment d'inertie en tangage $I_\varphi$ en fonction de la masse suspendue MSUS et de la masse suspendue arrière MSUSAR,
- un moyen de calcul de la longueur lg séparant le centre de gravité G de l'axe des roues avant A, B,
- un moyen de calcul d'une raideur modale en pompage $k_z$, d'une raideur modale en tangage $K_\varphi$ et d'une raideur modale en roulis $k_\theta$, en fonction de l'assiette statique AS et de la valeur de répartition de masse RMAvAr entre l'avant et l'arrière.

La masse dynamique apparente avant MDAAV est calculée en

- calculant le débattement relatif avant, égal au débattement moyen (demi-somme) des débattements DEB des roues avant A, B, auquel est ensuite rajoutée une constante de décalage avant,
- extrayant un effort dynamique avant de flexion de ressort EDFAV à partir d'une table ou courbe enregistrée donnant cet effort EDFAV en fonction du débattement relatif avant,
- calculant la masse dynamique apparente avant MDAAV par la formule :

$$MDAAV = (EDFAV.2/g) + \text{constante avant},$$

Où g est la constante d'accélération de la pesanteur = 9,81 m.s$^{-2}$.
La masse dynamique apparente arrière MDAAR est calculée en

- calculant le débattement relatif arrière, égal au débattement moyen (demi-somme) des débattements DEB des roues arrière C, D, auquel est ensuite rajoutée une constante de décalage arrière
- extrayant un effort dynamique arrière de flexion de ressort EDFAR à partir d'une table ou courbe enregistrée donnant cet effort EDFAR en fonction du débattement relatif arrière,
- calculant la masse dynamique apparente arrière MDAAR par la formule :

$$MDAAR = (EDFAR.2/g) + constante\ arrière.$$

L'effort dynamique de flexion de ressort est nul dans la position d'équilibre du ressort correspondant à sa position statique, le débattement relatif avant étant le débattement par rapport à la position d'équilibre statique, l'extraction se faisant par exemple par interpolation de la table mais pouvant également être effectuée à partir d'une courbe enregistrée de EDFAV, EDFAR.

Dans le cas d'une suspension hydropneumatique, la masse MDAAR et la masse MDAAV sont calculées en utilisant la pression statique avant et la pression statique arrière.

Le biais aérodynamique avant BAAV, homogène à une masse en kg, est calculé par la formule :

$$BAAV = (CAV.VVH^2)/g,$$

Où CAV est un coefficient prédéterminé aérodynamique avant.

Le biais aérodynamique arrière BAAR, homogène à une masse en kg, est calculé par la formule :

$$BAAR = (CAR.VVH^2)/g,$$

Où CAR est un coefficient prédéterminé aérodynamique arrière.

Calcul de la masse suspendue MSUS du véhicule et de la valeur de répartition de masse RMAvAr

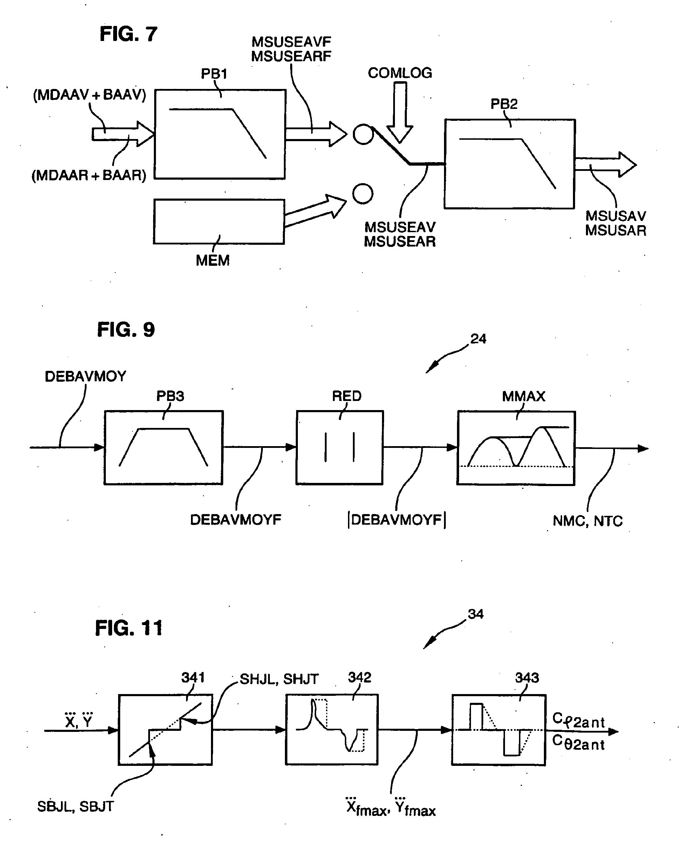

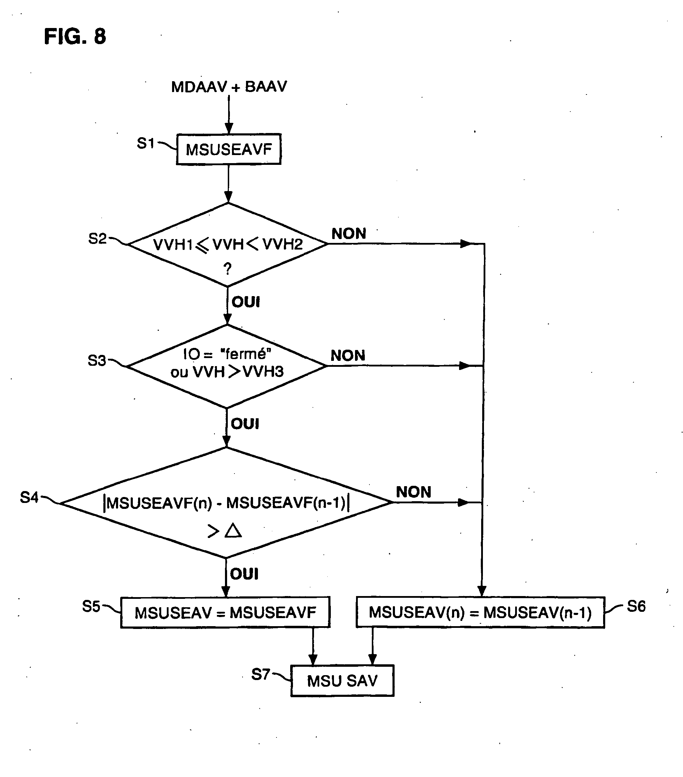

On calcule d'abord une masse suspendue d'essieu avant MSUSEAV. Pour ce faire, ainsi que cela est représenté aux figures 7 et 8, on filtre lors de l'étape S1 la somme (masse dynamique apparente avant MDAAV + biais aérodynamique avant BAAV) par un filtre passe-bas PB1 pour obtenir une masse suspendue d'essieu avant filtrée MSUSEAVF.

Puis, on examine

- à l'étape S2, si la vitesse VVH du véhicule est comprise entre un seuil bas prédéterminé VVH1 et un seuil haut prédéterminé VVH2,
- à l'étape S3, si l'information d'ouvrant IO est à « fermé » ou la vitesse VVH du véhicule est supérieure à un seuil prescrit VVH3,
- à l'étape S4, si l'écart entre la masse suspendue d'essieu avant filtrée MSUSEAVF(n) et sa valeur MSUSEAVF(n-1) précédemment enregistrée en mémoire est suffisant (supérieur en valeur absolue à un écart prescrit Δ).

Dans le cas où ces conditions sont réalisées, la masse suspendue d'essieu avant MSUSEAV est prise égale à la masse suspendue d'essieu avant filtrée MSUSEAVF et est enregistrée dans la mémoire MEM, à l'étape S5 et dans la position du commutateur logique COMLOG représentée à la figure 7.

Dans le cas où l'une, plusieurs de ou toutes ces conditions ne sont pas réalisées, la masse suspendue d'essieu avant MSUSEAV(n) est inchangée et reste égale à la valeur MSUSEAV(n-1) précédemment enregistrée dans la mémoire MEM, à l'étape S6 et dans l'autre position du commutateur logique COMLOG.

Puis, à l'étape S7, on calcule une masse suspendue avant MSUSAV en filtrant la masse suspendue d'essieu avant MSUSEAV par un filtre passe-bas PB2, et éventuellement en saturant les valeurs obtenues par ce filtrage au-dessus d'un seuil haut et au-dessous d'un seuil bas.

Les filtres passe-bas PB1 et PB2 sont par exemple d'ordre 1 avec chacun une fréquence de coupure à 0,02 Hz.

Le déroulement est analogue pour le calcul de la masse suspendue d'essieu arrière MSUSEAR et de la masse suspendue arrière MSUSAR, en remplaçant MDAAV+BAAV par MDAAR+BAAR et en remplaçant MSUSEAVF par MSUSEARF.

La masse suspendue du véhicule MSUS est alors calculée en faisant la somme de la masse suspendue avant MSUSAV et de la masse suspendue arrière MSUSAR

$$MSUS = MSUSAV + MSUSAR$$

La valeur de répartition de masse avant - arrière RMAvAr est alors calculée en divisant la masse suspendue avant MSUSAV par la masse suspendue du véhicule MSUS

$$RMAvAr = MSUSAV / MSUS$$

Calcul des moments d'inertie

Le moment d'inertie en roulis $I_\theta$ est calculé en fonction de la masse suspendue arrière MSUSAR par la formule

$$I_\theta = A_y . MSUSAR + B_y$$

Avec MSUSAR = (1-RMAvAr).MSUS,
[0082]  Où $A_y$ et $B_y$ sont des paramètres prédéterminés.
Le moment d'inertie en tangage $I_\varphi$ est calculé en fonction de la masse suspendue MSUS par la formule

$$I_\varphi = A_x . MSUS + B_x$$

Où $A_x$ et $B_x$ sont des paramètres prédéterminés.

Calcul de la longueur lg et des raideurs modales

On calcule une raideur de suspension avant kAV et une raideur de suspension arrière kAR.
La raideur de suspension avant kAV est obtenue en extrayant de la table ou courbe préenregistrée donnant la raideur de la suspension avant en fonction de l'assiette statique avant, la valeur de raideur avant correspondant à l'assiette statique avant ASav, par exemple par interpolation linéaire.
La raideur de suspension arrière kAR est obtenue en extrayant de la table ou courbe préenregistrée donnant la raideur de la suspension arrière en fonction de l'assiette statique arrière, la valeur de raideur arrière correspondant à l'assiette statique arrière ASar, par exemple par interpolation linéaire.
La longueur lg est calculée par la formule suivante :

$$lg = (1 - RMAvAr).e$$

Le module CGI de la figure 4 met en oeuvre ce calcul de la longueur lg et fait par exemple partie de l'estimateur 20.
La raideur modale en pompage $k_z$, est calculée comme étant la somme de la raideur de suspension avant kAV et de la raideur de suspension arrière kAR

$$k_z = kAV + kAR$$

La raideur modale en tangage $k_\varphi$ est calculée par la formule

$$k_\varphi = kAV.(lg)^2 + kAR.(e-lg)^2$$

La raideur modale en roulis $k_\theta$ est calculée par la formule

$$k_\theta = Kbadav + Kbadar + v^2.(kAV+kAR)/4$$

Calcul des accélérations modales de caisse

A la figure 5, un module MLR calcule, à partir d'une table ou courbe enregistrée donnant une force de flexion en fonction de la longueur du ressort R, la force de flexion absolue FLEX-ABS correspondant à la valeur réelle LR entrée de cette longueur. Cette courbe enregistrée de flexion tient également compte des butées de suspension, qui sont par exemple en caoutchouc et qui exercent un effort plus important sur la caisse lorsque le ressort appuie sur ces butées en fin de course de l'amortisseur AM.

En outre, un module MDEA reçoit en entrée l'assiette statique AS et calcule en fonction de celle-ci l'effort statique correspondant DEAV de flexion sur les roues avant et l'effort statique correspondant DEAR de flexion sur les roues arrière.

Un soustracteur SOUS soustrait de la force FLEX-ABS de flexion absolue calculée l'effort statique DEAV ou DEAR, à savoir l'effort DEAV dans le cas de la roue avant A, pour obtenir une force FLB de flexion de ressorts et des butées de suspension, correspondant à la force exercée par le ressort R et les butées d'extrémité sur la caisse 2.

Un additionneur AD2 additionne la force FAM d'amortissement, la force FSEC de frottement sec et la FLB de flexion de ressorts et des butées de suspension pour obtenir la force FA selon la formule suivante :

$$FA = FAM + FSEC + FLB.$$

Un module CAL-ACC reçoit en entrée le couple $C_{BAD}$ calculé par le module 11, les forces FA, FB, FC, FD de suspension calculées par l'estimateur 12, ainsi que la masse M de la caisse, le moment d'inertie $I_\theta$ en roulis et le moment d'inertie $I_\varphi$ en tangage, qui sont préenregistrés, pour calculer en fonction de ceux-ci les accélérations modales $\ddot{z}G$, $\ddot{\theta}$ et $\ddot{\varphi}$, en négligeant l'influence des couples $C_\theta$ et $C_\varphi$, c'est-à-dire en prenant $C_\theta = 0$ et $C_\varphi = 0$, dans un mode de réalisation.

Dans le perfectionnement décrit ci-dessous, on tient compte des couples $C_\theta$ et $C_\varphi$ dans le calcul des accélérations modales.

Un module CGI de calcul de grandeur inertielle calcule en fonction de M, $I_\theta$ et $I_\varphi$ ainsi que d'une valeur entrée de répartition de masse RMAvAr entre l'avant et l'arrière du véhicule, une masse totale MTOT = MREF du véhicule tenant compte d'un chargement normalisé du véhicule, comme par exemple quatre personnes de 67 kg dans l'habitacle du véhicule et 28 kg de bagages dans le coffre arrière, et la longueur Ig séparant le centre de gravité G de l'axe des roues avant A, B, qui est entrée dans le module CAL-ACC. La valeur de répartition de masse RMAvAr est estimée en permanence à l'aide des valeurs de débattement DEB fournies par les capteurs CAP-DEB de débattement et de la comparaison de chacune de ces valeurs à une moyenne calculée des débattements DEB.

Un accéléromètre CAP-ACCT est prévu sur le véhicule pour fournir une accélération transversale ACCT à un estimateur 14 du couple de roulis $C_\theta$, recevant également en entrée la masse totale MTOT et une valeur RECT de recalage de l'accélération transversale ACCT.

L'accéléromètre transversal CAP-ACCT est positionné sur le centre de gravité G et non sur le centre CR de roulis. La valeur RECT de recalage de l'accélération transversale est calculée par le module CAL-ACC de la manière suivante :

$$RECT(n) = ACCT(n) - \ddot{\theta}(n\text{-}1).(HCdG - hRoulis)$$

Où $\ddot{\theta}$ est l'accélération modale de roulis non filtrée, et

Où n désigne la valeur de la variable au cycle actuel et (n-1) désigne la valeur de la variable au cycle précédent.

L'estimateur 14 calcule le couple de roulis $C_\theta$ par la formule suivante:

$$c_\theta = (ACCT - RECT) . (MTOT) . d(G, CR)$$

Où d(G,CR) = HCdG - hRoulis est la distance entre le centre de gravité G et le centre CR de roulis, et est préenregistrée.

Un estimateur 15 du couple $C_\varphi$ de tangage reçoit en entrée la longueur Ig, la masse totale MTOT, une accélération longitudinale ACCL fournie par un accéléromètre longitudinal CAPL disposé dans la caisse du véhicule, une information IF de freinage et une valeur RECL de recalage d'accélération longitudinale calculée par le module CAL-ACC.

La valeur RECL de recalage d'accélération longitudinale est calculée par le module CAL-ACC de la manière suivante :

$$RECL(n) = ACCL(n) - \ddot{\varphi}(n\text{-}1).(HCdG)$$

Où $\ddot{\varphi}$ est l'accélération modale de tangage non filtrée.

L'estimateur 15 calcule le couple $C_\varphi$ de tangage selon la formule suivante :

$$c_\varphi = (\mathrm{AC\dot{C}L} - \mathrm{RECL}).(\mathrm{MTOT}).h_G + c_{\varphi B}$$

$h_G$ = HCdG représente la hauteur suivant l'axe Z du centre de gravité G par rapport au centre CT de tangage, et est préenregistrée.

La composante $C_{\varphi B}$ du couple $C_\varphi$ est la composante du couple de tangage dû à l'effet Brouilhet et est calculée en fonction de l'information IF de freinage. Un module 16 de détermination fournit cette information IF de freinage en fonction d'une valeur de pression $P_{MC}$ de maître cylindre, elle-même fournie par un capteur CAP-P de pression du maître cylindre des freins.

Les valeurs calculées des couples $C_\theta$ et $C_\varphi$ sont entrées dans le module CAL-ACC qui calcule à partir de celles-ci et de la valeur des autres entrées et fournit en sortie l'accélération $\ddot{z}G$ modale en pompage, l'accélération modale $\ddot{\theta}$ en roulis, l'accélération modale $\ddot{\varphi}$ en tangage, et les valeurs de recalage RECT et RECL. L'accélération modale $\ddot{\theta}$ en roulis et l'accélération modale $\ddot{\varphi}$ en tangage sont envoyées respectivement à deux convertisseurs C1 et C2 de degrés en radians par seconde pour ensuite être fournis avec $\ddot{z}G$ sur une sortie SACC pour les trois accélérations modales non filtrées et de là à une sortie SACC2 du module 10 vers l'extérieur.

En outre, ces trois accélérations modales présentes sur la sortie SACC du module 10 sont chacune envoyées à un filtre 17 éliminant les basses fréquences au-dessous d'une fréquence de coupure basse de par exemple 0.1 Hz, 0.2 Hz ou 0.3 Hz. Le filtre 17 présente par exemple en plus de cette composante passe-haut une composante passe-bas pour former un filtre passe-bande. La fréquence de coupure basse du filtre 17 peut être différente selon l'accélération modale $\ddot{z}G$, $\ddot{\theta}$ ou $\ddot{\varphi}$.

Les accélérations modales filtrées en sortie du filtre 17 sont ensuite envoyées à un module 18 intégrateur comportant en sortie un filtre passe-haut, fournissant en sortie les vitesses modales de caisse estimées, à savoir la vitesse modale $\dot{z}G$ en pompage de caisse, la vitesse modale $\dot{\theta}$ en roulis de caisse, et la vitesse modale $\dot{\varphi}$ en tangage de caisse, sur une sortie du module 10.

Ces vitesses modales de caisse, $\dot{z}G$ en pompage, $\dot{\theta}$ en roulis, $\dot{\varphi}$ en tangage sont des vitesses absolues par rapport à un repère galiléen et sont appelées premières vitesses modales de caisse pour la logique Skyhook de confort.

Le calculateur CSS calcule ensuite la grandeur ER de commande de l'actionneur M de l'amortisseur AM de la roue A et des autres roues B, C, D en fonction de ces vitesses modales calculées $\dot{z}G$, $\dot{\theta}$ et $\dot{\varphi}$, et fournit les grandeurs ER de commande ainsi calculées aux actionneurs M correspondants sur leur entrée COM de commande.

Commande de type « Skyhook »

On décrit ci-dessous le calcul d'un gain modal $b_{mod}$ d'amortissement variable et d'un premier effort $F_{mod}$ modal de consigne de l'amortisseur pour la commande de l'amortisseur de type confort ou « Skyhook ».

Cette logique de type Skyhook utilise les premières vitesses modales absolues de caisse, $\dot{z}G$ en pompage, $\dot{\theta}$ en roulis, $\dot{\varphi}$ en tangage produites par le module 10, symbolisées par le signe général $V_{mod}$ dans ce qui suit:

Niveau de mouvement de la caisse et niveau de tressautement de la caisse

Un estimateur 24 est prévu pour calculer, en fonction des débattements DEB des roues, un niveau NMC de mouvement de la caisse et un niveau NTC de tressautement de la caisse.

A la figure 9, le niveau NMC de mouvement de la caisse et le niveau NTC de tressautement de la caisse sont obtenus dans l'estimateur 24 par :

- calcul de la moyenne DEBAVMOY des débattements des roues avant A, B,
- filtrage de la moyenne DEBAVMOY des débattements avant par un filtre passe-bande PB3, pour obtenir une grandeur filtrée DEBAVMOYF,
- prise de la valeur absolue de la grandeur filtrée DEBAVMOYF, dans un module redresseur RED, pour obtenir une grandeur redressée |DEBAVMOYF|,
- maintien des maxima de la grandeur redressée |DEBAVMOYF| dans un module MMAX de maintien, fournissant le niveau NMC de mouvement de la caisse.

Pour le calcul du niveau NMC de mouvement de la caisse, le filtre passe-bande PB3 est réglé pour laisser passer les fréquences des mouvements de la caisse, qui sont relativement basses. Le filtre passe-bande PB3 des mouvements de la caisse est par exemple réglé de 0,5 à 2,5 Hz et est proche de la fréquence de résonance de la suspension. Il peut par exemple être choisi entre deux pentes pour obtenir un niveau NMC de mouvement atténué et un niveau NMC de mouvement non atténué.

Pour le calcul du niveau NTC de tressautement de la caisse, le filtre passe-bande PB3 est réglé pour laisser passer les fréquences des tressautements de la caisse, qui sont relativement grandes. Le filtre passe-bande PB3 des tressautements de la caisse est par exemple réglé avec une fréquence de coupure basse de 3 Hz et une fréquence de coupure haute de 8 Hz ou plus. Il peut par exemple être choisi entre deux pentes pour obtenir un niveau NTC de tressautement atténué et un niveau NTC de tressautement non atténué.

Le module MMAX de maintien peut avoir une pente paramétrable de descente et une temporisation paramétrable de maintien des maxima. La temporisation de maintien des maxima est choisie plus courte pour l'obtention du niveau NTC de tressautement de la caisse que pour l'obtention du niveau NMC de mouvement de la caisse.

Efforts modaux de consigne Skyhook et gains modaux

Un estimateur 21 est prévu pour calculer les gains modaux $b_{mod}$ d'amortissement variable et les premiers efforts modaux $F_{mod}$ de consigne d'amortissement selon la formule $F_{mod} = - b_{mod} \cdot V_{mod}$.

Il y a donc :

- un gain modal de pompage $b_z$ pour calculer le premier effort modal de pompage

$$F_{z1} = -b_z \cdot \dot{z}G$$

- un gain modal de roulis $b_\theta$ pour calculer le premier effort modal de roulis

$$F_{\theta 1} = -b_\theta \cdot \dot{\theta}$$

- un gain modal de tangage $b_\varphi$ pour calculer le premier effort modal de tangage $F_{\varphi 1} = -b_\varphi \cdot \dot{\varphi}$

Les gains modaux $b_z$, $b_\theta$, $b_\varphi$ sont variables en fonction des débattements DEB des roues A, B, C, D et sont calculés par l'estimateur 21 en fonction de grandeurs qui ont été calculées précédemment en fonction de ces débattements DEB des roues A, B, C, D.

Les gains modaux $b_z$, $b_\theta$, $b_\varphi$ peuvent comprendre un ou plusieurs coefficients multiplicatifs, avec par exemple les coefficients multiplicatifs suivants :

- un coefficient multiplicatif de référence $b_{zREF}$, $b_{\theta REF}$, $b_{\varphi REF}$, respectivement en pompage, en roulis et en tangage,
- un coefficient multiplicatif d'atténuation $b_{zATT}$, $b_{\theta ATT}$, $b_{\varphi ATT}$ en pompage, en roulis et en tangage,
- un coefficient multiplicatif de recalage $b_{zREC}$, $b_{\theta REC}$, $b_{\varphi REC}$, respectivement en pompage, en roulis et en tangage,
- un coefficient multiplicatif de type de conduite $b_{zTYP}$, $b_{\theta TYP}$, $b_{\varphi TYP}$, respectivement en pompage, en roulis et en tangage.

Dans le mode de réalisation représenté à la figure 6, l'estimateur 21 reçoit en entrée les grandeurs suivantes :

- le niveau NMC de mouvement de la caisse fourni par l'estimateur 24,
- le niveau NTC de tressautement de la caisse fourni par l'estimateur 24,
- la vitesse VVH du véhicule,
- les raideurs modales fournies par l'estimateur 24 : la raideur modale en pompage $k_z$, la raideur modale en tangage $k_\varphi$ et la raideur modale en roulis $k_\theta$,
- les vitesses modales $V_{mod}$ fournies par le module 10 : la vitesse modale $\dot{z}G$ en pompage de caisse, la vitesse modale $\dot{\theta}$ en roulis de caisse, la vitesse modale $\dot{\varphi}$ en tangage de caisse,
- les moments modaux d'inertie fournis par l'estimateur 20 : le moment d'inertie en roulis $I_\theta$ et le moment d'inertie en tangage $I_\varphi$,
- la masse suspendue MSUS fournie par l'estimateur 20,
- une information IS de sportivité, pouvant être à un état booléen 0 d'absence de sportivité, ou à un autre état booléen 1 de sportivité, selon l'actionnement d'un bouton correspondant du tableau de bord du véhicule par son conducteur dans une position respectivement de conduite sportive ou d'absence de conduite sportive.

Pour chacun des gains modaux $b_z$, $b_\theta$, $b_\varphi$, le coefficient multiplicatif de référence $b_{zREF}$, $b_{\theta REF}$, $b_{\varphi REF}$, respectivement en pompage, en roulis et en tangage, est obtenu en extrayant d'une table ou courbe de référence préenregistrée donnant le coefficient multiplicatif de référence en fonction de la vitesse du véhicule, la valeur $B_{zREF}$, $b_{\theta REF}$, $b_{\varphi REF}$ du coefficient multiplicatif de référence, qui correspond à la valeur entrée VVH de la vitesse du véhicule, par exemple par interpolation linéaire.

Pour chacun des gains modaux $b_z$, $b_\theta$, $b_\varphi$, le coefficient multiplicatif d'atténuation $b_{zATT}$, $b_{\theta ATT}$, $b_{\varphi ATT}$, respectivement en pompage, en roulis et en tangage, est obtenu

- en calculant une résistance $R_z$, $R_\theta$, $F_\varphi$, respectivement en pompage, en roulis et en tangage en fonction du niveau NMC de mouvement de la caisse et du niveau NTC de tressautement de la caisse, par la formule :

$$R_z = NTC - \beta_z.NMC$$

$$R_\theta = NTC - \beta_\theta.NMC$$

$$R_\varphi = NTC - \beta_\varphi.NMC$$

Où $\beta_z$, $\beta_\theta$, $\beta_\varphi$ sont des paramètres préenregistrés permettant de régler le rapport entre les deux niveaux NMC et NTC, ces paramètres $\beta_z$, $\beta_\theta$, $\beta_\varphi$ étant par exemple réglés entre 0,5 et 1 ;

- en extrayant d'une table ou courbe préenregistrée donnant le coefficient multiplicatif d'atténuation $b_{zATT}$, $b_{\theta ATT}$, $b_{\varphi ATT}$ en fonction de la résistance respectivement en pompage, en roulis et en tangage, la valeur $b_{zATT}$, $b_{\theta ATT}$, $b_{\varphi ATT}$ du coefficient multiplicatif d'atténuation, qui correspond à la valeur calculée de la résistance $R_z$, $R_\theta$, $R_\varphi$, respectivement en pompage, en roulis et en tangage, par exemple par interpolation linéaire.

Le coefficient multiplicatif d'atténuation $b_{zATT}$, $b_{\theta ATT}$, $b_{\varphi ATT}$ en pompage, en roulis et en tangage est par exemple donné par la formule :

$$b_{zATT} = 1/(1+a_z.R_z)$$

$$b_{\theta ATT} = 1/(1+a_\theta.R_\theta)$$

$$b_{\varphi ATT} = 1/(1+a_\varphi.R_\varphi)$$

où $a_z$, $a_\theta$, $a_\varphi$, sont des paramètres préenregistrés.

La valeur obtenue de $b_{zATT}$, $b_{\theta ATT}$, $b_{\varphi ATT}$ n'est par exemple retenue que si la résistance $R_z$, $R_\theta$, $R_\varphi$ associée est supérieure à un seuil prescrit. Si la résistance $R_z$, $R_\theta$, $R_\varphi$ associée est inférieure ou égale à ce seuil prescrit, on prend 1 comme coefficient multiplicatif d'atténuation $b_{zATT}$, $b_{\theta ATT}$, $b_{\varphi ATT}$.

Pour chacun des gains modaux $b_z$, $b_\theta$, $b_\varphi$, le coefficient multiplicatif de recalage $b_{zREC}$, $b_{\theta REC}$, $b_{\varphi REC}$, respectivement en pompage, en roulis et en tangage, est obtenu par la formule

$$b_{zREC} = \sqrt{\frac{k_z \cdot MSUS}{k_{zREF} \cdot MREF}}$$

$$b_{\theta REC} = \sqrt{\frac{k_\theta \cdot I_\theta}{k_{\theta REF} \cdot I_{\theta REF}}}$$

$$b_{\varphi REC} = \sqrt{\frac{k_\varphi \cdot I_\varphi}{k_{\varphi REF} \cdot I_{\varphi REF}}}$$

où $k_{zREF}$ est une raideur de référence en pompage, constante,

$k_{\theta REF}$ est une raideur de référence en roulis, constante,

$k_{\varphi REF}$ est une raideur de référence en tangage, constante,

$I_{\theta REF}$ est un moment d'inertie de référence en roulis, constant,

$I_{\varphi REF}$ est un moment d'inertie de référence en tangage, constant,

$k_{zREF}$, $k_{\theta REF}$, $k_{\varphi REF}$, MREF, $I_{\theta REF}$, $I_{\varphi REF}$ sont des paramètres préenregistrés, correspondant à un chargement normalisé du véhicule, comme par exemple quatre personnes de 67 kg dans l'habitacle du véhicule et 28 kg de bagages dans le coffre arrière.

Pour chacun des gains modaux $b_z$, $b_\theta$, $b_\varphi$, le coefficient multiplicatif de type de conduite $b_{zTYP}$, $b_{\theta TYP}$, $b_{\varphi TYP}$, respectivement en pompage, en roulis et en tangage, est égal à un gain préenregistré de sportivité $GS_z$, $GS_\theta$, $GS_\varphi$, si l'information IS de sportivité est à l'état booléen 1 de sportivité et est égal à 1, si l'information IS de sportivité est à l'état booléen 0 d'absence de sportivité.

Les gains modaux $b_z$, $b_\theta$, $b_\varphi$ sont calculés en fonction des coefficients multiplicatifs selon les formules :

$$b_z = b_{zREF} \cdot b_{zATT} \cdot b_{zREC} \cdot b_{zTYP}$$

$$b_\theta = b_{\theta REF} \cdot b_{\theta ATT} \cdot b_{\theta REC} \cdot b_{\dot\theta TYP}$$

$$b_\varphi = b_{\varphi REF} \cdot b_{\varphi ATT} \cdot b_{\varphi REC} \cdot b_{\varphi TYP}$$

Le premier effort modal de pompage $F_{z1}$, le premier effort modal de roulis $F_{\theta 1}$. le premier effort modal de tangage $F_{\varphi 1}$ sont calculés et sont également appelés efforts modaux de confort ou « skyhook ». Le premier effort modal de pompage $F_{z1}$, le premier effort modal de roulis $F_{\theta 1}$, le premier effort modal de tangage $F_{\varphi 1}$ sont fournis sur une sortie de l'estimateur 21.

Logique Roadhook

Ci-dessous est décrit la logique de type Roadhook, c'est-à-dire qui suit le profil de la route, cette logique étant également appelée logique de tenue de caisse ou logique de comportement.

Le principe de cette logique de tenue de caisse est de faire tendre vers zéro ou de minimiser l'une ou plusieurs des accélérations modales de la caisse par rapport au plan des roues : accélération modale en pompage, accélération modale en roulis, accélération modale en tangage.

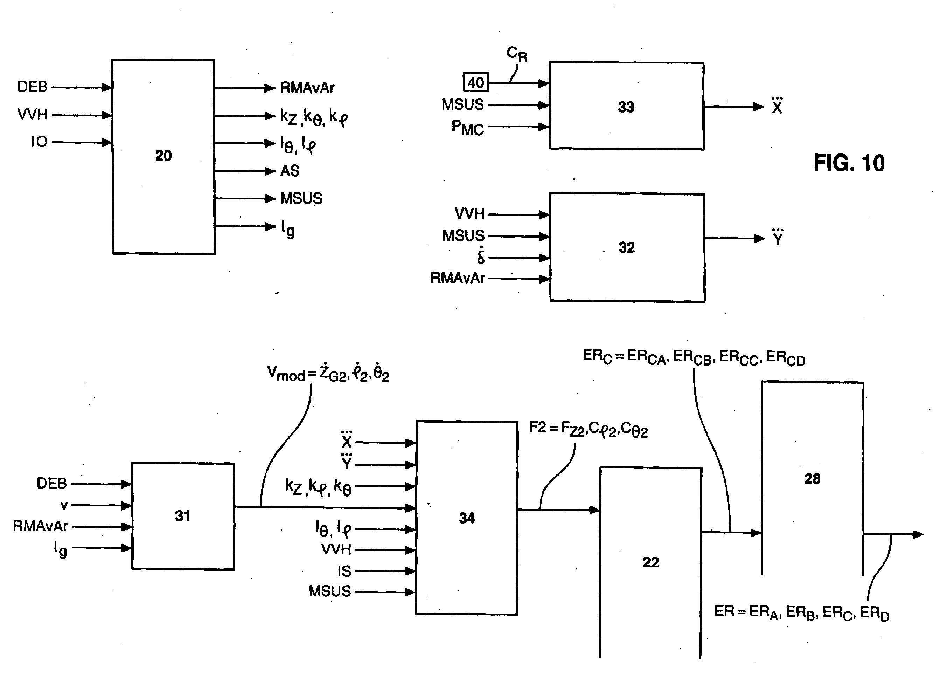

A la figure 10, le dispositif comporte un estimateur 31 des vitesses modales $V_{mod2}$ de la caisse par rapport au plan moyen des roues en fonction des débattements DEB mesurés des roues A, B, C, D. Ces vitesses modales $V_{mod2}$ par rapport au plan moyen des roues sont appelées vitesses relatives et comprennent la vitesse modale relative $\dot{z}_{G2}$ de caisse en pompage, la vitesse modale relative $\dot\varphi_2$ de caisse en tangage et la vitesse modale relative $\dot\theta_2$ de caisse en roulis.

Cet estimateur 31 des vitesses modales relatives $V_{mod2}$ reçoit en entrée :

- les débattements DEB mesurés sur les roues A, B, C, D,
- la voie v,
- au moins deux des paramètres suivants : la valeur de répartition de masse RMAvAr entre l'avant et l'arrière, la longueur lg séparant le centre de gravité G de l'axe des roues avant A, B, et l'empattement e.

Les débattements DEB sont d'abord filtrés dans un filtre passe-bas, par exemple d'ordre 2 et de type Butterworth, pour n'obtenir que les débattements basses fréquences et éliminer dans une large mesure les tressautements hautes fréquences.

Puis, un dérivateur dérive les débattements DEB ainsi filtrés pour obtenir les vitesses de débattement Roadhook des roues A, B, C, D.

Les vitesses modales relatives $V_{mod2}$ sont ensuite calculées selon les formules suivantes :

- vitesse modale relative de caisse en pompage par rapport au plan moyen des roues :

$$\dot{z}_{G2} = \frac{(e - \lg)}{e} \frac{\dot{d}_A + \dot{d}_B}{2} + \frac{\lg}{e} \frac{\dot{d}_C + \dot{d}_D}{2}$$

- vitesse modale relative de caisse en tangage par rapport au plan moyen des roues :

$$\dot{\varphi}_2 = \frac{\dot{d}_A + \dot{d}_B - \dot{d}_C - \dot{d}_D}{2e}$$

- vitesse modale relative de caisse en roulis par rapport au plan moyen des roues :

$$\dot{\theta}_2 = \frac{\dot{d}_A - \dot{d}_B - \dot{d}_C + \dot{d}_D}{2v}$$

avec
$\dot{d}_A$ = vitesse de débattement VDEB de la roue A avant gauche,
$\dot{d}_B$ = vitesse de débattement VDEB de la roue B avant droite,
$\dot{d}_C$ = vitesse de débattement VDEB de la roue C arrière droite,
$\dot{d}_D$ = vitesse de débattement VDEB de la roue D arrière gauche.

Jerk transversal anticipé

Un estimateur 32 est prévu pour calculer un jerk transversal anticipé $\dddot{Y}$ (dérivée troisième de la coordonnée Y par rapport au temps) à partir de la vitesse VVH mesurée du véhicule et de la vitesse de rotation $\dot{\delta}$ du volant de direction du véhicule, où $\delta$ est l'angle de rotation mesuré de ce volant, mesuré par tout capteur ou moyen approprié.
Cet estimateur 32 reçoit en entrée :

- la masse suspendue MSUS,
- la valeur de répartition de masse RMAvAr entre l'avant et l'arrière,
- la vitesse VVH du véhicule,
- la vitesse de rotation $\dot{\delta}$ du volant de direction.

Le jerk transversal anticipé $\dddot{Y}$ est estimé selon la formule :

$$\dddot{Y} = \frac{D.\dot{\delta}.VVH^2}{e(1 + K.VVH^2)}$$

où D est la démultiplication du volant de direction et K est une constante de gain de surbraquage, calculée en fonction de la valeur de répartition de masse RMAvAr entre l'avant et l'arrière et de la masse suspendue MSUS. Le gain K de surbraquage est une grandeur du véhicule, déterminée par des mesures sur le véhicule.

Couple moteur anticipé aux roues

Un estimateur 40 est prévu pour calculer ce couple moteur anticipé aux roues, désigné par $C_R$.
Pour ce faire, on estime le numéro i du rapport embrayé $R_{EMBR}(i)$ de la boîte de vitesse du véhicule, qui va par exemple de 1 à 5.

On calcule le vitesse WH1 qu'aurait le véhicule à une vitesse de rotation prescrite $\omega_{MOT1}$ du moteur, qui ne dépend en position embrayée que du rapport $R_{EMBR}$ engagé, selon la formule

$$VVH1 = VVH. \; \omega_{MOT1} / \omega_{MOT}$$

où $\omega_{MoT}$ est la vitesse de rotation du moteur à la vitesse VVH du véhicule. Par exemple, $\omega_{MOT1}$ = 1000 tours / minute.

On calcule pour chaque rapport i d'embrayage, les paramètres

$$P_i = 0,5 \; . \; (VVH1(i) + VVH1(i+1)).$$

En comparant VVH1 à $P_i$ et en retenant la valeur $P_i$ la plus proche de VVH1, on déduit le rapport i d'embrayage.

Le couple moteur anticipé $C_R$ aux roues est alors :

$$C_R = C_M \; . \; R_{EMBR}(i),$$

avec $R_{EMBR}(i) = \omega_{MOT}/\omega_{ROUE}$

Où $R_{EMBR}(i)$ est le rapport d'embrayage ayant le numéro i,

$C_M$ est le couple moteur déterminé par tout moyen approprié, par exemple par un calculateur du contrôle moteur.

$\omega_{ROUE}$ est la vitesse de rotation des roues.

Jerk longitudinal anticipé

Un estimateur 33 est prévu pour calculer un jerk longitudinal anticipé $\dddot{X}$ (dérivée troisième de la coordonnée X par rapport au temps) à partir de la dérivée du couple moteur anticipé et de la dérivée $\dot{P}_{MC}$ de la pression $P_{MC}$ du maître cylindre.

Cet estimateur 33 reçoit en entrée :

- la masse suspendue MSUS,
- la pression $P_{MC}$ du maître cylindre,
- le couple moteur anticipé aux roues $C_R$.

Le calcul est effectué de la manière suivante.

On extrait d'abord d'une table ou courbe préenregistrée donnant un effort de freinage du maître cylindre en fonction de la pression du maître cylindre, la valeur EFR de cet effort de freinage correspondant à la pression $P_{MC}$ du maître cylindre, par exemple par interpolation linéaire. On applique ensuite un filtre passe-bas, par exemple d'ordre 1 de type Butterworth, à cet effort EFR de freinage, et on dérive dans un dérivateur l'effort EFR de freinage ainsi filtré pour obtenir la dérivée $\dot{E}_{FRF}$ de l'effort EFR filtré.

On calcule un effort anticipé du moteur aux roues EMR, égal au couple moteur anticipé aux roues $C_R$, divisé par un rayon moyen Rmoy des roues, prédéterminé et préenregistré. On applique ensuite un filtre passe-bas, par exemple d'ordre 1 de type Butterworth, à cet effort EMR anticipé du moteur aux roues, et on dérive dans un dérivateur l'effort EMR anticipé du moteur ainsi filtré pour obtenir la dérivée $\dot{E}_{MRF}$ de l'effort EMR filtré.

Le jerk longitudinal anticipé $\dddot{X}$ est alors égal à la somme des dérivées $\dot{E}_{FRF}$, $\dot{E}_{MRF}$, divisée par la masse totale MTOT :

$$\dddot{X} = \frac{\dot{E}_{FRF} + \dot{E}_{MRF}}{MTOT}$$

Dans cette formule, la masse totale MTOT inclut la masse suspendue MSUS, peut inclure la masse des roues et peut être bornée entre deux seuils.

Ces jerks $\ddot{\ddot{Y}}$ et $\ddot{\ddot{X}}$ sont estimés et ne proviennent pas d'une dérivation d'accéléromètres, trop bruités et trop en retard.

Termes d'efforts modaux anticipatifs

Un module 34 est prévu pour calculer des termes d'efforts modaux anticipatifs, à savoir :

- un couple modal anticipatif en tangage, désigné par $c_{\varphi 2ant}$,
- un couple modal anticipatif en roulis, désigné par $c_{\theta 2ant}$.

Il n'est pas calculé d'effort modal anticipatif en pompage, étant donné que seul un effort modal correctif Roadhook agit en pompage, ainsi que cela sera décrit ci-dessous.

Dans le mode de réalisation représenté à la figure 11, l'estimateur 34 reçoit en entrée les grandeurs suivantes :

- le jerk transversal anticipé $\ddot{\ddot{Y}}$ fourni par l'estimateur 32,

- le jerk longitudinal anticipé $\ddot{\ddot{X}}$ fourni par l'estimateur 33,
- la vitesse VVH du véhicule,
- les raideurs modales fournies par l'estimateur 24 : la raideur modale en pompage $k_z$, la raideur modale en tangage $k_\varphi$ et la raideur modale en roulis $k_\theta$,
- les vitesses modales relatives $V_{mod2}$ par rapport au plan moyen des roues, fournies par le module 31 : la vitesse modale relative $\dot{z}_{G2}$ en pompage de caisse, la vitesse modale relative $\dot{\theta}_2$ en roulis de caisse, la vitesse modale relative $\dot{\varphi}_2$ en tangage de caisse,
- les moments modaux d'inertie fournis par l'estimateur 20 : le moment d'inertie en roulis $I_\theta$ et le moment d'inertie en tangage $I_\varphi$,
- la masse suspendue MSUS fournie par l'estimateur 20,
- l'information IS de sportivité.

Ainsi que cela est représenté à la figure 11, chacun de ces termes d'efforts modaux anticipatifs en tangage $c_{\varphi 2ant}$ et en roulis $c_{\theta 2ant}$ est calculé par traitement respectivement du jerk longitudinal anticipé $\ddot{\ddot{X}}$ et du jerk transversal anticipé $\ddot{\ddot{Y}}$, pour obtenir un jerk longitudinal anticipé traité $\ddot{\ddot{X}}_T$ et un jerk transversal anticipé $\ddot{\ddot{Y}}_T$, puis multiplication respectivement par un gain en sollicitation longitudinale $G_{SX}$ pour obtenir le couple modal anticipatif en tangage $c_{\varphi 2ant}$ et par un gain en sollicitation longitudinale $G_{SY}$ pour obtenir le couple modal anticipatif en roulis $c_{\theta 2ant}$ selon les formules :

$$c_{\varphi 2ant} = G_{SX} \cdot \ddot{\ddot{X}}_T$$

$$c_{\theta 2ant} = G_{SY} \cdot \ddot{\ddot{Y}}_T$$

Le gain en sollicitation longitudinale $G_{SX}$ et le gain en sollicitation transversale $G_{SY}$ sont des paramètres prédéterminés de mise au point, déterminés par des essais sur véhicule pour obtenir les bonnes prestations de tenue de caisse sous sollicitation du conducteur.

Cette mise en forme est décrite ci-dessous pour le calcul du couple modal anticipatif en tangage, désigné par $c_{\varphi 2ant}$ à partir du jerk longitudinal anticipé $\ddot{\ddot{X}}$ :

- passage du jerk longitudinal anticipé $\ddot{\ddot{X}}$ dans un filtre 341 d'annulation des faibles amplitudes, possédant un seuil haut positif SHJL d'activation de jerk longitudinal et un seuil bas négatif SBJL d'activation de jerk longitudinal, pour remplacer par des valeurs nulles les valeurs du jerk longitudinal anticipé $\dddot{X}$ situées entre le seuil haut d'activation de jerk longitudinal SHJL et le seuil bas d'activation de jerk longitudinal SBJL au cours du temps ;

- passage du jerk longitudinal anticipé $\dddot{X}$ filtré, issu du filtre 341, dans un module 342 de maintien des maxima, pouvant avoir une temporisation paramétrable de maintien des maxima, pour obtenir un jerk filtré et maintenu à ses maxima, désigné par $\dddot{X}_{f\,\max}$,

- passage du jerk $\dddot{X}_{f\,\max}$ filtré et maintenu à ses maxima, issu du module 342, dans un module 343 limiteur de pente, limitant en valeur absolue la pente de la descente du jerk $\dddot{X}_{f\,\max}$ filtré et maintenu à ses maxima, pour obtenir le jerk longitudinal anticipé traité $\dddot{X}_{T}$, puis multiplication respectivement par le gain en sollicitation longitudinale $G_{SX}$ pour obtenir le couple modal anticipatif en tangage $c_{\varphi2ant}$.

La temporisation doit être suffisamment longue pour que le terme correctif Roadhook (voir supra) ait le temps de devenir significatif sur action simple (mise en virage simple, freinage ou accélération) et être suffisamment courte pour ne pas perturber le fonctionnement Roadhook et pour ne pas demander d'amortissement inutile.

Le passage du jerk transversal anticipé $\dddot{Y}$ dans le filtre 341 d'annulation, ayant son seuil haut positif SHJT d'activation de jerk transversal et son seuil bas négatif SBJT d'activation de jerk transversal, puis dans le module 342 de maintien des maxima produit un jerk filtré et maintenu à ses maxima, désigné par $\dddot{Y}_{f\,\max}$, qui est envoyé au module 343 limiteur de pente ayant le gain en sollicitation transversale $G_{SY}$ pour fournir en sortie le couple modal anticipatif en roulis $c_{\theta2ant}$. Les seuils hauts SHJT et SHJL peuvent être égaux et opposés aux seuils bas égaux SBJT et SBJL. Ces seuils sont paramétrables et sont un compromis entre la limitation des actions intempestives et le non traitement des petites sollicitations. De préférence, chacun des seuils SHJT, SHJL, SBJT et SBJL est compris entre 1 et 10 m.s$^{-3}$.
Le fait d'utiliser des termes anticipatifs permet de gagner en temps de réponse pour placer les actionneurs dans le bon état avant que la caisse ait le temps de prendre de la vitesse. Il en résulte une amélioration notable de la tenue de caisse.

Termes d'effort modaux correctifs

Le module 34 calcule également, en fonction de la vitesse modale relative $V_{mod2} = \dot{z}_{G2}, \dot{\varphi}_2, \dot{\theta}_2$ par rapport au plan moyen des roues, au moins un deuxième terme d'effort modal correctif $F_{2COR}$ selon la formule générale

$$F_{2COR} = - b_{mod2} \cdot V_{mod2}$$

à savoir:

- une deuxième force modale corrective en pompage, désignée par $F_{z2cor}$,
- un deuxième couple modal correctif en tangage, désigné par $c_{\varphi2cor}$,
- un deuxième couple modal correctif en roulis, désigné par $c_{\theta2cor}$ selon les formules :

$$F_{z2cor} = -b_{z2} \cdot \dot{z}_{G2}$$

$$c_{\varphi2cor} = -b_{\varphi2} \cdot \dot{\varphi}_2$$

$$C_{\theta 2cor} = -b_{\theta 2} \cdot \dot{\theta}_2$$

où $b_{mod2}$ est un deuxième gain modal correctif,

$b_{z2}$ est un deuxième gain modal correctif de pompage pour calculer la deuxième force modale corrective en pompage $F_{z2cor}$,

$b_{\theta 2}$ est un deuxième gain modal correctif de roulis pour calculer le deuxième couple modal correctif en roulis $C_{\theta 2cor}$,

$b_{\varphi 2}$ est un deuxième gain modal correctif de tangage pour calculer le deuxième couple modal correctif en tangage $c_{\varphi 2cor}$.

Les deuxièmes gains modaux correctifs $b_{z2}$, $b_{\theta 2}$, $b_{\varphi 2}$ peuvent comprendre un ou plusieurs coefficients multiplicatifs, avec par exemple les coefficients multiplicatifs suivants :

- un deuxième coefficient multiplicatif de référence $b_{zREF2}$, $b_{\theta REF2}$, $b_{\varphi REF2}$, respectivement en pompage, en roulis et en tangage,
- un deuxième coefficient multiplicatif de recalage $b_{zREC2}$, $b_{\theta REC2}$, $b_{\varphi REC2}$, respectivement en pompage, en roulis et en tangage,
- un deuxième coefficient multiplicatif de type de conduite $b_{zTYP2}$, $b_{TYP2}$, $b_{\varphi TYP2}$, respectivement en pompage, en roulis et en tangage.

Pour chacun des deuxièmes gains modaux $b_{z2}$, $b_{\theta 2}$, $b_{\varphi 2}$, le deuxième coefficient multiplicatif de référence $b_{zREF2}$, $b_{\varphi REF2}$, $b_{\varphi REF2}$, respectivement en pompage, en roulis et en tangage, est obtenu en extrayant d'une deuxième table ou courbe de référence, préenregistrée pour la logique Roadhook, donnant le deuxième coefficient multiplicatif de référence en fonction de la vitesse du véhicule, la valeur $b_{zREF2}$, $b_{\theta REF2}$, $b_{\varphi REF2}$ du deuxième coefficient multiplicatif de référence, qui correspond à la valeur entrée VVH de la vitesse du véhicule, par exemple par interpolation linéaire.

Pour chacun des deuxièmes gains modaux $b_{z2}$, $b_{\theta 2}$, $b_{\varphi 2}$, le deuxième coefficient multiplicatif de recalage $b_{zREC2}$, $b_{\theta REC2}$, $b_{\varphi REC2}$ est par exemple égal au premier coefficient multiplicatif de recalage $b_{zREC}$, $b_{\theta REC}$, $b_{\varphi REC}$ respectivement en pompage, en roulis et en tangage, décrit ci-dessus :

$$b_{zREC2} = b_{zREC} , \; b_{\theta REC2} = b_{\theta REC}, \; b_{\varphi REC2} = b_{\varphi REC}.$$

Pour chacun des deuxièmes gains modaux $b_z$, $b_\theta$, $b_\varphi$, le deuxième coefficient multiplicatif de type de conduite $b_{zTYP2}$, $b_{\theta TYP2}$, $b_{\varphi TYP2}$, respectivement en pompage, en roulis et en tangage, est par exemple égal au premier coefficient multiplicatif de type de conduite $b_{zTYP}$, $b_{\theta TYP}$, $b_{\varphi TYP}$, décrit ci-dessus :

$$b_{zTYP2} = b_{zTYP} , \; b_{\theta TYP2} = b_{\theta TYP}, \; b_{\varphi TYP2} = b_{\varphi TYP}.$$

Les deuxièmes gains modaux correctifs $b_{z2}$, $b_{\theta 2}$, $b_{\varphi 2}$ sont calculés en fonction des deuxièmes coefficients multiplicatifs selon les formules :

$$b_{z2} = b_{zREF2} \cdot b_{zREC2} \cdot b_{zTYP2}$$

$$b_{\theta 2} = b_{\theta REF2} \cdot b_{\theta REC2} \cdot b_{\theta TYP2}$$

$$b_{\varphi 2} = b_{\varphi REF2} \cdot b_{\varphi REC2} \cdot b_{\varphi TYP2}$$

Efforts modaux Roadhook

L'estimateur 34 fait ensuite

- la synthèse entre le couple modal anticipatif en tangage $c_{\varphi 2ant}$ et le deuxième couple modal correctif en tangage $c_{\varphi 2cor}$, pour obtenir en sortie le deuxième couple ou effort modal $c_{\varphi 2}$ de tangage,
- la synthèse entre le couple modal anticipatif en roulis $c_{\theta 2ant}$ et le deuxième couple modal correctif en roulis $c_{\theta 2cor}$,

pour obtenir en sortie le deuxième couple ou effort modal $c_{\theta 2}$ de roulis.

La deuxième force modale corrective en pompage, désignée par $F_{z2cor}$ est prise en sortie comme deuxième force ou effort modal $F_{z2}$ de pompage $F_{z2} = F_{z2cor}$.

Ces deuxièmes efforts $c_{\varphi 2}$, $c_{\theta 2}$ et $F_{z2}$ sont appelés efforts modaux de comportement ou de tenue de route ou « Roadhook ».

La synthèse est effectuée par choix du terme anticipatif ou du terme correctif en fonction de leurs valeurs, de la manière décrite dans le tableau ci-dessous.

| Terme Anticipatif → Terme correctif↓ | Petit | Grand |
|---|---|---|
| Petit | Cas 1 : Terme correctif | Cas 3 : Terme anticipatif |
| Grand | Cas 2 : Terme correctif | Cas 4 : <br> - Maximum des 2 si de même signe <br> - Terme correctif si signes opposés |

Pour l'obtention du deuxième effort modal $c_{\varphi 2}$ de tangage, celui-ci est égal

- au deuxième couple modal correctif en tangage $c_{\varphi 2cor}$, lorsque la valeur absolue du couple anticipatif en tangage $c_{\varphi 2ant}$ est inférieure ou égale à une première valeur prescrite de tangage $V1\varphi$, (cas 1 et 2 dans le tableau, correspondant au terme anticipatif petit),
- au couple modal anticipatif en tangage $c_{\varphi 2ant}$, lorsque la valeur absolue du couple anticipatif en tangage $c_{\varphi 2ant}$ est supérieure à la première valeur prescrite de tangage $V1\varphi$, et lorsque la valeur absolue du couple modal correctif en tangage $c_{\varphi 2cor}$ est inférieure ou égale à une deuxième valeur prescrite de tangage $V2\varphi$ (cas 3 dans le tableau, correspondant au terme correctif petit et au terme anticipatif grand).

Si la valeur absolue du couple anticipatif en tangage $c_{\varphi 2ant}$ est supérieure à la première valeur prescrite de tangage $V1\varphi$ et si la valeur absolue du couple modal correctif en tangage $c_{\varphi 2cor}$ est supérieure à la deuxième valeur prescrite de tangage $V2\varphi$ (cas 4 dans le tableau, correspondant au terme correctif grand et au terme anticipatif grand),

- si le couple modal correctif en tangage $c_{\varphi 2cor}$ et le couple anticipatif en tangage $c_{\varphi 2ant}$ ont le même signe, le deuxième effort modal $c_{\varphi 2}$ de tangage est égal à $\max(\,|c_{\varphi 2cor}|\,,\,|c_{\varphi 2ant}|\,).\mathrm{sgn}(c_{\varphi 2ant})$,
  Où sgn désigne la fonction signe et max la fonction maximum, et
- si le couple modal correctif en tangage $c_{\varphi 2cor}$ et le couple anticipatif en tangage $c_{\varphi 2ant}$ n'ont pas le même signe, le deuxième effort modal $c_{\varphi 2}$ de tangage est égal au couple modal correctif en tangage $c_{\varphi 2cor}$.

L'obtention du deuxième effort modal $c_{\theta 2}$ de roulis est analogue à ce qui précède, à partir de $c_{\theta 2cor}$ et $c_{\theta 2ant}$ au lieu de $c_{\varphi 2cor}$ et $c_{\varphi 2ant}$, avec une première valeur prescrite de roulis $V1\theta$ au lieu de $V1\varphi$, et une deuxième valeur prescrite de roulis $V2\theta$ au lieu de $V2\varphi$.

Synthèse entre Skyhook et Roadhook

Le premier effort modal de pompage $F_{z1}$, le premier effort modal de roulis $F_{\theta 1}$ et le premier effort modal de tangage $F_{\varphi 1}$ fournis par l'estimateur 21 (efforts modaux de confort par la logique Skyhook, désignés d'une manière générale par premiers efforts modaux F1 de consigne), ainsi que le deuxième effort modal $F_{z2}$ de pompage, le deuxième effort modal $c_{\theta 2}$ de roulis et le deuxième effort modal $c_{\varphi 2}$ de tangage fournis par l'estimateur 34 (efforts modaux de comportements par la logique Roadhook, désignés d'une manière générale par deuxièmes efforts modaux F2 de consigne), sont envoyés à un estimateur 22 d'une force de consigne pour chaque amortisseur, soit pour les roues A, B, C, D, les forces de consigne FA1, FB1, FC1, FD1.

Pour chaque mode, l'estimateur 22 pondère le premier effort F1 de confort et le deuxième effort F2 de comportement pour calculer l'effort modal F de consigne.

L'estimateur 22 calcule :

- un effort modal $F = F_z$ de consigne en pompage, en fonction du premier effort de pompage $F_{z1}$ de confort, du deuxième effort de pompage $F_{z2}$ de comportement et d'un coefficient $\alpha$ de pondération, selon la formule :

$$F_z = \alpha \,.\, F_{z2} + (1-\alpha) \,.\, F_{z1}$$

- un effort modal $F = F_\varphi$ de consigne en tangage, en fonction du premier effort modal de tangage $F_{\varphi1}$ de confort, du deuxième effort modal $c_{\varphi2}$ de tangage de comportement et du coefficient $\alpha$ de pondération, selon la formule :

$$F_\varphi = \alpha \,.\, c_{\varphi2} + (1-\alpha) \,.\, F_{\varphi1}$$

- un effort modal $F = F_\theta$ de consigne en roulis, en fonction du premier effort modal de roulis $F_{\theta1}$ de confort, du deuxième effort modal $c_{\theta2}$ de roulis de comportement et du coefficient $\alpha$ de pondération, selon la formule :

$$F_\theta = \alpha \,.\, c_{\theta2} + (1-\alpha) \,.\, F_{\theta1}$$

La détermination de ce coefficient $\alpha$ de pondération en fonction de sollicitations détectées est décrite ci-dessous.
Le coefficient de pondération est normalement à 0 pour faire suivre aux efforts modaux de consigne les premiers efforts de confort $F_{z1}$, $F_{\theta1}$ et $F_{\varphi1}$ de la logique Skyhook.

Accélération longitudinale corrigée

L'accélération longitudinale corrigée $\ddot{X}_{COR}$ est calculée par un estimateur 25 à partir de l'accélération longitudinale mesurée ACCL, fournie par l'accéléromètre longitudinal CAPL.
L'estimateur 25 reçoit en entrée :

- la vitesse VVH mesurée du véhicule,
- la masse suspendue MSUS, fournie par l'estimateur 20,
- l'accélération longitudinale mesurée ACCL,
- la pression $P_{MC}$ du maître cylindre des freins, fournie par le capteur CAP-P,
- le couple moteur anticipé aux roues $C_R$, fourni par l'estimateur 40. Le calcul est effectué de la manière suivante.

On extrait d'abord de la table ou courbe préenregistrée donnant l'effort de freinage du maître cylindre en fonction de la pression du maître cylindre, la valeur EFR de cet effort de freinage correspondant à la pression $P_{MC}$ du maître cylindre, par exemple par interpolation linéaire.
On calcule l'effort anticipé du moteur aux roues EMR, égal au couple moteur anticipé aux roues $C_R$, divisé par un rayon moyen Rmoy des roues, prédéterminé et préenregistré.
On calcule un effort de traînée longitudinale ETR en fonction de la vitesse du véhicule VVH selon la formule :

$$ETR = COEF \,.\, (VVH)^2 + DEC$$

Où COEF est un coefficient prédéterminé et préenregistré et DEC est un décalage prédéterminé et préenregistré.
L'effort longitudinal total ELT est alors égal à la somme de l'effort EFR de freinage, de l'effort EMR anticipé du moteur aux roues et de l'effort ETR de traînée longitudinale :

$$ELT = EFR + EMR + ETR$$

On calcule la masse totale MTOT, qui inclut la masse suspendue MSUS, peut inclure la masse des roues et peut être bornée entre deux seuils.
L'accélération longitudinale anticipée $\ddot{X}_{ANT}$ est calculée en divisant l'effort longitudinal total ELT par la masse totale MTOT :

$$\ddot{X}_{ANT} = ELT / MTOT$$

L'accélération longitudinale anticipée $\ddot{X}_{ANT}$ est éventuellement ensuite bornée entre deux seuils.

L'accélération longitudinale corrigée $\ddot{X}_{COR}$ est ensuite calculée en

- calculant une évolution EVAL de l'accélération longitudinale, égale à l'accélération longitudinale anticipée $\ddot{X}_{ANT}$ à laquelle est soustraite l'accélération longitudinale mesurée ACCL :

$$EVAL = \ddot{X}_{ANT} - ACCL$$

- en appliquant à cette évolution EVAL de l'accélération longitudinale un filtre passe-haut PH, par exemple de type Butterworth d'ordre 1, pour obtenir l'évolution longitudinale EVAL filtrée, égale à PH($\ddot{Y}_{ANT}$**–ACCL),**
- en additionnant l'évolution longitudinale EVAL filtrée à l'accélération longitudinale mesurée ACCL, pour obtenir l'accélération longitudinale corrigée $\ddot{X}_{COR}$

$$\ddot{X}_{COR} = ACCL + PH(\ddot{X}_{ANT} - ACCL)$$

La fréquence de coupure du filtre passe-haut PH permet de régler la vitesse de recalage de l'estimation sur la mesure.

<u>Accélération transversale corrigée</u>

L'accélération transversale corrigée $\ddot{Y}_{COR}$ est calculée par un estimateur 26 à partir de l'accélération transversale mesurée ACCT, fournie par l'accéléromètre transversal CAP-ACCT.

L'estimateur 26 reçoit en entrée :

- la masse suspendue MSUS,
- la valeur de répartition de masse RMAvAr entre l'avant et l'arrière,
- la vitesse VVH du véhicule,
- l'angle de rotation $\delta$ du volant de direction,
- l'accélération transversale mesurée ACCT.

L'accélération transversale anticipée $\ddot{Y}_{ANT}$ est estimée selon la formule :

$$\ddot{Y}_{ANT} = \frac{D.\delta.VVH^2}{e(1 + K.VVH^2)}$$

où D est la démultiplication du volant de direction et K est la constante de gain de surbraquage, calculée en fonction de la valeur de répartition de masse RMAvAr entre l'avant et l'arrière et de la masse suspendue MSUS. La constante K de gain de surbraquage est une grandeur du véhicule, déterminée par des mesures sur le véhicule.

L'accélération longitudinale anticipée $\ddot{Y}_{ANT}$ est éventuellement ensuite bornée entre deux seuils.

L'accélération longitudinale corrigée $\ddot{Y}_{COR}$ est ensuite calculée en

- calculant une évolution EVAT de l'accélération transversale, égale à l'accélération transversale anticipée $\ddot{Y}_{ANT}$ à laquelle est soustraite l'accélération transversale mesurée ACCT :

$$EVAT = \ddot{Y}_{ANT} - ACCT$$

- en appliquant à cette évolution EVAT de l'accélération transversale un filtre passe-haut PH2, par exemple de type Butterworth d'ordre 1, pour obtenir l'évolution transversale EVAT filtrée, égale à PH($\ddot{Y}_{ANT}$–ACCT),
- en additionnant l'évolution transversale EVAT filtrée à l'accélération transversale mesurée ACCT, pour obtenir l'accélération transversale corrigée $\ddot{Y}_{COR}$ :

$$\ddot{Y}_{COR} = ACCT + PH2(\ddot{Y}_{ANT} - ACCT)$$

La fréquence de coupure du filtre passe-haut PH2 permet de régler la vitesse de recalage de l'estimation sur la mesure.

<u>Détection des sollicitations et coefficient de pondération des efforts Skyhook et des efforts Roadhook</u>

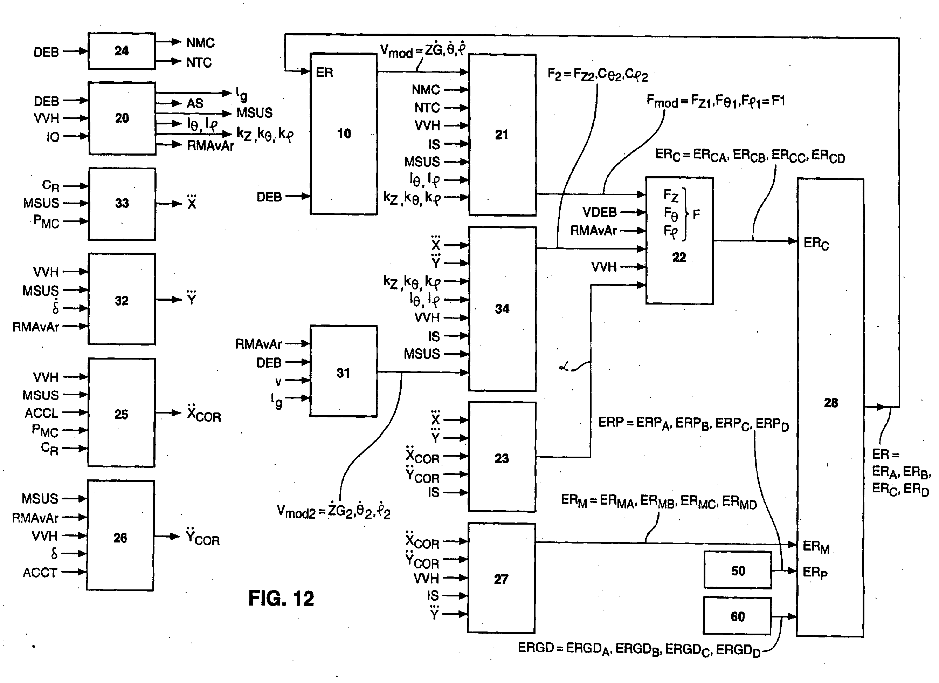

A la figure 12, un estimateur 23 calcule le coefficient $\alpha$ de pondération des premiers efforts de confort et des deuxièmes efforts de comportement.

L'estimateur 23 reçoit en entrée :

- le jerk longitudinal anticipé $\dddot{X}$ , fourni par l'estimateur 33,

- le jerk transversal anticipé $\dddot{Y}$ , fourni par l'estimateur 32,
- l'accélération longitudinale corrigée $\ddot{X}_{COR}$, fournie par l'estimateur 25,
- l'accélération transversale corrigée $\ddot{X}_{COR}$, fournie par l'estimateur 26,
- l'information IS de sportivité.

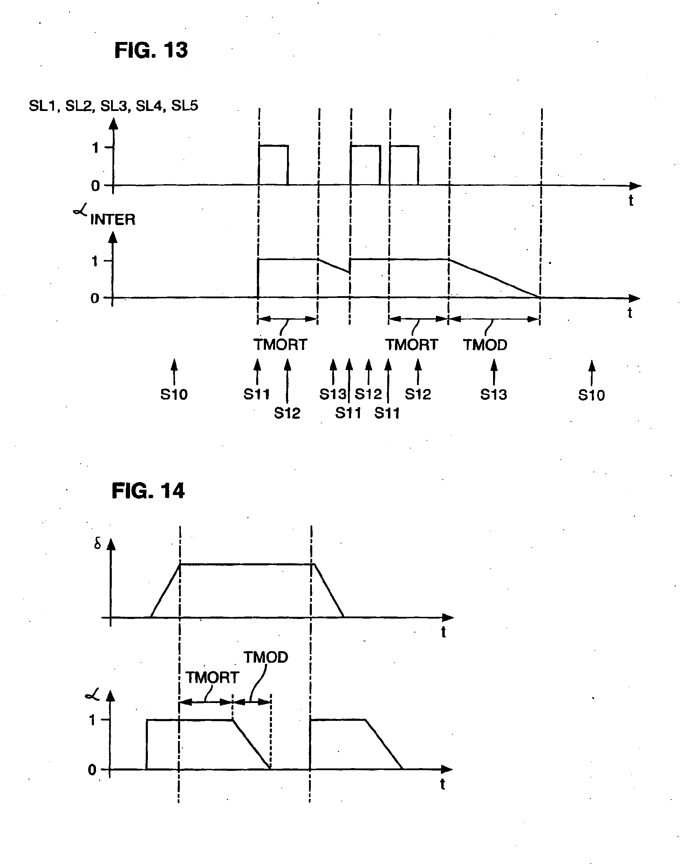

Par défaut, les premiers efforts de confort $F_{z1}$, $F_{\theta1}$, et $F_{\varphi1}$ de la logique Skyhook sont sélectionnés pour les efforts modaux de consigne, c'est-à-dire que le coefficient $\alpha$ de pondération est à 0. Les sollicitations sont détectées sur les valeurs prises par ces entrées. Dès qu'une sollicitation est détectée, le coefficient $\alpha$ de pondération passe en « tout comportement » ou Roadhook, c'est-à-dire à 1, pour sélectionner les deuxièmes efforts $F_{z2}$, $c_{\theta2}$ et $c_{\varphi2}$ de comportement comme efforts modaux de consigne. Si l'on détecte une stabilisation au sein d'une sollicitation, typiquement une grande courbe d'autoroute comme à la figure 14, il y a la possibilité de refaire passer le coefficient $\alpha$ de pondération progressivement à 0 en logique Skyhook pour favoriser le confort. Si, au sein de cette stabilisation, on détecte une variation des grandeurs accélérométriques, la répartition repasse immédiatement en 'tout 'comportement', c'est-à-dire à 1.

On crée un signal booléen sollicitation conducteur latérale' (SSOLT) et un signal booléen 'sollicitation conducteur longitudinale' (SSOLL) sur franchissement de seuils paramétrables d'accélération corrigée ou de jerk anticipé.

Le coefficient de pondération passe à 1 et on réinitialise la temporisation lorsque les événements suivants sont détectés :

- front montant de sollicitation conducteur longitudinale,
- front montant de sollicitation conducteur latérale,
- dépassement de seuil sur jerk longitudinal en sollicitation conducteur longitudinale,
- dépassement de seuil sur variation d'accélération longitudinale en sollicitation conducteur longitudinale,
- dépassement de seuil sur jerk latéral en sollicitation conducteur latérale,
- dépassement de seuil sur variation d'accélération latérale en sollicitation conducteur latérale.

L'estimateur 23 détermine en fonction de l'information IS de sportivité une modulation de seuil MODL longitudinale et une modulation de seuil MODT transversale.

Si l'information IS de sportivité est égale à 1, la modulation de seuil MODL longitudinale est égale à une valeur prescrite longitudinale plus petite que 1 et la modulation de seuil MODT transversale est égale à une valeur prescrite transversale plus petite que 1.

Si l'information IS de sportivité est égale à 0, la modulation de seuil MODL longitudinale est égale à 1 et la modulation de seuil MODT transversale est égale à 1.

On détermine ensuite des signaux de détection de sollicitations : un signal logique longitudinal SSOLL de sollicitation, un deuxième signal logique longitudinal SL2, un troisième signal logique longitudinal SL3, un signal logique transversal SSOLT de sollicitation, un quatrième signal logique transversal ST4 et un cinquième signal logique transversal ST5, de la manière suivante :

- si $| \ddot{X}_{COR} |$ > $THAL_1$. MODL

  ou

  $| \dddot{X} |$ > $THJL_1$ . MODL

alors SSOLL = 1,

- sinon SSOLL = 0.

- si SSOLL = 1 et | $\dddot{X}$ | > THJL$_2$

alors SL2 = 1,
- sinon SL2 = 0.
- l'accélération longitudinale $\gamma_L$ est initialisée à 0.
- si | $\ddot{X}_{COR}$ - $\gamma_L$ | > THAL$_2$ . | $\gamma_L$ |
alors

     • $\gamma_L$ = $\ddot{X}_{COR}$ est enregistrée pour le prochain calcul de SL3,
     • si SSOLL = 1 alors SL3 = 1 et sinon SL3 = 0,

- si | $\ddot{X}_{COR}$ - $\gamma_L$ | $\leq$ **THAL$_2$** . | $\gamma_L$ | alors SL3 = 0.
- si | $\ddot{Y}_{COR}$ | > **THAT$_1$** . MODT
ou

| $\dddot{Y}$ | > **THJT$_1$** . MODT

alors SSOLT = 1,
- sinon SSOLT = 0.

- si SSOLT = 1 et | $\dddot{Y}$ | > **THJT$_2$** .

alors ST4 = 1,
- sinon ST4 = 0.
- l'accélération transversae $\gamma_T$ est initialisée à 0.
- si | $\ddot{Y}_{COR}$ - $\gamma_T$ | > **THAT$_2$** . | $\gamma_T$ |
alors

     ● $\gamma_T$ = $\ddot{X}_{COR}$ est enregistrée pour le prochain calcul de ST5,
     ● si SSOLT= 1 alors ST5 = 1 et sinon ST5 = 0,

- si | $\ddot{Y}_{COR}$ - $\gamma_T$ | $\leq$ **THAT$_2$** . | $\gamma_T$ | alors ST5 = 0.

THAL$_1$ est un premier seuil d'accélération longitudinale,
THAL$_2$ est un deuxième seuil de variation d'accélération longitudinale,
THJL$_1$ et THJL$_2$ sont des premier et deuxième seuils de jerk longitudinal,
THAT$_1$ est un premier seuil d'accélération transversale,
THAT$_2$ est un deuxième seuil de variation d'accélération transversale,
THJT$_1$ et THJT$_2$ sont des premier et deuxième seuils de jerk transversal, ces seuils étant préenregistrés.
Les états 1 des signaux de détection correspondent à des états de présence d'une sollicitation et les états 0 correspondent à des états d'absence de sollicitations.
Un signal logique SSOL de sollicitation du conducteur est déterminé comme étant égal à 1 si le premier signal logique longitudinal SSOLL de sollicitation est à 1 et/ou si le signal logique transversal SSOLT de sollicitation est à 1 (Opérateur logique OU non exclusif).
Un premier signal logique SL1 est rendu égal au signal logique SSOL de sollicitation du conducteur.
On détermine, en fonction de l'information IS de sportivité, un temps TMOD de modulation entre les premiers efforts Skyhook et les deuxièmes efforts Roadhook :

- si IS = 1 alors le temps TMOD de modulation est égal à TMOD = TPER . MODSPORT,
- sinon TMOD = TPER,

où TPER est un temps de régime permanent prédéterminé et préenregistré, qui représente le temps de passage de la logique Roadhook vers la logique Skyhook en régime établi, et MODSPORT est un facteur multiplicatif de temps de modulation en cas de choix de conduite sportive, qui est plus grand que 1 et qui est prédéterminé et préenregistré.
A la figure 13, représentant des chronogrammes en fonction du temps t, un coefficient $\alpha_{INTER}$ de pondération intermédiaire est ensuite calculé de la manière suivante :

- initialisation à 0, (stade S10)
- mise à 1 du coefficient $\alpha_{INTER}$ de pondération intermédiaire sur chaque front montant détecté de l'un, plusieurs ou tous les premier, deuxième, troisième, quatrième, cinquième signaux logiques SL1 = SSOL, SL2, SL3, ST4, ST5 (stade S11),
- maintien à 1 du coefficient $\alpha_{INTER}$ de pondération intermédiaire pendant un temps mort TMORT prédéterminé et préenregistré après chacun de ces fronts montants détectés, (stade S12),
- décroissance du coefficient $\alpha_{INTER}$ de pondération intermédiaire, par exemple linéaire, pendant le temps TMOD de modulation après ce temps mort TMORT (stade S13), jusqu'à 0,
- si un nouveau front montant est détecté, le coefficient $\alpha_{INTER}$ de pondération intermédiaire est remis à 1 suivant le stade S11 et le processus S11, S12, S13 décrit ci-dessus est recommencé.

On calcule un signal logique limité SSOL$_{LIMIT}$ de sollicitation du conducteur, en filtrant le signal logique SSOL de sollicitation du conducteur dans un limiteur de pente négative, pour qu'il passe de 1 à 0 au minimum en le temps TMOD de modulation.

Le coefficient $\alpha$ de pondération est égal au coefficient $\alpha_{INTER}$ de pondération intermédiaire, multiplié par le signal logique limité SSOL$_{LIMIT}$ de sollicitation du conducteur :

$$\alpha = \alpha_{INTER} \cdot SSOL_{LIMIT}$$

La figure 14 montre les chronogrammes de l'angle $\delta$ du volant au cours d'une mise en virage simple, qui provoque le passage du coefficient $\alpha$ de pondération à 1 (Roadhook) au début et à la fin du virage, alors que le coefficient $\alpha$ de pondération est à 0 (Skyhook) avant le virage, après le virage et au milieu du virage.

Forces de consigne aux roues

On extrait de la table ou courbe préenregistrée donnant le coefficient de répartition d'effort sur l'avant en fonction de la valeur de répartition de masse entre l'avant et l'arrière, la valeur du coefficient CAV de répartition d'effort sur l'avant correspondant à la valeur de répartition de masse RMAvAr entre l'avant et l'arrière, par exemple par interpolation linéaire. Ce coefficient. CAV de répartition d'effort sur l'avant est supérieur ou égal à 0 et inférieur ou égal à 1.

Un ratio anti-devers RAD, supérieur ou égal à 0 et inférieur ou égal à 1, est calculé en fonction de la vitesse VVH du véhicule. Par exemple, on extrait de la table ou courbe préenregistrée donnant le ratio anti-devers en fonction de la vitesse du véhicule, la valeur du ratio anti-devers RAD correspondant à la vitesse VVH du véhicule, par exemple par interpolation linéaire.

L'estimateur 22 calcule les forces de consigne des amortisseurs AM aux roues A, B, C, D en fonction des efforts modaux $F_z$, $F_\theta$ et $F_\varphi$ de consigne, selon les formules suivantes :

- la force FA1 de consigne pour la roue avant gauche A :

$$FA1 = \frac{F_z.CAV}{2} - \frac{F_\varphi}{2.e} - \frac{F_\theta.RAD}{v}$$

- la force FB1 de consigne pour la roue avant droite B :

$$FB1 = \frac{F_z.CAV}{2} - \frac{F_\varphi}{2.e} + \frac{F_\theta.RAD}{v}$$

- la force FC1 de consigne pour la roue arrière droite C :

$$FC1 = \frac{F_z.(1-CAV)}{2} + \frac{F_\varphi}{2.e} + \frac{F_\theta.(1-RAD)}{v}$$

- la force FD1 de consigne pour la roue arrière gauche D :

$$FD1 = \frac{F_z.(1-CAV)}{2} + \frac{F_\varphi}{2.e} - \frac{F_\theta.(1-RAD)}{v}$$

L'estimateur détermine ensuite à partir des forces FA1, FB1, FC1, FD1 de consigne des amortisseurs AM aux roues A, B, C, D, et de la vitesse VDEB de débattement valable respectivement pour ces roues A, B, C, D, la loi **ER$_C$** =ER$_{CA}$, ER$_{CB}$, ER$_{CC}$, ER$_{CD}$ d'amortissement de consigne que doit prendre l'amortisseur AM de la roue A, B, C, D, par exemple en positionnant le point (VDEB(A) ; FA1) sur le graphique de la figure 15 et en recherchant la loi ER d'amortissement la plus proche.

Etats minimaux

Un estimateur 27 calcule des états minimaux d'amortissement. Cette fonction permet d'interdire à la suspension d'occuper des états d'amortissement trop souples, en imposant des états ER$_M$ minimaux, c'est-à-dire des lois ER$_M$ minimales d'amortissement, et ce, en fonction de 4 flux différents en entrée :

- la vitesse du véhicule pour l'obtention du premier état minimal ER$_{M1}$: ce critère est utilisé pour les situations de vie du véhicule à l'arrêt, ou à vitesse très faible (pour descentes de trottoirs par exemple), ou à vitesse très élevée pour la sécurité et le maintien de caisse.
- l'accélération longitudinale corrigée pour l'obtention du deuxième état minimal ER$_{M2}$: ce critère est utilisé pour la sécurité sur sollicitations longitudinales très importantes, au cas où la logique RoadHook ne donnerait pas satisfaction, et pour les situations d'accélérations ou de freinages stabilisés, par opposition aux phases longitudinales transitoires.
- l'accélération transversale corrigée pour l'obtention du troisième état minimal ER$_{M3}$: ce critère est utilisé pour la sécurité sur sollicitations latérales très importantes, au cas où la logique RoadHook ne donnerait pas satisfaction, et pour les situations de virages stabilisés, pendant lesquels la logique de synthèse privilégie la logique SkyHook.
- le jerk transversal anticipé pour l'obtention du quatrième état minimal ER$_{M4}$: ce critère travaille en parallèle avec la logique RoadHook avec termes anticipatifs. Il permet d'assurer une faible prise d'angle en pilotant l'actionneur par anticipation, et également, selon le paramétrage, d'utiliser des états minimaux typés en sur-vireur ou sous-vireur afin de jouer sur la vivacité du véhicule lors de la mise en virage.

Ces états minimaux sont par exemple calculés séparément pour chaque roue.

Le premier état minimal ER$_{M1}$ est obtenu en extrayant de la table ou courbe préenregistrée donnant le deuxième état minimal en fonction de la vitesse du véhicule, la valeur du premier état minimal ER$_{M1}$ correspondant à la vitesse VVH mesurée du véhicule, par exemple par interpolation linéaire. Le premier état minimal peut être calculé séparément pour les roues avant et pour les roues arrière.

Le deuxième état minimal ER$_{M2}$ est obtenu en extrayant de la table ou courbe préenregistrée donnant le deuxième état minimal en fonction de la vitesse du véhicule et de l'accélération longitudinale corrigée, la valeur du deuxième état minimal ER$_{M2}$ correspondant à la vitesse VVH mesurée du véhicule et à l'accélération longitudinale corrigée $\dot{X}_{COR}$, par exemple par interpolation linéaire.

Le troisième état minimal ER$_{M3}$ est obtenu en extrayant de la table ou courbe préenregistrée donnant le troisième état minimal en fonction de la vitesse du véhicule et de l'accélération transversale corrigée, la valeur du troisième état minimal ER$_{M3}$ correspondant à la vitesse VVH mesurée du véhicule et à l'accélération transversale corrigée $\dot{Y}_{COR}$, par exemple par interpolation linéaire.

Le quatrième état minimal ER$_{M4}$ est obtenu en extrayant de la table ou courbe préenregistrée donnant le quatrième état minimal en fonction du jerk transversal anticipé, la valeur du quatrième état minimal ER$_{M4}$ correspondant au jerk transversal anticipé $\dddot{Y}$, par exemple par interpolation linéaire.

Pour chaque roue, l'état minimum ER$_M$ global d'amortissement fourni par l'estimateur 27 est alors égal au maximum des états minimaux ER$_{M1}$, ER$_{M2}$, ER$_{M3}$, ER$_{M4}$. On obtient ainsi un état minimum global ER$_{MA}$, ER$_{MB}$, ER$_{MC}$, ER$_{MD}$ d'amortissement respectivement pour les roues A, B, C, D.

Chacune des deux fonctions RoadHook et SkyHook a comme flux principal en entrée l'information des quatre capteurs de débattement.

Par exemple, pour un véhicule roulant à moins de 20 km/h sans sollicitation conducteur, la fonction SkyHook demandera un amortissement le plus souple possible car les vitesses modales absolues seront très faibles. Cependant, dans cette situation de vie, le véhicule risque de réaliser des montées ou des descentes de trottoirs, qui sont des sollicitations contraignantes, pour lesquelles il serait préférable que le véhicule se trouve dans un état d'amortissement un peu plus ferme.

De même, pour une vitesse du véhicule très élevée (sur autoroute par exemple), sans sollicitations conducteur et sur bonne route, le SkyHook demandera un état souple. Cela peut poser problème pour des grandes vitesses, car l'amortissement risque de devoir passer en très ferme en très peu de temps, ce qui n'est pas possible avec les actionneurs utilisés.

D'autre part, la logique RoadHook peut se trouver légèrement en retard par rapport aux sollicitations conducteurs : les efforts anticipatifs estimés par la logique RoadHook ne sont pas en retard, mais pour qu'un passage en loi ferme soit appliqué, il faut que la roue ait déjà pris de la vitesse de débattement. Or, lorsque la roue prend de la vitesse de débattement, il est déjà trop tard. Il faut donc assurer un amortissement suffisamment ferme, indépendamment de la vitesse de débattement des roues, en intégrant des états d'amortissement minimaux sur accélérations longitudinales et latérales, ainsi que sur jerk latéral (en avance par rapport aux accélérations).

Pour améliorer le confort du véhicule, il est préférable de repasser en logique SkyHook dans les situations de vie virages stabilisés, ou accélérations longitudinales stabilisées. Cela permet de calmer les vitesses absolues de caisse. Cependant, on doit veiller dans ces situations de vie à ne pas trop sous amortir le véhicule car ces situations sont potentiellement dangereuses (virage qui se resserre, dégradation de la chaussée au cours du virage, etc...). On appliquera donc des états minimaux sur les accélérations stabilisées pour permettre d'utiliser la fonction SkyHook de manière sécurisée.

Enfin, les états minimaux sur jerk permettent d'ajouter à la synthèse une marge de manoeuvre sur la vivacité et l'agrément de conduite lors des mises en virage.

Commande de la loi d'amortissement

Un module 28 de commande reçoit en entrée la loi $ER_{CA}$, $ER_{CB}$, $ERcc$, $ER_{CD}$ d'amortissement de consigne, fournie par l'estimateur 22 et l'état minimum global $ER_{MA}$, $ER_{MB}$, $ER_{MC}$, $ER_{MD}$ d'amortissement, fourni par l'estimateur 27, respectivement pour les roues A, B, C, D et calcule à partir de ces états les états $ER_A$, $ER_B$, $ER_C$, $ER_D$ de commande des amortisseurs des roues A, B, C, D, en prenant pour chaque roue le maximum de la loi d'amortissement de consigne et de l'état minimum global d'amortissement :

$$ER_A = \max(ER_{CA}, ER_{MA})$$

$$ER_B = \max(ER_{CB}, ER_{MB})$$

$$ER_C = \max(ER_{CC}, ER_{MC})$$

$$ER_D = \max(ER_{CD}, ER_{MD})$$

Ces états $ER_A$, $ER_B$, $ER_C$, $ER_D$ de commande déterminent la loi d'amortissement prise par chaque amortisseur AM et sont les grandeurs ER de commande envoyées sur l'entrée COM de commande vers l'actionneur de chaque amortisseur AM pour chaque roue A, B, C, D.

Les états $ER_A$, $ER_B$, $ER_C$, $ER_D$ de commande sont en outre envoyés à l'entrée de l'estimateur 12 pour l'état réel ER de l'actionneur.

Ci-dessous sont décrites des fonctions supplémentaires, pouvant être prévues dans le dispositif pour calculer les états $ER_A$, $ER_B$, $ER_C$, $ER_D$ de commande des amortisseurs des roues A, B, C, D.

Prise en compte des percussions

Une détection des percussions s'effectue sur les roues avant. Il n'est pas possible d'anticiper l'obstacle. On détectera donc un obstacle lorsque les roues avant le franchiront. La détection d'une percussion s'effectue en surveillant la vitesse de débattement des roues avant du véhicule.

La particularité d'une percussion est l'importante vitesse de débattement qu'elle génère au niveau des roues. L'obstacle peut être de faible amplitude (nid de poule peu profond par exemple) mais il est génère un choc, car les roues débattent à grande vitesse.

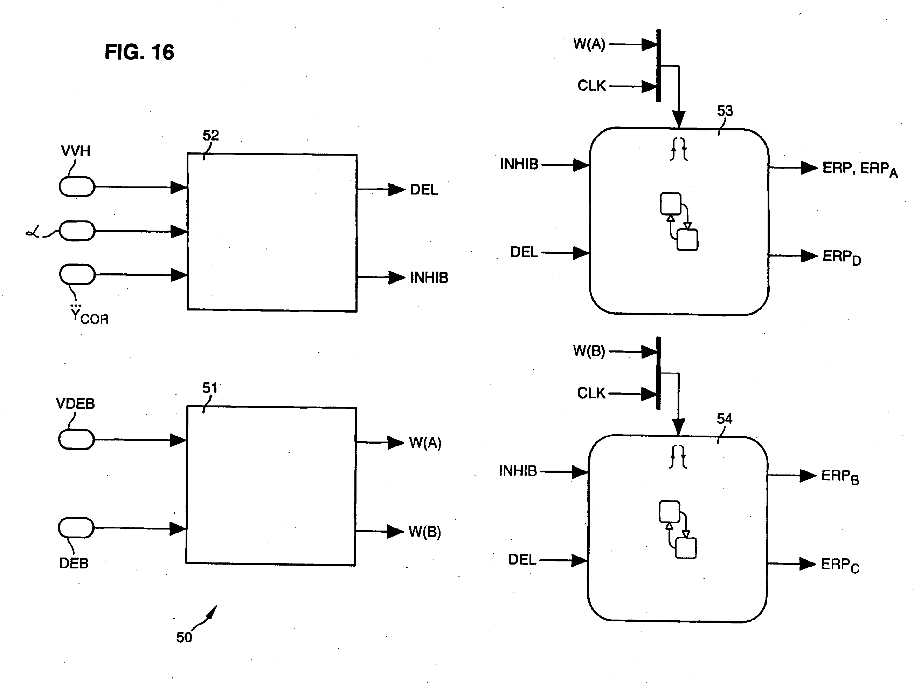

A la figure 16, un estimateur 50 est prévu pour calculer un état de consigne ou loi d'amortissement de consigne ERP en cas de détection d'une percussion. Cet estimateur 50 reçoit en entrée :

- les débattements DEB(A), DEB(B) des roues avant A, B, fournis par les capteurs CAP-DEB de débattements,
- les vitesses de débattement VDEB(A), VDEB(B) des roues avant A, B, ,
- la vitesse VVH mesurée du véhicule,
- l'accélération transversale corrigée $\ddot{Y}_{COR}$,
- le coefficient $\alpha$ de pondération des premiers efforts $F_{z1}$, $F_{\theta1}$ et $F_{\varphi1}$ de confort et des deuxièmes efforts $F_{z2}$, $C_{\theta2}$ et $C_{\varphi2}$ de comportement.

La détection et le traitement des percussions s'effectuent indépendamment sur les roues gauche ou droite du véhicule. Si une percussion n'est détectée que sur la roue avant droit, alors le traitement des percussions ne sera activé que sur les roues du côté droit. Si une percussion n'est détectée que sur la roue avant gauche, alors le traitement des percussions ne sera activé que sur les roues du côté gauche.

L'estimateur 50 comporte :

- un module 51 de détection des percussions en fonction des débattements DEB et des vitesses VDEB de débattement,
- un module 52 de calcul d'un retard d'activation et d'un signal d'inhibition de traitement en fonction de la vitesse VVH du véhicule, de l'accélération transversale corrigée $\ddot{Y}_{COR}$ et du coefficient $\alpha$ de pondération.
- un module 53 de traitement des percussions du côté gauche,
- un module 54 de traitement des percussions du côté droit.

Détection des percussions

Un seuil SDP de détection de percussion est prédéfini dans le module 51. Lorsque, d'un côté du véhicule, par exemple dans ce qui suit le côté gauche, la vitesse de débattement VDEB(A) de la roue avant est supérieure en valeur absolue au seuil SDP de détection de percussion, un signal logique booléen P de détection probable de percussion est mis à 1, alors que si la vitesse de débattement VDEB(A) de la roue avant est inférieure ou égale en valeur absolue au seuil SDP de détection de percussion, le signal P de détection probable de percussion est à 0.

Afin d'optimiser le réglage, ce seuil SDP de détection de percussion est paramétré en fonction de la vitesse VVH du véhicule. On extrait de la table, courbe ou cartographie préenregistrée donnant le seuil de détection de percussion en fonction de la vitesse du véhicule, la valeur du seuil SDP de détection de percussion correspondant à la vitesse VVH du véhicule, par exemple par interpolation linéaire. A vitesses VVH très élevées par exemple, n'importe quel obstacle risque de générer une vitesse de débattement importante. A vitesses de véhicule élevées, il est donc nécessaire d'augmenter le seuil SDP de détection des percussions, afin de ne pas faire de traitement intempestif sur des sollicitations route ne correspondant pas à des percussions proprement dites.

Les vitesses de débattement, après un choc, peuvent osciller pendant quelques instants et risquent de dépasser plusieurs fois le seuil SDP à cause d'un seul choc de départ. Une temporisation TEMP déclenchée au premier dépassement du seuil SDP permet alors d'éviter de détecter plusieurs percussions pour un même franchissement d'obstacle.

Par exempte, une percussion détectée n'est validée que si elle est détectée pendant plus d'une durée prescrite DDP de détection de percussion, par exemple de 15 millisecondes.

Inhibition de la détection de percussion

Un signal S = SIDP d'inhibition de détection de percussion est généré comme étant égal à 1 pour inhiber la détection de percussion, lorsque au moins l'un des débattements avant DEB(A), DEB(B) devient inférieur à un premier seuil SDEB1 de butée, ou supérieur à un deuxième seuil SDEB2 de butée, et est égal à 0 sinon.

En effet, lors de forts mouvements de caisse, le débattement peut être tel que le train ira au contact de ses butées. L'écrasement des butées génère une vitesse de débattement importante, susceptible d'activer la fonction de traitement des percussions. Si cette fonction est activée dans cette situation de vie, elle imposera des états d'amortissement souple à l'arrière pendant un certain temps. Le problème est que si l'état d'amortissement passe en souple lorsque le train est en contact avec ses butées, les mouvements de caisse ne seront pas du tout freinés, des phénomènes de pompage excessif de l'essieu arrière apparaîtront. On inhibera donc la détection des percussions dans cette situation de vie. Pour cela, on surveille la valeur des débattements de roue. Lorsque ces débattements dépassent le seuil paramétrable SDEB1 ou SDEB2 (qui correspond à la course de débattement possible de la roue, préalablement au contact avec les butées d'attaque ou de détente), la détection des percussions est inhibée.

Le module 51 génère un signal W de validation de percussion à partir du signal P de détection probable de percussion, de la manière suivante.

Un signal Q de percussion validable et le signal W de validation de percussion sont générés au cycle n de calcul en fonction de leurs valeurs au cycle n-1 précédent et d'un signal T de temporisation TEMP écoulée, calculé en fonction du signal P de détection probable de percussion.

Le signal Q de percussion validable est initialisé à 1.

Un signal T de temporisation TEMP écoulée est mis à 1, si le signal P de détection probable de percussion est resté à 0 depuis son dernier front descendant pendant un temps supérieur à la temporisation TEMP. Le signal T de temporisation TEMP écoulée est sinon à 0.

Le signal Q de percussion validable est égal à :

$$Q' = \overline{Q}.\overline{W}.T + \overline{Q}.W.T + Q.\overline{W}.\overline{T} + Q.\overline{W}.T$$

où Q' désigne l'état au cycle suivant, et désigne le complément.

Le signal W de validation de percussion est alors mis à 1, signifiant qu'une percussion est bien détectée, lorsque à la fois

- le signal P de détection probable de percussion est à 1 pendant un nombre prescrit de cycles consécutifs, par exemple 3 cycles formant la durée DDP,
- le signal Q de percussion validable est à 1,
- le signal S = SIDP d'inhibition de détection de percussion est à 0, indiquent une non inhibition,
- l'accélération transversale corrigée $\ddot{Y}_{COR}$ est inférieure en valeur absolue à un seuil prescrit SY d'inhibition de l'accélération transversale corrigée : $|\ddot{Y}_{COR}| < SY$,

soit

$$W = P . Q . \overline{S} . (|\ddot{Y}_{COR}| < SY)$$

Retard de franchissement et inhibition pour les vitesses faibles

Afin d'améliorer le passage de la percussion sur les roues arrière, il est impératif que celles-ci franchissent l'obstacle avec un état d'amortissement souple. Pour cela, la fonction de traitement des percussions doit estimer l'instant précis du franchissement des roues arrière.

Lorsque la percussion est détectée sur les roues avant, c'est-à-dire lorsque le signal W de validation de percussion est mis à 1, le module 52 calcule le retard DEL de franchissement des roues arrière par rapport aux roues avant d'une manière générale de la manière suivante :

$$DEL = ( e / VVH ) - TR$$

où TR est un temps prescrit de réaction correspond au temps nécessaire aux actionneurs pour passer en état souple.

Si la vitesse VVH du véhicule est trop faible (inférieure ou égale à un seuil SVVH de vitesse du véhicule) ou si le coefficient $\alpha$ de pondération des premiers efforts $F_{z1}$, $F_{\theta1}$ et $F_{\varphi1}$ de confort et des deuxièmes efforts $F_{z2}$, $C_{\theta2}$ et $C_{\varphi2}$ de comportement est trop grand (supérieur ou égal à un seuil SCOEFF de coefficient de pondération), un signal d'inhibition SINV pour les vitesses faibles est mis à 1, et le retard DEL de franchissement est égal à une valeur prescrite maximum DELMAX.

Traitement des roues arrière

Dès que la percussion est détectée sur la roue avant gauche, une temporisation est lancée pendant le retard DEL de franchissement dans le module 53 de traitement des roues gauche. A la fin de cette temporisation, un état ERP d'amortissement de consigne souple et prescrit est imposé pour la roue arrière gauche du véhicule pendant une durée de traitement prescrite, pour que la percussion soit convenablement amortie par l'amortisseur de la roue arrière gauche. L'état d'amortissement à appliquer et la durée du traitement sont des données de mise au point paramétrables.

Traitement des roues avant

Dès que la percussion est détectée sur la roue avant gauche, le traitement sur la roue avant gauche ne peut être qu'un post-traitement. Celui-ci a pour objectif de limiter les ébranlements de train et de freiner les mouvements et rebonds de roue juste après l'obstacle.

Le post-traitement des roues avant consiste à imposer un état ERP d'amortissement de consigne ferme et prescrit pendant une durée de traitement prescrite. L'état d'amortissement à appliquer et la durée du traitement sont des données de mise au point paramétrables.

Post-traitement des roues avant et arrière

A la fin du traitement des roues arrière, on effectue alors un post-traitement de la percussion, sur les roues avant et sur les roues arrière. Pour freiner les mouvements de la roue dus au passage de l'obstacle, on impose un état ERP d'amortissement de consigne ferme et prescrit pour les roues arrière pendant une durée de post-traitement prescrite. L'état d'amortissement à appliquer et la durée du post-traitement des roues avant et arrière sont des données de mise au point paramétrables.

Inhibition du traitement

Les modules 53, 54 de traitement des percussions produisent des états imposés ERP d'amortissement des percussions, qui peuvent être prépondérants par rapport aux états ER d'amortissement demandés par les fonctions SkyHook et RoadHook.

Dans certaines situations de vie, ces états imposés ERP d'amortissement des percussions peuvent soit dégrader le confort du véhicule, soit s'avérer dangereux pour sa sécurité. C'est pourquoi le traitement des percussions est soumis à d'éventuelles inhibitions.

Lorsque le véhicule se déplace sur une route très dégradée, avec des sollicitations à haute fréquence (type route pavée), les vitesses de débattement des roues atteindront des niveaux élevés, susceptibles d'activer la fonction de traitement des percussions.

Si cette fonction est activée, elle imposera des états ERP de consigne d'amortissement des percussions, qui seront fermes pendant un temps déterminé sur les quatre roues. Sur une route pavée, ces états ERP d'amortissement fermes génèreront de l'inconfort pendant tout le post-traitement. La stratégie idéale sur des pavés ne générant pas de mouvements de caisse est en effet de rester en loi la plus souple possible.

On inhibera donc le traitement des percussions dès qu'un nombre déterminé, par exemple trois, percussions seront détectées en un court laps de temps déterminé, par exemple sur le signal W de validation de percussion. L'inhibition résultante aura une durée paramétrable.

Un autre cas possible d'inhibition du traitement est les vitesses VVH trop faibles du véhicule. D'autre part, lorsque la logique de synthèse de l'AMVAR se trouve en mode « comportement », c'est-à-dire lorsque la logique Road-Hook est activée et que le coefficient $\alpha$ de pondération est égal à 1 ou est proche de 1, on inhibe également le traitement des percussions (voir supra SINV).

Un autre cas d'inhibition du traitement peut être prévu pour la sécurité du véhicule. Lors des fortes sollicitations de la part conducteur, ou lorsque le véhicule est installé en virage stabilisé, imposer un état d'amortissement souple peut s'avérer dangereux pour la tenue de route. Dans ces conditions de roulage, la logique RoadHook optimisant le comportement du véhicule ne doit surtout pas être désactivée par d'autres fonctions. Cela relève de la sécurité des personnes. On surveille donc d'une part l'accélération latérale du véhicule : lorsque celle-ci dépasse un certain seuil paramétrable, on inhibe le traitement des percussions, ainsi que cela est prévu ci-dessus, lorsque l'accélération transversale corrigée $\ddot{Y}_{COR}$ est supérieure ou égale en valeur absolue au seuil prescrit SY d'inhibition de l'accélération transversale corrigée : $|\ddot{Y}_{COR}| \geq SY$ .

Le module 52 génère un signal INHIB d'inhibition de traitement des percussions, égal à 1 pour inhiber le traitement des percussions par les modules 53 et 54, lorsque au moins l'une et/ou l'autre des conditions suivantes est réalisée :

- un nombre prédéterminé de percussions, représentées par des front montant du signal W de validation de percussion est détecté en une durée prédéterminée ;
- le signal d'inhibition SINV pour les vitesses faibles est mis à 1, pour indiquer que la vitesse VVH du véhicule est trop faible ou que le coefficient $\alpha$ de pondération des premiers efforts $F_{z1}$, $F_{\theta 1}$ et $F_{\varphi 1}$ de confort et des deuxièmes efforts $F_{z2}$, $C_{\theta 2}$ et $C_{\varphi 2}$ de comportement est trop grand, pour indiquer que la logique Roadhook est en vigueur,

-

$$\left|\ddot{Y}_{COR}\right| \geq SY\,.$$

Le retard DEL de franchissement et le signal INHIB d'inhibition de traitement des percussions sont envoyées à deux entrées de chacun des modules 53, 54 de traitement. Chacun des modules 53, 54 comporte également une entrée CLK d'horloge, combinée par un opérateur logique ET avec respectivement l'entrée W(A) du signal W de validation de percussion de la roue A avant gauche et l'entrée W(B) du signal W de validation de percussion de la roue B avant droite, pour indiquer la fréquence de calcul des modules 53 et 54. Une entrée d'horloge est également prévue pour chacun des blocs, estimateurs et modules représentés aux figures.

Dans le cas où l'estimateur 50 est prévu, celui-ci fournit les états de consigne ERP en cas de détection d'une percussion, c'est-à-dire pour les roues A, B, C, D, les états de consigne $ERP_A$, $ERP_B$, $ERP_C$, $ERP_D$, à une autre entrée du module 28 de commande.

Le module 28 de commande calcule à partir de ces états les états $ER_A$, $ER_B$, $ER_C$, $ER_D$ de commande des amortisseurs des roues A, B, C, D, en prenant pour chaque roue le maximum des états $ER_C$, ERP d'amortissement de consigne et de l'état minimum global ERM d'amortissement :

$$ER_A = \max (ER_{CA}, ERP_A, ER_{MA})$$

$$ER_B = \max (ER_{CB}, ERP_B, ER_{MB})$$

$$ER_C = \max (ER_{CC}, ERP_C, ER_{MC})$$

$$ER_D = \max (ER_{CD}, ERP_D, ER_{MD})$$

Prise en compte des grandes amplitudes de mouvement (logique des grands débattements)

Une détection des grands débattements et des grandes vitesses de débattement des roues avant ou des roues arrière est prévue. L'objectif est de détecter au plus tôt les obstacles qui peuvent générer des grandes amplitudes de mouvement de caisse, en marche avant et/ou en marche arrière. La détection de ces situations de vie est prévue pour traiter les obstacles sollicitant simultanément les roues droite et gauche du train avant ou arrière. Ces obstacles peuvent être détectés en compression pour les dos d'âne ou en détente pour les saignées ou creux de taille importante. En marche avant, ce genre d'obstacles va générer sur les roues avant de fortes amplitudes de débattements et de vitesses de débattement.

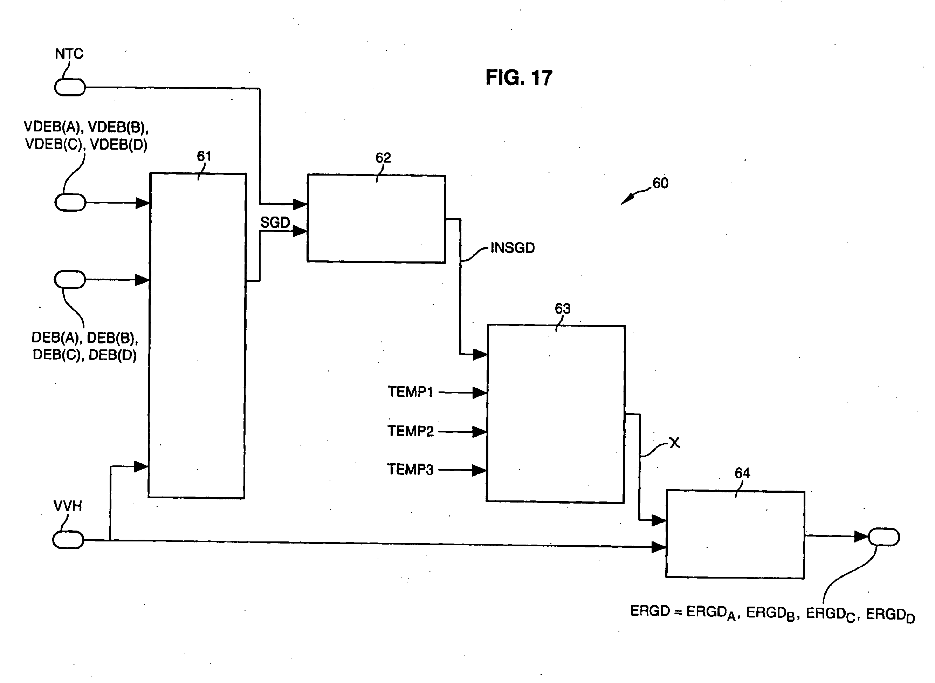

A la figure 17, un estimateur 60 est prévu pour calculer un état de consigne ou loi d'amortissement de consigne ERGD en cas de détection d'une grande amplitude de mouvement de roue. Cet estimateur 60 reçoit en entrée :

- les débattements avant DEB(A), DEB(B) des roues avant A, B, et les débattements DEB(C), DEB(D) des roues arrière C, D, qui sont par exemple ceux filtrés DEBF(A), DEBF(B), DEBF(C), DEBF(D), fournis par le filtre 13 à partir des débattements DEB(A), DEB(B), DEB(C), DEB(D) fournis par les capteurs CAP-DEB de débattements,
- les vitesses de débattement avant VDEB(A), VDEB(B) des roues avant A, B, et les vitesses de débattement DEB(C), DEB(D) des roues arrière C, D, fournies par le module dérivateur DER,
- la vitesse VVH mesurée du véhicule,
- le niveau NTC de tressautement de la caisse, fourni par l'estimateur 24.

L'estimateur 60 met en oeuvre une logique de détection et de traitement des grandes amplitudes de mouvement et comporte :

- un module 61 de détection des grandes amplitudes de mouvement de roue,
- un module 62 de validation et d'inhibition de la détection des grandes amplitudes de mouvement de roue,
- un module 63 de calcul d'un coefficient $\chi$ de traitement des grandes amplitudes de mouvement de roue,
- un module 64 de calcul de l'état de consigne ou loi d'amortissement de consigne ERGD pour les grandes amplitudes de mouvement de roue.

Détection des grandes amplitudes de mouvement de roue

Un premier seuil SDGD de détection de grands débattements et un deuxième seuil SVGD de détection de grandes vitesses de débattement sont prédéfinis dans le module 61.

Lorsqu'à la fois le débattement DEBF(A) de la roue avant gauche dépasse le premier seuil SDGD de détection de grands débattements, le débattement DEBF(B) de la roue avant droite dépasse le premier seuil SDGD de détection de grands débattements, la vitesse de débattement VDEB(A) de la roue avant gauche dépasse le deuxième seuil SVGD de détection de grandes vitesses de débattement et la vitesse de débattement VDEB(B) de la roue avant droite dépasse le deuxième seuil SVGD de détection de grandes vitesses de débattement, alors un premier signal SDGDAV de détection de grands mouvements avant est mis à 1 pour indiquer la détection d'une grande amplitude de mouvement de roue sur les roues avant.

Il en est de même pour un deuxième signal SDGDAR de détection de grands mouvements arrière, qui est mis à 1 pour indiquer la détection d'une grande amplitude de mouvement de roue sur les roues arrière, lorsque les quatre conditions de dépassement à la fois sont remplies avec les débattements DEBF(D) et DEBF(C) et les vitesses de débattement VDEB(D) et VDEB(C) pour les roues arrière.

Les premier et deuxièmes seuils SDGD et SVGD peuvent être différents pour l'avant et l'arrière. Le dépassement des premier et/ou deuxièmes seuils SDGD, SVGD peut être le passage du débattement et/ou de la vitesse de débattement sous le seuil SDGD, SVGD inférieur, par exemple en détente des amortisseurs, et/ou le passage du débattement et/ou de la vitesse de débattement au-dessus d'un autre seuil SDGD supérieur au seuil SDGD, SVGD inférieur, par exemple en attaque des amortisseurs.

Un signal SGD de détection de grands mouvements est mis à 1 pour indiquer la détection d'une grande amplitude de mouvement de roue sur les roues, lorsque le premier signal SDGDAV de détection de grands mouvements avant et/ou le deuxième signal SDGDAR de détection de grands mouvements arrière détecte à 1. Le signal SGD de détection de grands mouvements est fourni par le module 61 de détection au module 62 de validation et d'inhibition.

Pour plus de précision et pour éviter des traitements intempestifs, le premier seuil SDGD de détection de grands débattements et le deuxième seuil SVGD de détection de grandes vitesses de débattement sont paramétrés en fonction de la vitesse VVH du véhicule. Par exemple, pour chacun de ces seuils SDGD, SVGD, on extrait de la table, courbe ou cartographie préenregistrée donnant le seuil de détection en fonction de la vitesse du véhicule, la valeur du seuil SDGD, SVGD de détection correspondant à la vitesse VVH du véhicule, par exemple par interpolation linéaire.

Inhibition de la détection des grands mouvements de roue

Un signal INSGD de validation ou d'inhibition de détection de grande amplitude de mouvement de roues est généré par le module 62, comme étant égal à 0 pour inhiber la détection, lorsque l'une ou plusieurs des conditions suivantes sont réalisées :

- le coefficient $\alpha$ de pondération des premiers efforts $F_{z1}$, $F_{\theta1}$ et $F_{\varphi1}$ de confort et des deuxièmes efforts $F_{z2}$, $C_{\theta2}$ et $C_{\varphi2}$ de comportement est trop grand, (supérieur à un seuil SCOEFF2 de coefficient de pondération, par exemple nul) pour indiquer que la logique Roadhook est au moins partiellement en vigueur,
- le niveau NTC de tressautement est supérieur à un seuil SNTC prescrit de niveau de tressautement.

Si aucune des conditions d'inhibition n'est réalisée et si le signal SGD de détection de grands mouvements est 1 pour indiquer la détection d'une grande amplitude de mouvement des roues, le signal INSGD prend l'état 1 de validation de la détection de grande amplitude de mouvement de roues.

Dans le premier cas d'inhibition (coefficient $\alpha$ de pondération), sous sollicitations du conducteur, il est plus sûr de laisser la logique Roadhook agir et réagir aux sollicitations routières pour améliorer la tenue de caisse et notamment pour maximiser le contact de la roue avec le sol. Si la logique Roadhook veut transmettre une consigne de passage en états d'amortissement souple, il ne faut pas l'en empêcher. C'est pourquoi on inhibe la détection et le traitement des grandes amplitudes de mouvement lorsque la logique Roadhook est active.

Dans le deuxième cas d'inhibition (niveau NTC de tressautement), le traitement des grandes amplitudes de mouvement peut être pénalisant pour le confort vibratoire, car un état d'amortissement trop ferme transfèrera dans la caisse les irrégularités de la route, et ne filtrera pas donc pas les tressautements et les trépidations engendrées par cette route. C'est pourquoi il est préférable d'inhiber la logique de traitement des grandes amplitudes de mouvement, lorsque la route est dégradée. On utilise une logique de reconnaissance de l'état de la route, basée sur des filtrages passe-bande des débattements DEB. Ainsi que cela est indiqué ci-dessus pour le calcul du niveau NMC de basses fréquences et du niveau NTC de tressautement, un filtrage autour du mode de caisse (autour du Hertz) et un filtrage dans la bande des tressautements (entre 3 et 8 Hz) sont utilisés pour caractériser l'état de la route (bonne route, route à bon revêtement mais générant des mouvements de caisse, route à revêtement dégradé mais plate, route à revêtement dégradé mais générant des mouvements de caisse). Pour l'inhibition, on utilise le niveau de tressautement calculé à partir du filtrage entre 3 et 8 Hz. Le seuil SNTC prescrit de niveau de tressautement est paramétrable. Ainsi, le compromis entre tenue de caisse et confort vibratoire est optimisé.

Traitement des grands mouvements de roues

L'estimateur 63 calcule, à partir du signal INSGD de validation ou d'inhibition de détection de grande amplitude de mouvement de roues, le coefficient $\chi$ de traitement des grandes amplitudes de mouvement de roue.

Le coefficient $\chi$ de traitement est une variable supérieure ou égale à 0 et inférieure ou égale à 1. Par défaut, le coefficient $\chi$ de traitement est à 0. Lorsque le signal INSGD passe de l'état 0 d'inhibition de détection de grande amplitude de mouvement de roues à l'état 1 de validation de grande amplitude de mouvement de roues, le coefficient $\chi$ de traitement augmente de 0 à 1 avec une pente de montée prescrite, par exemple paramétrable par une première temporisation TEMP1 en entrée du module 63. Le coefficient $\chi$ de traitement est ensuite maintenu à sa valeur maximum 1 pendant une durée prescrite, par exemple paramétrable par une deuxième temporisation TEMP2 en entrée du module 63, et redescend à 0 avec une pente de descente prescrite, par exemple paramétrable par une troisième temporisation TEMP3 en entrée du module 63.

Etats minimaux en cas de détection des grands mouvements de roues

Le module 64 reçoit le coefficient $\chi$ de traitement des grandes amplitudes de mouvement de roue et la vitesse VVH du véhicule et calcule en fonction de ceux-ci la loi d'amortissement de consigne ERGD en cas de détection d'une grande amplitude de mouvement de roue.

Le traitement des situations de grande amplitude de mouvement de roues est effectué à l'aide d'états ERGD d'amortissement de consigne minimaux.

Les différents paramètres intervenant dans le calcul du coefficient $\chi$ de traitement permettent de maîtriser exactement l'instant et le temps pendant lequel les états ERGD d'amortissement minimaux seront appliqués par le module 64.

Ces états minimaux ERGD sont paramétrables en fonction de la vitesse VVH du véhicule pour optimiser le compromis entre tenue de caisse et confort vibratoire quelle que soit la vitesse du véhicule : les états minimaux à utiliser sont par exemple moins élevés à 30 km/h pour le passage des dos d'âne qu'à vitesse plus élevée où une sollicitation de la route créant un grand débattement va nécessiter des états minimaux élevés. Les états minimaux ERGD peuvent également être calculés séparément pour les roues avant et pour les roues arrière.

Le calcul des états ERGD d'amortissement de consigne est par exemple effectué de la manière suivante :

- un état intermédiaire ERGD-INTER de grande amplitude de mouvement de roues (numéro de loi d'amortissement intermédiaire) est extrait d'une table ou courbe préenregistrée donnant cet état intermédiaire état intermédiaire en fonction de la vitesse du véhicule, la valeur ERGD-INTER de l'état intermédiaire de grande amplitude de mouvement de roues, correspondant à la vitesse VVH du véhicule, par exemple par interpolation linéaire.
- l'état ERGD d'amortissement de consigne de grande amplitude de mouvement de roues est alors égal à l'état intermédiaire ERGD-INTER d'amortissement, multiplié par le coefficient $\chi$ de traitement des grandes amplitudes de mouvement de roue, arrondi par exemple au numéro de loi d'amortissement le plus proche.

Dans le cas où l'estimateur 60 est prévu, celui-ci fournit les états d'amortissement de consigne ERGD en cas de détection d'une grande amplitude de mouvement de roue, c'est-à-dire pour les roues A, B, C, D, les états de consigne $ERP_A$, $ERP_B$, $ERP_C$, $ERP_D$, à une autre entrée du module 28 de commande.

Le module 28 de commande calcule à partir de ces états les états $ERGD_A$, $ERGD_B$, $ERGD_C$, $ERGD_D$ de commande des amortisseurs des roues A, B, C, D, en prenant pour chaque roue le maximum des états $ER_C$, $ERGD$ (et éventuellement ERP pour la prise en compte des percussions) d'amortissement de consigne et de l'état minimum global ERM d'amortissement :

$$ER_A = \max(ER_{CA}, ERGD_A, ER_{MA})$$

$$ER_B = \max(ER_{CB}, ERGD_B, ER_{MB})$$

$$ER_C = max \ (ER_{CC}, \ ERGD_C, \ ER_{MC})$$

$$ER_D = max \ (ER_{CD}, \ ERGD_D, \ ER_{MD})$$

**Revendications**

1. Dispositif de commande d'une suspension d'une caisse (2) de véhicule automobile sur ses roues (A), comportant un calculateur (CSS) comportant un moyen de calcul d'une grandeur (ER) de commande d'un actionneur (M) d'au moins un amortisseur (AM) variable de la suspension (S) en fonction d'un effort modal (F) de consigne de l'amortisseur, calculé en fonction d'au moins une vitesse modale de caisse estimée sur le véhicule, **caractérisé en ce que** le calculateur (CSS) comporte :

   - un premier moyen (21) de calcul d'un premier effort modal F1 de consigne de l'amortisseur en fonction d'au moins une vitesse modale absolue ($V_{mod}$) de caisse, estimée sur le véhicule,
   - un deuxième moyen (34) de calcul d'un deuxième effort modal F2 de consigne de l'amortisseur en fonction d'au moins une vitesse modale ($V_{mod2}$) relative de caisse par rapport au plan moyen des roues, estimée sur le véhicule,
   - un moyen (22) de détection d'au moins une sollicitation sur le véhicule,
   - un moyen (23) de calcul d'un coefficient $\alpha$ de pondération du premier effort F1 de consigne et du deuxième effort F2 de consigne, pour le calcul dudit effort modal F de consigne de l'amortisseur suivant la formule

$$F = (1- \alpha).F1 + \alpha.F2,$$

   où le coefficient $\alpha$ de pondération est supérieur ou égal à 0 et inférieur ou égal à 1, est normalement à 0 et prend la valeur 1 au moins lorsque la sollicitation détectée dépasse un seuil prescrit.

2. Dispositif de commande d'une suspension suivant la revendication 1, **caractérisé en ce qu'**il comprend un capteur (CAP-DEB) de débattement de la roue par rapport à la caisse (2), un moyen (10) de calcul de la vitesse (VDEB) de débattement de l'amortisseur en fonction du débattement de la roue correspondante, un moyen (22) de calcul d'une force (FA1) de consigne de l'amortisseur (AM) en fonction dudit au moins un effort modal (F) de consigne, et un moyen (22) de calcul de la grandeur (ER) de commande de l'actionneur (M) de l'amortisseur en fonction de cette force (FA1) de consigne et de la vitesse (VDEB) de débattement de la roue.

3. Dispositif de commande d'une suspension suivant l'une quelconque des revendications précédentes, **caractérisé en ce que** la grandeur (ER) de commande est une loi d'amortissement déterminée parmi une pluralité de lois (ER) d'amortissement différentes imposant la force (FA) de l'amortisseur en fonction de sa vitesse (VDEB) de débattement.

4. Dispositif de commande d'une suspension suivant la revendication 3, **caractérisé en ce qu'**il comprend un moyen (27) de calcul d'au moins une loi minimale (ERM) d'amortissement en fonction au moins de l'un parmi la vitesse (WH) du véhicule, l'accélération longitudinale corrigée, l'accélération transversale corrigée, le jerk transversal anticipé, et un moyen (28) de calcul de la grandeur (ER) de commande en prenant le maximum de la loi (ER) d'amortissement de consigne et de la au moins une loi minimale (ERM) d'amortissement.

5. Dispositif de commande d'une suspension suivant l'une quelconque des revendications précédentes, **caractérisé en ce que** le moyen (23) de calcul du coefficient $\alpha$ de pondération est apte à calculer le coefficient $\alpha$ de pondération en fonction d'au moins l'un parmi un jerk longitudinal anticipé $\dddot{X}$ un jerk transversal anticipé ($\dddot{Y}$), une accélération longitudinale corrigée ($\ddot{X}_{COR}$), une accélération transversale corrigée ($\ddot{Y}_{COR}$), une information (IS) de sportivité imposée par la position d'un bouton de commande de conduite sportive sur le tableau de bord du véhicule, pouvant être soit dans une position de conduite sportive, soit dans une position d'absence de conduite sportive.

6. Dispositif de commande d'une suspension suivant la revendication 4 ou 5, **caractérisé en ce qu'**il comprend un moyen de mesure de la vitesse (WH) du véhicule, un moyen de mesure (CAPL) de l'accélération longitudinale (ACCL) du véhicule, un moyen de mesure (CAP-P) d'une pression ($P_{MC}$) du maître cylindre de freinage, et un moyen (25) de calcul de l'accélération longitudinale corrigée ($\ddot{X}_{COR}$) en fonction de la vitesse (WH) mesurée du véhicule, d'une masse suspendue (MSUS) du véhicule, de l'accélération longitudinale mesurée (ACCL), de la pression ($P_{MC}$) du maître cylindre de freinage, et d'un couple moteur anticipé aux roues ($C_R$).

**7.** Dispositif de commande d'une suspension suivant la revendication 6, **caractérisé en ce qu'**il comprend un moyen (25) de calcul de l'accélération longitudinale corrigée ($\ddot{X}_{COR}$) est apte à calculer une accélération longitudinale anticipée $\ddot{X}_{ANT}$ en fonction de la vitesse (WH) mesurée du véhicule, de la masse suspendue (MSUS) du véhicule, de la pression ($P_{MC}$) du maître cylindre de freinage et du couple moteur anticipé aux roues ($C_R$), et à calculer l'accélération longitudinale corrigée ($\ddot{X}_{COR}$) selon la formule

$$\ddot{X}_{COR} \doteq ACCL + PH(\ddot{X}_{ANT} - ACCL)$$

où ACCL est l'accélération longitudinale mesurée, et PH($\ddot{X}_{ANT}$–ACCL) est la différence $\ddot{X}_{ANT}$ - ACCL, filtrée par un filtre passe-haut (PH) du moyen (25) de calcul de l'accélération longitudinale corrigée ($\ddot{X}_{COR}$),

**8.** Dispositif de commande d'une suspension suivant la revendication 7, **caractérisé en ce que** le moyen (25) de calcul de l'accélération longitudinale corrigée ($\ddot{X}_{COR}$) est apte à calculer l'accélération longitudinale anticipée $\ddot{X}_{ANT}$

- en extrayant d'une table ou courbe préenregistrée donnant l'effort de freinage du maître cylindre en fonction de la pression du maître cylindre, la valeur (EFR)0 de cet effort de freinage correspondant à la pression mesurée ($P_{MC}$) du maître cylindre,
- en calculant l'effort anticipé du moteur aux roues (EMR), égal au couple moteur anticipé aux roues ($C_R$) divisé par un rayon moyen préenregistré (Rmoy) des roues,
- en calculant un effort de traînée longitudinale ETR en fonction de la vitesse du véhicule VVH selon la formule :

$$ETR = COEF. \, (VVH)^2 + DEC$$

Où COEF est un coefficient préenregistré et DEC est un décalage préenregistré,
- en calculant l'effort longitudinal total (ELT) égal à la somme de l'effort (EFR) de freinage, de l'effort (EMR) anticipé du moteur aux roues et de l'effort (ETR) de traînée longitudinale,
- en calculant une masse totale (MTOT) du véhicule à partir de la masse suspendue (MSUS),
- en divisant l'effort longitudinal total (ELT) par la masse totale (MTOT) pour obtenir l'accélération longitudinale anticipée ($\ddot{X}_{ANT}$).

**9.** Dispositif de commande d'une suspension suivant l'une quelconque des revendications 4 à 8, **caractérisé en ce qu'**il comprend un moyen de mesure de la vitesse (WH) du véhicule, un moyen de mesure (CAP-ACCT) de l'accélération transversale (ACCT) du véhicule, et un moyen (26) de calcul d'une accélération transversale corrigée $\ddot{Y}_{COR}$, en fonction d'une accélération transversale anticipée $\ddot{Y}_{ANT}$, calculée en fonction d'une masse suspendue (MSUS) du véhicule, d'une valeur de répartition de masse (RMAvAr) entre l'avant et l'arrière du véhicule, de la vitesse VVH mesurée du véhicule, d'un angle δ de rotation du volant de direction, et de l'accélération transversale mesurée (ACCT) du véhicule, selon la formule :

$$\ddot{Y}_{ANT} = \frac{D.\delta.VVH^2}{e(1 + K.VVH^2)}$$

où D est la démultiplication prédéterminée du volant de direction du véhicule, e est l'empattement prédéterminé du véhicule et K est une constante de gain de surbraquage, calculée en fonction de la valeur de répartition de masse (RMAvAr) entre l'avant et l'arrière et de la masse suspendue (MSUS).

**10.** Dispositif de commande d'une suspension suivant la revendication 9, **caractérisé en ce que** le moyen (26) de calcul de l'accélération transversale corrigée $\ddot{Y}_{COR}$ est apte à calculer l'accélération transversale corrigée $\ddot{Y}_{COR}$

selon la formule

$$\ddot{Y}_{COR} = ACCT + PH2(\ddot{Y}_{ANT} - ACCT)$$

où ACCT est l'accélération longitudinale mesurée, et PH2($\ddot{Y}_{ANT}$- ACCT) est la différence $\ddot{Y}_{ANT}$- ACCT, filtrée par un filtre passe-haut (PH2) du moyen (26) de calcul de l'accélération transversale corrigée $\ddot{Y}_{COR}$

**11.** Dispositif de commande d'une suspension suivant l'une quelconque des revendications 5 à 10, **caractérisé en ce que**
le moyen (22) de détection de sollicitations est apte à calculer au moins un signal de détection de sollicitation prenant un état de présence d'une sollicitation lorsque au moins l'un parmi le jerk longitudinal anticipé ($\dddot{X}$), le jerk transversal

anticipé ($\dddot{Y}$), l'accélération longitudinale corrigée ($\ddot{X}_{COR}$) et l'accélération transversale corrigée ($\ddot{Y}_{COR}$) dépassent

un seuil prescrit,
le moyen (23) de calcul du coefficient $\alpha$ de pondération étant apte à faire passer à 1 le coefficient $\alpha$ de pondération
lorsque le signal de détection de sollicitation est à l'état de présence d'une sollicitation.

**12.** Dispositif de commande d'une suspension suivant l'une quelconque des revendications 5 à 10, **caractérisé en ce que**
le moyen (22) de détection de sollicitations est apte à calculer au moins un signal de détection de sollicitation parmi :

- un signal (SSOLL) principal de détection de sollicitations longitudinales, prenant un état de présence d'une sollicitation lorsque le module du jerk longitudinal anticipé $\left(\dddot{X}\right)$ dépasse un seuil prescrit en fonction de l'information (IS) de sportivité ou lorsque l'accélération longitudinale corrigée ($\ddot{X}_{COR}$) dépasse un seuil prescrit
en fonction de l'information (IS) de sportivité, et un état d'absence de sollicitations sinon,
- un deuxième signal (SL2) de détection de sollicitations longitudinales, prenant un état de présence d'une
sollicitation lorsque le signal principal (SSOLL) de détection de sollicitations longitudinales est à l'état de présence d'une sollicitation et lorsque le module du jerk longitudinal anticipé $\left(\dddot{X}\right)$ dépasse un autre seuil préenregistré, et un état d'absence de sollicitations sinon,
- un troisième signal (SL3) de détection de sollicitations longitudinales, prenant un état de présence de sollicitations lorsque le signal principal (SSOLL) de détection de sollicitations longitudinales est à l'état de présence
d'une sollicitation et lorsque la variation d'accélération longitudinale corrigée ($\ddot{X}_{COR}$) dépasse un seuil déterminé,
et un état d'absence de sollicitations sinon,
- un signal principal (SSOLT) de détection de sollicitations transversales, prenant un état de présence d'une sollicitation lorsque le module du jerk transversal anticipé $\left(\dddot{Y}\right)$ dépasse un seuil prescrit en fonction de l'information (IS) de sportivité ou lorsque l'accélération transversale corrigée ($\ddot{Y}_{COR}$) dépasse un seuil prescrit
en fonction de l'information (IS) de sportivité, et un état d'absence de sollicitations sinon,
- un quatrième signal (ST4) de détection de sollicitations transversales, prenant un état de présence d'une
sollicitation lorsque le signal principal (SSOLT) de détection de sollicitations transversales est à l'état de présence d'une sollicitation et lorsque le module du jerk transversal anticipé $\left(\dddot{Y}\right)$ dépasse un seuil préenregistré, et un état d'absence de sollicitations sinon,
- un cinquième signal (ST5) de détection de sollicitations transversales, prenant un état d'absence de sollicitations lorsque le signal principal (SSOLT) de détection de sollicitations transversales est à l'état de présence
d'une sollicitation et lorsque la variation d'accélération transversale corrigée ($\ddot{Y}_{COR}$) dépasse un seuil déterminé,
et un état d'absence de sollicitations sinon,

le moyen (23) de calcul du coefficient $\alpha$ de pondération étant apte à augmenter à partir de 0 le coefficient $\alpha$ de
pondération, lorsque ledit signal de détection de sollicitation passe de l'état d'absence de sollicitations à l'état de
présence d'une sollicitation.

**13.** Dispositif de commande d'une suspension suivant la revendication 12, **caractérisé en ce que** le moyen (23) de calcul du coefficient $\alpha$ de pondération est apte à calculer un coefficient ($\alpha_{INTER}$) de pondération intermédiaire par

- initialisation (S10) à 0,
- mise (S11) à 1 du coefficient $\alpha_{INTER}$ de pondération intermédiaire sur chaque passage du signal (SSOL, SL2, SL3, ST4, ST5) de détection de sollicitation de l'état d'absence de sollicitations à l'état de présence d'une sollicitation,
- maintien (S12) à 1 du coefficient $\alpha_{INTER}$ de pondération intermédiaire pendant un temps mort (TMORT) préenregistré après chacun de ces passages,
- décroissance (S13) du coefficient $\alpha_{INTER}$ de pondération intermédiaire, pendant un temps (TMOD) de modulation après ce temps mort (TMORT) jusqu'à 0,

un signal logique (SSOL) de sollicitation du conducteur prenant la valeur 1, lorsque le signal (SSOLL) principal de détection de sollicitations longitudinales et/ou le signal principal (SSOLT) de détection de sollicitations transversales prend un état de présence d'une sollicitation,
un signal logique limité (SSOL$_{LIMIT}$) de sollicitation du conducteur étant calculé en filtrant le signal logique (SSOL) de sollicitation du conducteur dans un limiteur de pente négative, pour qu'il passe de 1 à 0 au minimum en le temps (TMOD) de modulation,
le moyen (23) de calcul du coefficient $\alpha$ de pondération est apte à calculer le coefficient $\alpha$ de pondération en multipliant le coefficient $\alpha_{INTER}$ de pondération intermédiaire par le signal logique limité (SSOL$_{LIMIT}$) de sollicitation du conducteur.

**14.** Dispositif de commande d'une suspension suivant l'une quelconque des revendications 5 à 12, **caractérisé en ce qu'**il comprend un moyen de mesure d'une pression de maître cylindre de freinage, un moyen (33) de calcul du jerk longitudinal anticipé ($\dddot{X}$), apte à calculer le jerk longitudinal anticipé ($\dddot{X}$) en fonction de la pression de maître cylindre de freinage, d'un couple moteur anticipé aux roues et d'une masse suspendue (MSUS) du véhicule.

**15.** Dispositif de commande d'une suspension suivant la revendication 14, **caractérisé en ce que** le moyen (33) de calcul du jerk longitudinal anticipé ($\dddot{X}$) est apte à extraire d'une table ou courbe préenregistrée donnant un effort de freinage du maître cylindre en fonction de la pression du maître cylindre, la valeur (EFR) de cet effort de freinage correspondant à la pression ($P_{MC}$) du maître cylindre,

le moyen (33) de calcul du jerk longitudinal anticipé $(\dddot{X})$ comprend un filtre passe-bas de l'effort (EFR) de freinage, et un dérivateur de l'effort (EFR) de freinage ainsi filtré pour obtenir la dérivée $\dot{E}_{FRF}$ de l'effort (EFR) de freinage filtré,

le moyen (33) de calcul du jerk longitudinal anticipé $(\dddot{X})$ est apte à calculer un effort anticipé du moteur aux roues (EMR), égal au couple moteur anticipé aux roues ($C_R$) divisé par un rayon moyen (Rmoy) préenregistré des roues, le moyen (33) de calcul du jerk longitudinal anticipé $(\dddot{X})$ comprend un filtre passe-bas de cet effort (EMR) anticipé du moteur aux roues, et un dérivateur de l'effort (EMR) anticipé du moteur ainsi filtré pour obtenir la dérivée $\dot{E}_{MRF}$ de l'effort (EMR) du moteur filtré,

le jerk longitudinal anticipé $\dddot{X}$ étant égal à

$$\dddot{X} = \frac{\dot{E}_{FRF} + \dot{E}_{MRF}}{MTOT}$$

où MTOT est la masse totale MTOT du véhicule, prédéterminée.

**16.** Dispositif de commande d'une suspension suivant la revendication 15, **caractérisé en ce qu'**il comprend un moyen de mesure de la vitesse (VVH) du véhicule, un moyen de calcul de la vitesse $\omega_{MOT}$ de rotation du moteur à la vitesse (VVH) du véhicule et un moyen (40) de calcul du couple moteur anticipé aux roues $C_R$ selon la formule :

$$C_R = C_M \cdot R_{EMBR}(i),$$

avec $R_{EMBR}(i) = \omega_{MOT}/\omega_{ROUE}$
Où $R_{EMBR}(i)$ est le rapport d'embrayage ayant le numéro i, $\omega_{ROUE}$ est la vitesse de rotation des roues, $C_M$ est un couple moteur prédéterminé.

**17.** Dispositif de commande d'une suspension suivant l'une quelconque des revendications 4 à 16, **caractérisé en ce qu'**il comprend un moyen (32) de calcul du jerk transversal anticipé $\left(\dddot{Y}\right)$, qui est apte à calculer le jerk transversal anticipé $\dddot{Y}$ en fonction de la masse suspendue (MSUS), d'une valeur de répartition de masse (RMAvAr) entre l'avant et l'arrière, de la vitesse VVH du véhicule, et d'une vitesse de rotation $\dot{\delta}$ du volant de direction selon la formule :

$$\dddot{Y} = \frac{D\dot{\delta}.VVH^2}{e(1 + K.VVH^2)}$$

où D est la démultiplication prédéterminée du volant de direction du véhicule, e est l'empattement prédéterminé du véhicule et K est une constante de gain de surbraquage, calculée en fonction de la valeur de répartition de masse (RMAvAr) entre l'avant et l'arrière et de la masse suspendue (MSUS).

**18.** Dispositif de commande d'une suspension suivant l'une quelconque des revendications 6 à 10, 13 à 17, **caractérisé en ce qu'**il comprend :

- un moyen de mesure de la vitesse (VVH) du véhicule,
- pour chaque roue (A, B, C, D), un capteur (CAP-DEB) de débattement de la roue par rapport à la caisse (2),
- un moyen (20) de calcul d'une assiette statique avant (ASav) et d'une assiette statique arrière (ASar) du véhicule en fonction des mesures (DEBF) de débattement, fournies par les capteurs (CAP-DEB) de débattement,
- un moyen (20) de calcul d'une masse dynamique apparente avant (MDAAV) et d'une masse dynamique apparente arrière (MDAAR), en fonction des mesures de débattement (DEB), fournies par les capteurs (CAP-DEB) de débattement,
- un moyen (20) de calcul d'un biais aérodynamique avant (BAAV) et d'un biais aérodynamique arrière (BAAR), en fonction de la vitesse du véhicule (VVH),
- un moyen (20) de calcul de la masse suspendue (MSUS) du véhicule et d'une valeur de répartition de masse (RMAvAr) entre l'avant et l'arrière du véhicule, en fonction de la masse dynamique apparente avant (MDAAV), de la masse dynamique apparente arrière (MDAAR), du biais aérodynamique avant (BAAV) et du biais aérodynamique arrière (BAAR).

**19.** Dispositif de commande d'une suspension suivant la revendication 18, **caractérisé en ce que** le moyen (20) de calcul de l'assiette statique avant (ASav) et de l'assiette statique arrière (ASar) du véhicule est apte à calculer l'assiette statique avant (ASav), respectivement arrière (ASar), comme étant le débattement moyen (DEBAVMOY) des débattements (DEB) des roues avant (A, B), respectivement arrière (C, D), filtré par un filtre passe-bas, débattement moyen filtré auquel est ensuite rajoutée une constante de décalage d'assiette avant, respectivement arrière.

**20.** Dispositif de commande d'une suspension suivant l'une quelconque des revendications 18 et 19, **caractérisé en ce que** le moyen (20) de calcul des masses dynamiques apparentes avant et arrière (MDAAV, MDAAR) comprend des moyens pour

- calculer le débattement relatif avant, respectivement arrière, égal au débattement moyen des débattements (DEB) des roues avant (A, B), respectivement arrière (C, D), auquel est ensuite rajoutée une constante de décalage avant, respectivement arrière,
- extraire un effort dynamique de flexion de ressort avant EDFAV, respectivement arrière EDFAR, à partir d'une table ou courbe enregistrée donnant cet effort EDFAV en fonction du débattement relatif avant,
- calculer la masse dynamique apparente avant MDAAV, respectivement arrière MDAAR, par la formule :

$$MDAAV = (EDFAV.2/g) + \text{constante avant},$$

$$MDAAR = (EDFAR.2/g) + \text{constante arrière},$$

où g est la constante d'accélération de la pesanteur = 9,81 m.s$^{-2}$.

21. Dispositif de commande d'une suspension suivant l'une quelconque des revendications 18 à 20, **caractérisé en ce que**
le moyen (20) de calcul de la masse suspendue (MSUS) du véhicule et de la valeur de répartition de masse (RMAvAr) entre l'avant et l'arrière du véhicule comprend au moins un filtre passe-bas (PB1, PB2) de la somme de la masse dynamique apparente avant (MDAAV), respectivement arrière (MDAAR), et du biais aérodynamique avant (BAAV), respectivement arrière (BAAR), pour obtenir une masse suspendue avant (MSUSAV), respectivement arrière (MSUSAR),
la masse suspendue (MSUS) étant égale à la somme de la masse suspendue avant (MSUSAV) et de la masse suspendue arrière (MSUSAR),
la valeur de répartition de masse (RMAvAr) entre l'avant et l'arrière du véhicule étant égale à la masse suspendue avant (MSUSAV) divisée par la masse suspendue du véhicule (MSUS).

22. Dispositif de commande d'une suspension suivant la revendication 21, **caractérisé en ce qu'**il comprend un moyen d'entrée d'une information (IO) d'ouvrant,
le moyen de calcul de la masse suspendue (MSUS) du véhicule et de la valeur de répartition de masse (RMAvAr) entre l'avant et l'arrière est apte à enregistrer des valeurs successives de la masse suspendue avant (MSUSAV), respectivement arrière (MSUSAR), et à retenir la valeur précédemment enregistrée de la masse suspendue avant (MSUSAV), respectivement arrière (MSUSAR), au lieu de sa valeur suivante, lorsque au moins l'une des conditions suivantes est réalisée :

- la vitesse (WH) du véhicule n'est pas comprise entre un seuil bas prédéterminé (VVH1) et un seuil haut prédéterminé (WH2),
- l'information d'ouvrant (IO) indique une ouverture de cet ouvrant du véhicule et la vitesse (WH) du véhicule n'est pas supérieure à un seuil prescrit (WH3),
- l'écart entre ladite valeur précédemment enregistrée (MSUSEAVF(n-1)) de la masse suspendue avant (MSUSAV), respectivement arrière (MSUSAR), et sa valeur suivante (MSUSEAVF(n)), est inférieur ou égal en valeur absolue à un écart prescrit (Δ).

23. Véhicule automobile (1) comportant une caisse (2), des roues (A, B, C, D), une suspension (S) de la caisse (2) sur les roues (A, B, C, D) et un dispositif de commande de la suspension (S) suivant l'une quelconque des revendications précédentes.

24. Procédé d'obtention d'un véhicule automobile,
le véhicule automobile étant muni de roues, d'une caisse, d'une suspension ayant au moins un amortisseur à amortissement variable de la caisse sur les roues, et d'un dispositif de commande de la suspension, le dispositif de commande ayant au moins un calculateur (CSS) apte à calculer une grandeur (ER) de commande d'un actionneur (M) dudit au moins un amortisseur (AM) de la suspension,
le procédé d'obtention comportant une étape de montage du calculateur (CSS) sur le véhicule,
**caractérisé en ce que** le procédé d'obtention comporte
au moins une étape de programmation du calculateur suivant au moins un programme comportant des instructions de programme mettant en oeuvre les moyens de calcul du dispositif de commande de la suspension suivant l'une quelconque des revendication 1 à 22.

25. Programme informatique de pilotage d'un calculateur (CSS), comportant des instructions de programme pour le calcul d'au moins un premier effort modal F1 de consigne d'amortisseur en fonction d'au moins une vitesse modale ($V_{mod}$) absolue de caisse, pour le calcul d'un deuxième effort modal F2 de consigne de l'amortisseur en fonction d'au moins une vitesse modale ($V_{mod2}$) relative de caisse par rapport au plan moyen des roues, pour la détection d'au moins une sollicitation sur le véhicule, pour le calcul d'un coefficient $\alpha$ de pondération du premier effort F1 de consigne et du deuxième effort F2 de consigne, pour le calcul d'un effort modal F de consigne d'amortisseur suivant la formule

$$F = (1- \alpha).F1 + \alpha.F2,$$

où le coefficient $\alpha$ de pondération est supérieur ou égal à 0 et inférieur ou égal à 1, est normalement à 0 et prend la valeur 1 au moins lorsque la sollicitation détectée dépasse un seuil prescrit, et pour le calcul d'une grandeur (ER) de commande d'un actionneur (M) d'au moins un amortisseur (AM) variable d'une suspension (S) en fonction dudit effort modal (F) de consigne de l'amortisseur, lorsqu'il est mis en oeuvre dans un dispositif de commande de suspension selon l'une quelconque des revendications 1 à 22.

**Claims**

1. A control device for a suspension of a motor vehicle body (2) on its wheels (A), having a computer (CSS) having a means for calculating a control magnitude (ER) for an actuator (M) of at least one variable damper (AM) of the suspension (S) as a function of a setpoint modal force (F) for the damper, calculated as a function of at least one body modal speed, estimated on the vehicle, **characterized in that** the computer (CSS) has:

   - a first means (21) for calculating a first setpoint modal force F1 of the damper as a function of at least one absolute body modal speed ($V_{mod}$), estimated on the vehicle,
   - a second means (34) for calculating a second setpoint modal force F2 of the damper as a function of at least one relative body modal speed ($V_{mod2}$) with respect to the mid-plane of the wheels, estimated on the vehicle,
   - a means (22) for detecting at least one stress on the vehicle,
   - a means (23) for calculating a weighting coefficient $\alpha$ of the first setpoint force F1 and the second setpoint force F2, for calculating said setpoint modal force F of the damper using the formula

$$F = (1-\alpha).F1 + \alpha.F2,$$

   where the weighting coefficient $\alpha$ is greater than or equal to 0 and lower than or equal to 1, is normally 0, and takes the value of 1 at least when the detected stress exceeds a prescribed threshold.

2. The suspension control device according to Claim 1, **characterized in that** it comprises a displacement sensor (CAP-DEB) of the wheel with respect to the body (2), a means (10) for calculating the displacement speed (VDEB) of the damper as a function of the displacement of the corresponding wheel, a means (22) for calculating a setpoint force (FA1) of the damper (AM) as a function of said at least one setpoint modal force (F), and a means (22) for calculating the control magnitude (ER) of the actuator (M) of the damper as a function of this setpoint force (FA1) and the wheel displacement speed (VDEB).

3. The suspension control device according to any one of the preceding claims, **characterized in that** the control magnitude (ER) is a damping law determined from among a plurality of different damping laws (ER) that set the damper force (FA) as a function of its displacement speed (VDEB).

4. The suspension control device according to Claim 3, **characterized in that** it comprises a means (27) for calculating at least one minimal damping law (ERM) as a function of at least one among the vehicle speed (VVH), the corrected longitudinal acceleration, the corrected transverse acceleration, the anticipated transverse jerk, and a means (28) for calculating the control magnitude (ER) by taking the maximum of the setpoint damping law (ER) and the at least one minimal damping law (ERM).

5. The suspension control device according to any one of the preceding claims, **characterized in that** the means (23) for calculating the weighting coefficient $\alpha$ is able to calculate the weighting coefficient $\alpha$ as a function of at least one among an anticipated longitudinal jerk $\dddot{X}$ , an anticipated transverse jerk $\dddot{Y}$ , a corrected longitudinal acceleration ($\ddot{X}_{COR}$), a corrected transverse acceleration ($\ddot{Y}_{COR}$), a sportive mode information unit (IS) set by the position of a sportive mode control button on the dashboard of the vehicle, which can be either in a sportive mode position or in a non-sportive mode position.

6. The suspension control device according to Claim 4 or 5, **characterized in that** it comprises a means for measuring the vehicle speed (VVH), a means (CAPL) for measuring the vehicle longitudinal acceleration (ACCL), a means (CAP-P) for measuring a braking master cylinder pressure ($P_{MC}$), and a means (25) for calculating the corrected longitudinal acceleration ($\ddot{X}_{COR}$) as a function of the measured vehicle speed (VVH), a sprung mass (MSUS) of the vehicle, the measured longitudinal acceleration (ACCL), the braking master cylinder pressure ($P_{MC}$), and an anticipated drive torque at the wheels ($C_R$).

7. The suspension control device according to Claim 6, **characterized in that** it comprises a means (25) for calculating the corrected longitudinal acceleration ($\ddot{X}_{COR}$) able to calculate an anticipated longitudinal acceleration $\ddot{X}_{ANT}$ as a function of the measured speed (VVH) of the vehicle, the sprung mass (MSUS) of the vehicle, the braking master cylinder pressure ($P_{MC}$) and the anticipated drive torque at the wheels ($C_R$), and to calculate the corrected longitudinal acceleration $\ddot{X}_{(COR)}$ according to the formula^

$$\ddot{X}_{COR} = ACCL + PH(\ddot{X}_{ANT} - ACCL)$$

where ACCL is the measured longitudinal acceleration, and PH($\ddot{X}_{ANT}$ - ACCL) is the difference $\ddot{X}_{ANT}$ - ACCL, filtered by a high-pass filter (PH) of the means (25) for calculating the corrected longitudinal acceleration ($\ddot{X}_{COR}$) .

8. The suspension control device according to Claim 7, **characterized in that** the means (25) for calculating the corrected longitudinal acceleration ($\ddot{X}_{COR}$) is able to calculate the anticipated longitudinal acceleration $\ddot{X}_{ANT}$

- by extracting from a prerecorded table or curve that gives the braking master cylinder force as a function of the master cylinder pressure, the value (EFR)0 of this braking force corresponding to the measured master cylinder pressure ($P_{MC}$),
- by calculating the anticipated force of the engine at the wheels (EMR), equal to the anticipated drive torque at the wheels ($C_R$) divided by a prerecorded mean radius ($R_{moy}$) of the wheels,
- by calculating a longitudinal drag force ETR as a function of the vehicle speed VVH according to the formula:

$$ETR = COEF.(VVH)^2 + DEC$$

where COEF is a prerecorded coefficient and DEC is a prerecorded offset,
- by calculating the total longitudinal force (ELT) equal to the sum of the braking force (EFR), the anticipated engine force (EMR) at the wheels and the longitudinal drag force (ETR),
- by calculating a total mass (MTOT) of the vehicle from its sprung mass (MSUS),
- by dividing the total longitudinal force (ELT) by the total mass (MTOT) to obtain the anticipated longitudinal acceleration ($\ddot{X}_{ANT}$).

9. The suspension control device according to any one of Claims 4 to 8, **characterized in that** it comprises a means for measuring the speed (VVH) of the vehicle, a means (CAP-ACCT) for measuring the transverse acceleration (ACCT) of the vehicle, and a means (26) for calculating a corrected transverse acceleration $\ddot{Y}_{COR}$ as a function of an anticipated transverse acceleration $\ddot{Y}_{ANT}$ calculated as a function of a sprung mass (MSUS) of the vehicle, a front-rear mass distribution value (RMAvAr) of the vehicle, the measured speed VVH of the vehicle, an angle of rotation $\delta$ of the steering wheel, and the measured transverse acceleration (ACCT) of the vehicle, according to the formula:

$$\ddot{Y}_{ANT} = \frac{D.\delta.VVH^2}{e(1 + K.VVH^2)}$$

where D is the predetermined demultiplication of the steering wheel, e is the predetermined wheel base of the vehicle, and K is an oversteer gain constant, calculated as a function of the front-rear mass distribution value (RMAvAr) and the sprung mass (MSUS).

**10.** The suspension control device according to Claim 9, **characterized in that** the means (26) for calculating the corrected transverse acceleration $\ddot{Y}_{COR}$ is able to calculate the corrected transverse acceleration $\ddot{Y}_{COR}$ according to the formula

$$\ddot{Y}_{COR} = ACCT + PH2(\ddot{Y}_{ANT} - ACCT)$$

where ACCT is the measured longitudinal acceleration, and PH2 ($\ddot{Y}_{ANT}$ - ACCT) is the difference $\ddot{Y}_{ANT}$-ACCT, filtered by a high-pass filter (PH2) of the means (26) for calculating the corrected transverse acceleration $\ddot{Y}_{COR}$.

**11.** The suspension control device according to any one of Claims 5 to 10, **characterized in that**
the stress detection means (22) is able to calculate at least one stress detection signal taking a stress present state when at least one among the anticipated longitudinal jerk $\dddot{X}$, the anticipated transverse jerk $\dddot{Y}$, the corrected longitudinal acceleration ($\ddot{X}_{COR}$) and the corrected transverse acceleration ($\ddot{Y}_{COR}$) exceed a prescribed threshold, the means (23) for calculating the weighting coefficient $\alpha$ being able to change the weighting coefficient $\alpha$ to 1 when the stress detection signal is in the stress present state.

**12.** The suspension control device according to any one of Claims 5 to 10, **characterized in that**
the stress detection means (22) is able to calculate at least one stress detection signal among:

- a main longitudinal stress detection signal (SSOLL), taking a stress present state when the modulus of the anticipated longitudinal jerk $\dddot{X}$ exceeds a prescribed threshold as a function of the sportive mode information (IS) or when the corrected longitudinal acceleration ($\ddot{X}_{COR}$) exceeds a prescribed threshold as a function of the sportive mode information (IS), and a stress absent state otherwise,
- a second longitudinal stress detection signal (SL2), taking a stress present state when the main longitudinal stress detection signal (SSOLL) is in the stress present state and when the modulus of the anticipated longitudinal jerk $\dddot{X}$ exceeds another prerecorded threshold, and a stress absent state otherwise,
- a third longitudinal stress detection signal (SL3), taking a stress present state when the main longitudinal stress detection signal (SSOLL) is in the stress present state and when the variation of the corrected longitudinal acceleration ($\ddot{X}_{COR}$) exceeds a determined threshold, and a stress absent state otherwise,
- a main transverse stress detection signal (SSOLT), taking a stress present state when the module of the anticipated transverse jerk $\dddot{Y}$ exceeds a prescribed threshold as a function of the sportive mode information (IS) or when the corrected transverse acceleration ($\ddot{Y}_{COR}$) exceeds a prescribed threshold as a function of the sportive mode information (IS), and a stress absent state otherwise,
- a fourth transverse stress detection signal (ST4), taking a stress present state when the main transverse stress detection signal (SSOLT) is in the stress present state and when the modulus of the anticipated transverse jerk $\dddot{Y}$ exceeds a prerecorded threshold, and a stress absent state otherwise,
- a fifth transverse stress detection signal (ST5), taking a stress absent state when the main transverse stress detection signal (SSOLT) is in the stress present state and when the variation of the corrected transverse acceleration ($\ddot{Y}_{COR}$) exceeds a determined threshold, and a stress absent state otherwise,

the means (23) for calculating the weighting coefficient $\alpha$ being able to increase the weighting coefficient $\alpha$ from 0, when said stress detection signal changes from the stress absent state to the stress present state.

**13.** The suspension control device according to Claim 12, **characterized in that** the means (23) for calculating the weighting coefficient $\alpha$ is able to calculate an intermediate weighting coefficient ($\alpha_{INTER}$) by

- initialization (S10) at 0,

- intermediate weighting coefficient $\alpha_{INTER}$ set (S11) at 1 each time the stress detection signal (SSOL, SL2, SL3, ST4, ST5) changes from the stress absent state to the stress present state,
- intermediate weighting coefficient $\alpha_{INTER}$ kept (S12) at 1 for a prerecorded dead time (TMORT) after each of these changes,
- decrease (S13) of the intermediate weighting coefficient $\alpha_{INTER}$ to 0 during a modulation time (TMOD) after this dead time (TMORT),

a driver demand logic signal (SSOL) taking the value 1 when the main longitudinal stress detection signal (SSOLL) and/or the main transverse stress detection signal (SSOLT) takes a stress present state,
a limited logic signal (SSOL$_{LIMIT}$) for driver demand being calculated by filtering the driver demand logic signal (SSOL) in a negative pitch limiter so that it changes from 1 to 0 minimum in the modulation time (TMOD),
the means (23) for calculating the weighting coefficient $\alpha$ is able to calculate the weighting coefficient $\alpha$ by multiplying the intermediate weighting coefficient $\alpha_{INTER}$ by the limited logic signal (SSOL$_{LIMIT}$) for driver demand.

14. The suspension control device according to any one of Claims 5 to 12, **characterized in that** it comprises a means for measuring a brake master cylinder pressure, a means (33) for calculating the anticipated longitudinal jerk ( $\dddot{X}$ ) , able to calculate the anticipated longitudinal jerk ( $\dddot{X}$ ) as a function of the brake master cylinder pressure, an anticipated engine torque at the wheels, and a vehicle sprung mass (MSUS).

15. The suspension control device according to Claim 14, **characterized in that** the means (33) for calculating the anticipated longitudinal jerk ( $\dddot{X}$ ) is able to extract from a prerecorded table or curve that gives a master cylinder braking force as a function of the master cylinder pressure, the value (EFR) of this braking force corresponding to the master cylinder pressure (P$_{MC}$),

the means (33) for calculating the anticipated longitudinal jerk ( $\dddot{X}$ ) comprises a low-pass filter for the braking force (EFR), and a derivator of the braking force (EFR) thus filtered in order obtain the derivative $\dot{E}_{FRF}$ of the filtered braking force (EFR),

the means (33) for calculating the anticipated longitudinal jerk ( $\dddot{X}$ ) is able to calculate an anticipated engine force at the wheels (EMR), equal to the anticipated engine torque at the wheels (C$_R$) divided by a prerecorded mean wheel radius (Rmoy) of the wheels, the means (33) for calculating the anticipated longitudinal jerk ( $\dddot{X}$ ) comprises a low-pass filter for this anticipated engine force (EMR) at the wheels, and a derivator of the anticipated engine force (EMR) thus filtered in order to obtain the derivative $\dot{E}_{MRF}$ of the filtered engine force (EMR),

the anticipated longitudinal jerk ( $\dddot{X}$ ) being equal to

$$\dddot{X} = \frac{\dot{E}_{FRF} + \dot{E}_{MRF}}{MTOT}$$

where MTOT is the predetermined total mass MTOT of the vehicle.

16. The suspension control device according to Claim 15, **characterized in that** it comprises a means for measuring the vehicle speed (VVH), a means for calculating the engine rotation speed $\omega_{MOT}$ at the vehicle speed (VVH) and a means (40) for calculating the anticipated engine torque at the wheels C$_R$ according to the formula:

$$C_R \ = \ C_M \ \cdot \ R_{EMBR}(i)$$

With R$_{EMBR}$ (i) = $\omega_{MOT}/\omega_{WHEEL}$ where R$_{EMBR}$(i) is the engagement ratio having the number i, $\omega_{WHEEL}$ is the wheel rotation speed, C$_M$ is a predetermined engine torque.

17. The suspension control device according to any one of Claims 4 to 16, **characterized in that** it comprises a means (32) for calculating the anticipated transverse jerk ( $\dddot{Y}$ ) **,** which is able to calculate the anticipated transverse jerk $\dddot{Y}$ as a function of the sprung mass (MSUS), a front-rear mass distribution value (RMAvAr), the vehicle speed VVH, and steering wheel rotation speed δ according to the formula:

$$\dddot{Y}_{ANT} = \frac{D.\delta.VVH^2}{e(1+K.VVH^2)}$$

where D is the predetermined demultiplication of the vehicle steering wheel, e is the predetermined vehicle wheelbase, and K is an oversteer gain constant,
calculated as a function of the front-rear mass distribution value (RMAvAr) and the sprung mass (MSUS).

18. The suspension control device according to any one of Claims 6 to 10, 13 to 17, **characterized in that** it comprises:

- a means for measuring the vehicle speed (VVH),
- for each wheel (A, B, C, D), a displacement sensor (CAP-DEB) of the wheel with respect to the body (2),
- a means (20) for calculating a front static attitude (ASav) and a rear static attitude (ASar) for the vehicle as a function of the displacement measurements (DEBF) provided by the displacement sensors (CAP-DEB),
- a means (20) for calculating a front apparent dynamic mass (MDAAV) and a rear apparent dynamic mass (MDAAR) as a function of the displacement measurements (DEB) provided by the displacement sensors (CAP-DEB),
- a means (20) for calculating a front aerodynamic bias (BAAV) and a rear aerodynamic bias (BAAR) as a function of the vehicle speed (VVH),
- a means (20) for calculating the vehicle sprung mass (MSUS) and a front-rear mass distribution value (RMAvAr) for the vehicle as a function of the front apparent dynamic mass (MDAAV), the rear apparent dynamic mass (MDAAR), the front aerodynamic bias (BAAV) and the rear aerodynamic bias (BAAR).

19. The suspension control device according to Claim 18, **characterized in that**
the means (20) for calculating the front static attitude (ASav) and the rear static attitude (ASar) of the vehicle is able to calculate the front (ASav) or rear (ASar) static attitude, respectively, as the mean displacement (DEBAVMOY) of the displacements (DEB) of the front wheels (A, B) or rear wheels (C, D) respectively, filtered through a low-pass filter, to which filtered mean displacement a respective front or rear attitude offset constant is then added.

20. The suspension control device according to any one of Claims 18 and 19, **characterized in that** the means (20) for calculating the front and rear apparent dynamic masses (MDAAV, MDAAR) comprises means for

- calculating the relative front or rear displacement equal to the mean displacement of the displacements (DEB) of the front wheels (A, B) or the rear wheels (C, D), respectively, to which a respective front or rear offset constant is then added,
- extracting a front EDFAV or respectively rear EDFAR spring flexure dynamic load value from a recorded table or curve that gives this load EDFAV as a function of the front relative displacement,
- calculating the respective front MDAAV or rear MDAAR apparent dynamic mass, by the formula:

```
MDAAV = (EDFAV.2/g) + front constant,


MDAAR = (EDFAR.2/g) + rear constant,
```

where g is the gravity acceleration constant = 9.81 m.s$^{-2}$.

21. The suspension control device according to any one of Claims 18 to 20, **characterized in that**
the means (20) for calculating the vehicle sprung mass (MSUS) and the front-rear mass distribution value (RMAvAr) for the vehicle comprises at least one low-pass filter (PB1, PB2) for the sum of the respective front (MDAAV) or rear (MDAAR) apparent dynamic mass, and the respective front (BAAV) or rear (BAAR) aerodynamic bias, in order to obtain a respective front (MSUSAV) or rear (MSUSAR) sprung mass,

the sprung mass (MSUS) being equal to the sum of the front sprung mass (MSUSAV) and the rear sprung mass (MSUSAR),

the vehicle front-rear mass distribution value (RMAvAr) being equal to the front sprung mass (MSUSAV) divided by the vehicle sprung mass (MSUS).

22. The suspension control device according to Claim 21, **characterized in that** it comprises an opening panel information unit (IO) input means,

the means for calculating the vehicle sprung mass (MSUS) and the front-rear mass distribution value (RMAvAr) is able to record successive values of the respective front (MSUSAV) or rear (MSUSAR) sprung mass, and to retain the previously recorded value of the respective front (MSUSAV) or rear (MSUSAR) sprung mass instead of its subsequent value when at least one of the following conditions is met:

- the vehicle speed (VVH) is not between a preset low threshold (VVH1) and a preset high threshold (VVH2),
- the opening panel information unit (IO) indicates that this opening panel of the vehicle is open and the vehicle speed (VVH) is not greater than a prescribed threshold (VVH3),
- the difference between said previously recorded value (MSUSEAVF(n-1)) of the respective front (MSUSAV) or rear (MSUSAR) sprung mass and its subsequent value (MSUSEAVF(n)) has an absolute value less than or equal to a prescribed difference ($\Delta$).

23. A motor vehicle (1) having a body (2), wheels (A, B, C, D), a suspension (S) of the body (2) on the wheels (A, B, C, D) and a control device of the suspension (S) according to any one of the preceding claims.

24. A production method for a motor vehicle,

the motor vehicle being equipped with wheels, a body, a suspension having at least one damper with variable damping of the body on the wheels, and a suspension control device, the control device having at least one computer (CSS) able to calculate control magnitude (ER) for an actuator (M) of said at least one suspension damper (AM), the production method having a step in which the computer (CSS) is mounted on the vehicle, **characterized in that** the production method has

at least one computer programming stage using at least one program having program instructions that employ the calculating means of the suspension control device according to any one of Claims 1 to 22.

25. A computer program for controlling a computer (CSS), having program instructions for calculating at least a first damper setpoint modal force F1 as a function of at least an absolute body modal speed ($V_{mod}$), for calculating a second setpoint modal force F2 of the damper as a function of at least one relative body modal speed ($V_{mod2}$) with respect to the mid-plane of the wheels, for detecting at least one stress on the vehicle, for calculating a weighting coefficient $\alpha$ of the first setpoint force F1 and the second setpoint force F2, for calculating a damper setpoint modal force F according to the formula

$$F = (1-\alpha).F1 + \alpha F2,$$

where the weighting coefficient $\alpha$ is greater than or equal to 0 and lower than or equal to 1, is normally 0, and takes the value 1 at least when the detected stress exceeds a prescribed threshold, and for the calculation of a control magnitude (ER) of an actuator (M) of at least one variable damper (AM) of a suspension (S), as a function of said setpoint modal force (F) of the damper, when it is employed in a suspension control device according to any one of Claims 1 to 22.

**Patentansprüche**

1. Vorrichtung zur Aufhängungsregelung einer Kraftfahrzeugkarosserie (2) auf ihren Rädern (A), die einen Rechner (CSS) aufweist, der ein Mittel zum Berechnen einer Regelgröße (ER) eines Stellantriebs (M) mindestens eines variablen Dämpfers (AM) der Aufhängung (S) in Abhängigkeit von einer modalen Sollkraft (F) des Dämpfers aufweist, die in Abhängigkeit von mindestens einer modalen Karosseriegeschwindigkeit, die auf dem Fahrzeug geschätzt wird, berechnet wird, **dadurch gekennzeichnet, dass** der Rechner (CSS) Folgendes aufweist:

- ein erstes Mittel (21) zum Berechnen einer ersten modalen Sollkraft F1 des Dämpfers in Abhängigkeit von

mindestens einer modalen absoluten Karosseriegeschwindigkeit ($V_{mod}$), die auf dem Fahrzeug geschätzt wird,
- ein zweites Mittel (34) zum Berechnen einer zweiten modalen Sollkraft F2 des Dämpfers in Abhängigkeit von mindestens einer modalen relativen Karosseriegeschwindigkeit ($V_{mod2}$) in Bezug zu der mittleren Ebene der Räder, die auf dem Fahrzeug geschätzt wird,
- ein Mittel (22) zum Erfassen mindestens einer Belastung auf dem Fahrzeug,
- ein Mittel (23) zum Berechnen eines Gewichtungskoeffizienten $\alpha$ der ersten Sollkraft F1 und der zweiten Sollkraft F2 für die Berechnung der modalen Sollkraft F des Dämpfers gemäß der Formel

$$F = (1-\alpha).F1 + \alpha.F2,$$

wobei der Gewichtungskoeffizient $\alpha$ größer oder gleich 0 und kleiner oder gleich 1 ist, normalerweise 0, und den Wert 1 mindestens annimmt, wenn die erfasste Belastung einen vorgeschriebenen Schwellenwert überschreitet.

2. Vorrichtung zur Aufhängungsregelung nach Anspruch 1, **dadurch gekennzeichnet, dass** sie einen Sensor (CAP-DEB) des Ausschlags des Rads in Bezug zu der Karosserie (2), ein Mittel (10) zum Berechnen der Ausschlaggeschwindigkeit (VDEB) des Dämpfers in Abhängigkeit von dem Ausschlagen des entsprechenden Rads, ein Mittel (22) zum Berechnen einer Sollkraft (FA1) des Dämpfers (AM) in Abhängigkeit von der mindestens einen modalen Sollkraft (F) und ein Mittel (22) zum Berechnen der Regelgröße (ER) des Stellantriebs (M) des Dämpfers in Abhängigkeit von dieser Sollkraft (FA1) und der Ausschlaggeschwindigkeit (VDEB) des Rads aufweist.

3. Vorrichtung zur Aufhängungsregelung nach einem der vorhergehenden Ansprüche, **dadurch gekennzeichnet, dass** die Regelgröße (ER) ein Dämpfungsgesetz ist, das aus einer Vielzahl unterschiedlicher Dämpfungsgesetze (ER) ausgewählt wird, das die Kraft (FA) des Dämpfers in Abhängigkeit von seiner Ausschlaggeschwindigkeit (VDEB) auferlegt.

4. Vorrichtung zur Aufhängungsregelung nach Anspruch 3, **dadurch gekennzeichnet, dass** sie ein Mittel (27) zum Berechnen mindestens eines Mindestdämpfungsgesetzes (ERM) in Abhängigkeit von mindestens entweder der Geschwindigkeit (VVH) des Fahrzeugs, oder der korrigierten Längsbeschleunigung, der korrigierten Querbeschleunigung, dem vorweggenommenen Querruck, und ein Mittel (28) zum Berechnen der Regelgröße (ER) unter Berücksichtigung des Maximums des Solldämpfungsgesetzes (ER) und des mindestens einen Mindestdämpfungsgesetzes (ERM) aufweist.

5. Vorrichtung zur Aufhängungsregelung nach einem der vorhergehenden Ansprüche, **dadurch gekennzeichnet, dass** das Mittel (23) zum Berechnen des Gewichtungskoeffizienten $\alpha$ geeignet ist, um den Gewichtungskoeffizienten $\alpha$ in Abhängigkeit von mindestens entweder einem vorweggenommenen Längsruck ($\dddot{X}$), einem vorweggenommenen Querruck ($\dddot{Y}$), einer korrigierten Längsbeschleunigung ($\ddot{X}_{COR}$), einer korrigierten Querbeschleunigung ($\ddot{Y}_{COR}$), einer Sportlichkeitsinformationen (IS), die von der Position eines Steuerknopfs für sportliches Fahren auf dem Armaturenbrett des Fahrzeugs auferlegt wird, der sich entweder in einer Position des sportlichen Fahrens oder in einer Position des Fehlens sportlichen Fahrens befinden kann, zu berechnen.

6. Vorrichtung zur Aufhängungsregelung nach Anspruch 4 oder 5, **dadurch gekennzeichnet, dass** sie ein Mittel zum Messen der Geschwindigkeit (VVH) des Fahrzeugs, ein Mittel zum Messen (CAPL) der Längsbeschleunigung (ACCL) des Fahrzeugs, ein Mittel zum Messen (CAP-P) eines Drucks ($P_{MC}$) des Bremshauptzylinders und ein Mittel (25) zum Berechnen der korrigierten Längsbeschleunigung ($\ddot{X}_{COR}$) in Abhängigkeit von der gemessenen Geschwindigkeit (VVH) des Fahrzeugs, einer hängenden Masse (MSUS) des Fahrzeugs, der gemessenen Längsbeschleunigung (ACCL), von dem Druck ($P_{MC}$) des Bremshauptzylinders und einem vorweggenommenen Motordrehmoment an den Rädern ($C_R$) aufweist.

7. Vorrichtung zur Aufhängungsregelung nach Anspruch 6, **dadurch gekennzeichnet, dass** sie ein Mittel (25) zum Berechnen der korrigierten Längsbeschleunigung ($\ddot{X}_{COR}$) aufweist, das geeignet ist, um eine vorweggenommene Längsbeschleunigung $\ddot{X}_{ANT}$ in Abhängigkeit von der gemessenen Beschleunigung (VVH) des Fahrzeugs, der hängenden Masse (MSUS) des Fahrzeugs, dem Druck ($P_{MC}$) des Bremshauptzylinders und dem vorweggenommenen Motordrehmoment an den Rädern ($C_R$) aufweist, um die korrigierte Längsbeschleunigung ($\ddot{X}_{COR}$) gemäß der folgenden Formel zu berechnen

$$\ddot{X}_{COR} = ACCL + PH(\ddot{X}_{ANT} - ACCL),$$

wobei ACCL die gemessene Längsbeschleunigung ist und PH ($\ddot{X}_{ANT}$ - ACCL) der Unterschied $\ddot{X}_{ANT}$ - ACCL gefiltert durch ein Hochpassfilter (PH) des Mittels (25) zur Berechnung der korrigierten Längsbeschleunigung ($\ddot{X}_{COR}$) ist.

8. Vorrichtung zur Aufhängungsregelung nach Anspruch 7, **dadurch gekennzeichnet, dass** das Mittel (25) zum Berechnen der korrigierten Längsbeschleunigung ($\ddot{X}_{COR}$) geeignet ist, um die vorweggenommene Längsbeschleunigung $\ddot{X}_{ANT}$ zu berechnen durch

   - Extrahieren einer vorab gespeicherten Tabelle oder Kurve, die die Bremskraft des Hauptzylinders in Abhängigkeit von dem Druck des Hauptzylinders angibt, wobei der Wert (EFR) 0 dieser Bremskraft dem gemessenen Druck ($P_{MC}$) des Hauptzylinders entspricht,
   - Berechnen der vorweggenommenen Kraft des Motors an den Rädern (EMR) gleich dem an den Rädern vorweggenommenen Motordrehmoment ($C_R$) geteilt durch einen vorab aufgezeichneten mittleren Radius (Rmoy) der Räder,
   - Berechnen einer Längsluftwiderstandskraft ETR in Abhängigkeit von der Geschwindigkeit des Fahrzeugs VVH gemäß der Formel:

$$ETR = COEF.(VVH)^2 + DEC$$

   wobei COEF ein vorab aufgezeichneter Koeffizient und DEC ein voraufgezeichneter Versatz ist,

   - Berechnen der Gesamtlängskraft (ELT) gleich der Summe der Bremskraft (EFR), der vorweggenommenen Kraft des Motors an den Rädern (EMR) und der Längsluftwiderstandskraft (ETR),
   - Berechnen einer Gesamtmasse (MTOT) des Fahrzeugs ausgehend von der hängenden Masse (MSUS),
   - Teilen der Gesamtlängskraft (ELT) durch die Gesamtmasse (MTOT), um die vorweggenommene Längsbeschleunigung ($\ddot{X}_{ANT}$) zu erhalten.

9. Vorrichtung zur Aufhängungsregelung nach einem der Ansprüche 4 bis 8, **dadurch gekennzeichnet, dass** sie ein Mittel zum Messen der Geschwindigkeit (VVH) des Fahrzeugs, ein Mittel zum Messen (CAP-ACCT) der Querbeschleunigung (ACCT) des Fahrzeugs und ein Mittel (26) zum Berechnen einer korrigierten Querbeschleunigung $\ddot{Y}_{COR}$ in Abhängigkeit von einer vorweggenommenen Querbeschleunigung $\ddot{Y}_{ANT}$, die in Abhängigkeit von der hängenden Masse (MSUS) des Fahrzeugs, einem Masseverteilungswert (RMAAvAr) zwischen der Vorderseite und der Rückseite des Fahrzeugs, der gemessenen Geschwindigkeit VVH des Fahrzeugs, von einem Drehwinkel δ des Lenkrads und der gemessenen Querbeschleunigung (ACCT) des Fahrzeugs gemäß der folgenden Formel aufweist:

$$\ddot{Y}_{ANT} = \frac{D.\delta.VVH^2}{e(1 + K.VVH^2)}$$

   wobei D die vorausbestimmte Untersetzung des Lenkrads des Fahrzeugs ist, e der vorbestimmte Radstand des Fahrzeugs und K eine Übereinschlag-Verstärkungskonstante ist, die in Abhängigkeit von dem Masseverteilungswert (RMAvAr) zwischen der Vorderseite und der Rückseite und der hängenden Masse (MSUS) berechnet wird.

10. Vorrichtung zur Aufhängungsregelung nach Anspruch 9, **dadurch gekennzeichnet, dass** das Mittel (26) zum Berechnen der korrigierten Querbeschleunigung $\ddot{Y}_{COR}$ geeignet ist, um die korrigierte Querbeschleunigung $\ddot{Y}_{COR}$ gemäß der folgenden Formel zu berechnen

$$\ddot{Y}_{COR} = ACCT + PH2(\ddot{Y}_{ANT} - ACCT)$$

   wobei ACCT die gemessene Längsbeschleunigung und PHS ($\ddot{Y}_{ANT}$ - ACCT) der Unterschied $\ddot{Y}_{ANT}$ - ACCT gefiltert durch ein Hochpassfilter (PH2) des Mittels (26) zum Berechnen der korrigierten Querbeschleunigung $\ddot{Y}_{COR}$ ist.

11. Vorrichtung zur Aufhängungsregelung nach einem der Ansprüche 5 bis 10, **dadurch gekennzeichnet, dass**

das Mittel (22) zum Erfassen von Belastungen geeignet ist, um mindestens ein Belastungserfassungssignal zu berechnen, das einen Zustand des Vorliegens einer Belastung annimmt, wenn mindestens der vorweggenommene Längsruck ($\dddot{X}$), der vorweggenommene Querruck ($\dddot{Y}$), die korrigierte Längsbeschleunigung ($\ddot{X}_{COR}$) und die korrigierte Querbeschleunigung ($\ddot{Y}_{COR}$) einen vorgeschriebenen Schwellenwert überschreiten,
das Mittel (23) zum Berechnen des Gewichtungskoeffizienten $\alpha$ geeignet ist, den Gewichtungskoeffizienten $\alpha$ auf 1 übergehen zu lassen, wenn das Belastungserfassungssignal in dem Zustand des Vorliegens einer Belastung ist.

**12.** Vorrichtung zur Aufhängungsregelung nach einem der Ansprüche 5 bis 10, **dadurch gekennzeichnet, dass** das Mittel (22) zum Erfassen von Belastungen geeignet ist, um mindestens ein Belastungserfassungssignal zu berechnen aus den folgenden:

- ein Hauptsignal (SSOLL) der Erfassung von Längsbelastungen, das einen Zustand des Vorliegens einer Belastung annimmt, wenn das Modul des vorweggenommenen Längsrucks ($\dddot{X}$) einen Schwellenwert überschreitet, der in Abhängigkeit von der Sportlichkeitsinformation (IS) vorgeschrieben ist, oder wenn die korrigierte Längsbeschleunigung ($\ddot{X}_{COR}$) einen Schwellenwert überschreitet, der in Abhängigkeit von der Sportlichkeitsinformation (IS) vorgeschrieben ist, und anderenfalls einen Zustand des Fehlens von Belastungen,
- ein zweites Signal (SL2) des Erfassens von Längsbelastungen, das einen Zustand des Vorliegens einer Belastung annimmt, wenn das Hauptsignal (SSOLL) des Erfassens von Längsbelastungen auf dem Zustand des Vorliegens einer Belastung ist, und wenn das Modul des vorweggenommenen Längsrucks ($\dddot{X}$) einen weiteren vorab aufgezeichneten Schwellenwert überschreitet, und anderenfalls einen Zustand des Fehlens von Belastungen,
- ein drittes Signal (SL3) des Erfassens von Längsbelastungen, das einen Zustand des Vorliegens von Belastungen annimmt, wenn das Hauptsignal (SSOLL) des Erfassens von Längsbelastungen den Zustand des Vorliegens einer Belastung hat, und wenn die Variation der korrigierten Längsbeschleunigung ($\ddot{X}_{COR}$) einen gegebenen Schwellenwert überschreitet, und anderenfalls einen Zustand des Fehlens von Belastungen,
- ein Hauptsignal (SSOLT) des Erfassens von Querbelastungen, das einen Zustand des Vorliegens einer Belastung annimmt, wenn das Modul des vorweggenommenen Querrucks ($\dddot{Y}$) einen Schwellenwert überschreitet, der in Abhängigkeit von der Sportlichkeitsinformation (IS) vorgeschrieben ist, oder wenn die korrigierte Querbeschleunigung ($\ddot{Y}_{COR}$) einen Schwellenwert überschreitet, der in Abhängigkeit von der Sportlichkeitsinformation (IS) vorgeschrieben ist, und anderenfalls einen Zustand des Fehlens von Belastungen,
- ein viertes Signal (ST4) des Erfassens von Querbelastungen, das einen Zustand des Vorliegens einer Belastung annimmt, wenn das Hauptsignal (SSOLT) des Erfassens von Querbelastungen den Zustand des Vorliegens einer Belastung hat, und wenn das Modul des vorweggenommenen Querrucks ($\dddot{Y}$) einen vorab aufgezeichneten Schwellenwert überschreitet, und anderenfalls einen Zustand des Fehlens von Belastungen,
- ein fünftes Signal (ST5) des Erfassens von Querbelastungen, das einen Zustand des Fehlens von Belastungen annimmt, wenn das Hauptsignal (SSOLT) des Erfassens von Querbelastungen den Zustand des Vorliegens einer Belastung hat, und wenn die Variation der korrigierten Querbeschleunigung ($\ddot{Y}_{COR}$) einen bestimmten Schwellenwert überschreitet, und anderenfalls einen Zustand des Fehlens von Belastungen,

wobei das Mittel (23) zum Berechnen des Gewichtungskoeffizienten $\alpha$ geeignet ist, den Gewichtungskoeffizienten $\alpha$ ausgehend von 0 zu erhöhen, wenn das Belastungsverfassungssignal von dem Zustand des Fehlens von Belastungen auf den Zustand des Vorliegens einer Belastung übergeht.

**13.** Vorrichtung zur Aufhängungsregelung nach Anspruch 12, **dadurch gekennzeichnet, dass** das Mittel (23) zum Berechnen des Gewichtungskoeffizienten $\alpha$ geeignet ist, um einen Zwischengewichtungskoeffizienten ($\alpha_{INTER}$) zu berechnen durch

- Initialisierung (S10) auf 0,
- Stellen (S11) des Zwischengewichtungskoeffizienten $\alpha_{INTER}$ auf 1 bei jedem Übergang des Signals (SSOL, SL2, SL3, ST4, ST5) des Erfassens der Belastung von dem Zustand des Fehlens von Belastungen auf den Zustand des Vorliegens einer Belastung,
- Behalten (S12) auf 1 des Zwischengewichtungskoeffizienten $\alpha_{INTER}$ während einer vorab aufgezeichneten Totzeit (TMORT) nach jedem dieser Übergänge,
- Heruntersetzen (S13) des Zwischengewichtungskoeffizienten $\alpha_{INTER}$ während einer Modulationszeit (TMOD) nach dieser Totzeit (TMORT) bis 0,

wobei ein logisches Signal (SSOL) der Belastung des Fahrers den Wert 1 annimmt, wenn das Hauptsignal (SSOLL) des Erfassens von Längsbelastungen und/oder das Hauptsignal (SSOLT) des Erfassens von Querbelastungen einen Zustand des Vorliegens einer Belastung annimmt,
wobei ein begrenztes logisches Signal (SSOL$_{LIMIT}$) der Belastung des Fahrers unter Filterung des logischen Signals (SSOL) der Belastung des Fahrers in einem Begrenzer mit negativem Gefälle berechnet wird, damit es von 1 auf 0 mindestens während der Modulationszeit (TMOD) übergeht,
wobei das Mittel (23) zum Berechnen des Gewichtungskoeffizienten $\alpha$ geeignet ist, um den Gewichtungskoeffizienten $\alpha$ zu berechnen, indem es den Zwischengewichtungskoeffizienten $\alpha_{INTER}$ mit dem begrenzten logischen Signal (SSOL$_{LIMIT}$) der Belastung des Fahrers multipliziert.

14. Vorrichtung zur Aufhängungsregelung nach einem der Ansprüche 5 bis 12, **dadurch gekennzeichnet, dass** sie ein Mittel zum Messen eines Drucks des Bremshauptzylinders, ein Mittel (33) zum Berechnen des vorweggenommenen Längsrucks ($\dddot{X}$)**,** das geeignet ist, um den vorweggenommenen Längsruck ($\dddot{X}$) in Abhängigkeit von dem Druck des Bremshauptzylinders, eines vorweggenommenen Motordrehmoments an den Rädern und einer hängenden Masse (MSUS) des Fahrzeugs zu berechnen.

15. Vorrichtung zur Aufhängungsregelung nach Anspruch 14, **dadurch gekennzeichnet, dass** das Mittel (33) zum Berechnen des vorweggenommenen Längsrucks ($\dddot{X}$) geeignet ist, um eine vorab aufgezeichnete Tabelle oder Kurve zu extrahieren, die eine Bremskraft des Hauptzylinders in Abhängigkeit von dem Druck des Hauptzylinders angibt, wobei der Wert (EFR) dieser Bremskraft dem Druck (P$_{Mc}$) des Hauptzylinders entspricht,

das Mittel (33) zum Berechnen des vorweggenommenen Längsrucks ($\dddot{X}$) ein Tiefpassfilter der Bremskraft (EFR) und einen Differenzierer der so gefilterten Bremskraft (EFR) aufweist, um die Drift $\dot{E}_{FRF}$ der gefilterten Bremskraft (EFR) zu erhalten,

das Mittel (33) zum Berechnen des vorweggenommenen Längsrucks ($\dddot{X}$) geeignet ist, um eine vorweggenommene Kraft des Motors an den Rädern (EMR) zu berechnen, die gleich dem an den Rädern vorweggenommenen Motordrehmoment (C$_R$) geteilt durch einen vorab aufgezeichneten mittleren Radius (Rmoy) der Räder ist, das Mittel (33) zum Berechnen des vorweggenommenen Längsrucks ($\dddot{X}$) ein Tiefpassfilter dieser vorweggenommenen Kraft des Motors an den Rädern (EMR) aufweist, und einen Differenzierer der derart gefilterten vorweggenommenen Kraft des Motors (EMR), um die Drift $\dot{E}_{MRF}$ der gefilterten Kraft (EMR) des Motors zu erhalten, wobei der vorweggenommene Längsruck $\dddot{X}$ gleich

$$\dddot{X} = \frac{\dot{E}_{FRF} + \dot{E}_{MRF}}{MTOT}$$

ist, wobei MTOT die vorbestimmte Gesamtmasse MTOT des Fahrzeugs ist.

16. Vorrichtung zur Aufhängungsregelung nach Anspruch 15, **dadurch gekennzeichnet, dass** sie ein Mittel zum Messen der Geschwindigkeit (VVH) des Fahrzeugs, ein Mittel zum Berechnen der Drehzahl $\omega_{MOT}$ des Motors bei der Geschwindigkeit (VVH) des Fahrzeugs und einen Mittel (40) zum Berechnen des vorweggenommenen Motordrehmoments an den Rädern C$_R$ gemäß der folgenden Formel aufweist:

$$\mathtt{C_R \;=\; CM \;\cdot\; R_{EMBR}(i),}$$

wobei R$_{EMBR}$(I) = $\omega_{MOT}$/$\omega_{RAD}$
wobei R$_{EMBR}$(i) das Kupplungsverhältnis mit der Nummer i, $\omega_{RAD}$ die Drehzahl der Räder, CM ein vorbestimmtes Motordrehmoment ist.

**17.** Vorrichtung zur Aufhängungsregelung nach einem der Ansprüche 4 bis 16, **dadurch gekennzeichnet, dass** sie ein Mittel (32) zum Berechnen des vorweggenommenen Querrucks ($\dddot{Y}$) aufweist, das geeignet ist, um den vorweggenommenen Querruck $\dddot{Y}$ in Abhängigkeit von der hängenden Masse (MSUS), einem Masseverteilungswert (RMAvAr) zwischen der Vorderseite und der Rückseite, der Geschwindigkeit VVH des Fahrzeugs und einer Drehzahl $\delta$ des Lenkrads gemäß der folgenden Formel zu berechnen:

$$\dddot{Y}_{ANT} = \frac{D.\delta.VVH^2}{e(1 + K.VVH^2)}$$

wobei D die vorbestimmte Untersetzung des Lenkrads des Fahrzeugs ist, e der vorbestimmte Radstand des Fahrzeugs und K eine Übereinschlag-Verstärkungskonstante, berechnet in Abhängigkeit von dem Masseverteilungswert (RMAvAr) zwischen der Vorderseite und der Rückseite und der hängenden Masse (MSUS) ist.

**18.** Vorrichtung zur Aufhängungsregelung nach einem der Ansprüche 6 bis 10, 13 bis 17, **dadurch gekennzeichnet, dass** sie Folgendes aufweist:

- ein Mittel zum Messen der Geschwindigkeit (VVH) des Fahrzeugs,
- für jedes Rad (A, B, C, D) einen Sensor (CAP-DEB) des Ausschlags des Rads in Bezug zu der Karosserie (2),
- ein Mittel (20) zum Berechnen einer statischen vorderen Lage (ASav) und einer statischen hinteren Lage (ASar) des Fahrzeugs in Abhängigkeit von den Ausschlagmessungen (DEBF), die von den Ausschlagsensoren (CAP-DEB) geliefert werden,
- ein Mittel (20) zum Berechnen einer vorderen dynamischen Scheinmasse (MDAAV) und einer hinteren dynamischen Scheinmasse (MDAAR) in Abhängigkeit von den Ausschlagmessungen (DEB), die von den Ausschlagsensoren (CAP-DEB) geliefert werden,
- ein Mittel (20) zum Berechnen einer vorderen aerodynamischen Schräge (BAAV) und einer hinteren aerodynamischen Schräge (BAAR) in Abhängigkeit von der Geschwindigkeit (VVH) des Fahrzeugs,
- ein Mittel (20) zum Berechnen der hängenden Masse (MSUS) des Fahrzeugs und eines Masseverteilungswerts (RMAvAr) zwischen der Vorderseite und der Rückseite des Fahrzeugs in Abhängigkeit von der vorderen dynamischen Scheinmasse (MDAAV), der hinteren dynamischen Scheinmasse (MDAAR), der vorderen aerodynamischen Schräge (BAAV) und der hinteren aerodynamischen Schräge (BAAR).

**19.** Vorrichtung zur Aufhängungsregelung nach Anspruch 18, **dadurch gekennzeichnet, dass** das Mittel (20) zum Berechnen der vorderen statischen Lage (ASav) und der hinteren statischen Lage (ASar) des Fahrzeugs geeignet ist, um die vordere statische Lage (ASav) beziehungsweise hintere statische Lage (ASar) als den mittleren Ausschlag (DEBAVMOY) der Ausschläge (DEB) der Vorderräder (A, B) beziehungsweise der Hinterräder (C, D) gefiltert durch ein Tiefpassfilter zu berechnen, gefilterter mittlerer Ausschlag, zu dem anschließend eine Versatzkonstante der vorderen beziehungsweise hinteren Lage hinzugefügt wird.

**20.** Vorrichtung zur Aufhängungsregelung nach einem der Ansprüche 18 und 19, **dadurch gekennzeichnet, dass** das Mittel (20) zum Berechnen der vorderen dynamischen Scheinmasse und hinteren dynamischen Scheinmasse (MDAAV, MDAAR) Mittel aufweist, um

- den vorderen relativen Ausschlag beziehungsweise hinteren relativen Ausschlag gleich dem mittleren Ausschlag der Ausschläge (DEB) der Vorderräder (A, B) beziehungsweise Hinterräder (C, D) zu berechnen, zu dem anschließend eine vordere beziehungsweise hintere Versatzkonstante hinzugefügt wird,
- die vordere dynamische Federbiegekraft EDFAV beziehungsweise hintere dynamische Federbiegekraft EDFAR ausgehend von einer aufgezeichneten Tabelle oder Kurve, die diese Kraft EDFAV in Abhängigkeit von dem relativen vorderen Ausschlag angibt, zu extrahieren
- die vordere dynamische Scheinmasse MDAAV beziehungsweise hintere dynamische Scheinmasse MDAAR anhand der folgenden Formel zu extrahieren:

```
MDAAV = (EDFAV.2/g) + vordere Konstante,
```

$$MDAAR = (EDFAR.2/g) + \text{hintere Konstante},$$

wobei g die Beschleunigungskonstante der Schwerkraft = $9,81 m.s^{-2}$ ist.

21. Vorrichtung zur Aufhängungsregelung nach einem der Ansprüche 18 bis 20, **dadurch gekennzeichnet, dass** das Mittel (20) zum Berechnen der hängenden Masse (MSUS) des Fahrzeugs und des Masseverteilungswerts (RMAvAR) zwischen der Vorderseite und der Rückseite des Fahrzeugs mindestens ein Tiefpassfilter (PB1, PB2) der Summe der vorderen dynamischen Scheinmasse (MDAAV) beziehungsweise hinteren dynamischen Scheinmasse (MDAAR) und der vorderen aerodynamischen Schräge (BAAV) beziehungsweise hinteren aerodynamischen Schräge (BAAR) aufweist, um eine vordere hängende Masse (MSUSAV) beziehungsweise hintere hängende Masse (MSUSAR) zu erhalten,
wobei die hängende Masse (MSUS) gleich der Summe der vorderen hängenden Masse (MSUSAV) und der hinteren hängenden Masse (MSUSAR) ist,
wobei der Masseverteilungswert (RMAvAr) zwischen der Vorderseite und der Rückseite des Fahrzeugs gleich der vorderen hängenden Masse (MSUSAV) geteilt durch die hängende Masse des Fahrzeugs (MSUS) ist.

22. Vorrichtung zur Aufhängungsregelung nach Anspruch 21, **dadurch gekennzeichnet, dass** sie ein Mittel zum Eingeben einer Türinformation (I0) aufweist,
dass das Mittel zum Berechnen der hängenden Masse (MSUS) des Fahrzeugs und des Masseverteilungswerts (RMAvAr) zwischen der Vorderseite und der Rückseite geeignet ist, um aufeinanderfolgende Werte der vorderen hängenden Masse (MSUSAV) beziehungsweise hinteren hängenden Masse (MSUSAR) aufzuzeichnen und den zuvor aufgezeichneten Wert der vorderen hängenden Masse (MSUSAV) beziehungsweise der hinteren hängenden Masse (MSUSAR) an Stelle seines darauf folgenden Werts zu berücksichtigen, wenn mindestens eine der folgenden Bedingungen erfüllt ist:

- die Geschwindigkeit (VVH) des Fahrzeugs liegt nicht zwischen einem vorbestimmten unteren Schwellenwert (VVH1) und einem vorbestimmten oberen Schwellenwert (VVH2),
- die Türinformation (I0) zeigt ein Öffnen dieser Tür des Fahrzeugs an und die Geschwindigkeit (VVH) des Fahrzeugs ist nicht größer als ein vorgeschriebener Schwellenwert (VVH3),
- der Unterschied zwischen dem zuvor aufgezeichneten Wert (MSUSEAVF(n-1)) der vorderen hängenden Masse (MSUSAV) beziehungsweise der hinteren hängenden Masse (MSUSAR) und ihrem darauf folgenden Wert (MSUSEAVF(n)) ist im Absolutwert kleiner oder gleich wie ein vorgeschriebener Unterschied ($\Delta$).

23. Kraftfahrzeug (1), das eine Karosserie (2), Räder (A, B, C, D), eine Aufhängung (S) der Karosserie (2) auf den Rädern (A, B, C, D) und eine Vorrichtung zur Aufhängungsregelung (S) nach einem der vorhergehenden Ansprüche aufweist.

24. Verfahren zum Erhalten eines Kraftfahrzeugs,
wobei das Kraftfahrzeug mit Rädern, einer Karosserie, einer Aufhängung, die mindestens einen Dämpfer mit variabler Dämpfung der Karosserie auf den Rädern, und eine Vorrichtung zur Aufhängungsregelung aufweist, wobei die Vorrichtung zur Aufhängungsregelung mindestens einen Rechner (CSS) hat, der geeignet ist, um eine Regelgröße (ER) eines Stellantriebs (M) des mindestens einen Dämpfers (AM) der Aufhängung zu berechnen,
wobei das Verfahren zum Erhalten einen Schritt der Montage des Rechners (CSS) auf das Fahrzeug aufweist,
**dadurch gekennzeichnet, dass** das Verfahren zum Erhalten Folgendes aufweist
mindestens einen Schritt zum Programmieren des Rechners gemäß mindestens einem Programm, das Programmanweisungen aufweist, das die Rechenmittel der Vorrichtung zur Aufhängungsregelung nach einem der Ansprüche 1 bis 22 umsetzt.

25. EDV-Programm zum Steuern eines Rechners (CSS), der Programmanweisungen zum Berechnen mindestens einer ersten modalen Sollkraft F1 eines Dämpfers in Abhängigkeit von mindestens einer absoluten modalen Karosseriegeschwindigkeit ($V_{mod}$), zum Berechnen einer zweiten modalen Sollkraft F2 des Dämpfers in Abhängigkeit von mindestens einer relativen modalen Karosseriegeschwindigkeit ($V_{mod2}$) in Bezug zu der mittleren Ebene der Räder, zum Erfassen mindestens einer Belastung auf dem Fahrzeug, zum Berechnen eines Gewichtungskoeffizienten $\alpha$ der ersten Sollkraft F1 und der zweiten Sollkraft F2, zum Berechnen einer modalen Sollkraft F des Dämpfers gemäß der Formel

$$F = (1-\alpha).F1 + \alpha.F2$$

aufweist,
wobei der Gewichtungskoeffizient $\alpha$ größer oder gleich 0 und kleiner oder gleich 1 ist, und normalerweise gleich 0 und den Wert 1 mindestens annimmt, wenn die erfasste Belastung einen vorgeschriebenen Schwellenwert überschreitet, und zum Berechnen einer Regelgröße (ER) eines Stellantriebs (M) mindestens eines variablen Dämpfers (AM) einer Aufhängung (S) in Abhängigkeit von der modalen Sollkraft (F) des Dämpfers, wenn es in einer Vorrichtung zur Aufhängungsregelung nach einem der Ansprüche 1 bis 22 umgesetzt wird.

FIG. 1

FIG. 2

CAN 500 Kb

DIAG

CAP-DEB

DEB

E-DEB

CSS

ER

S    BR        BR    S

R        R

B    AM    AM    A

M    COM    COM    M

S    BR        BR    S

R        R

C    AM    AM    D

M    COM    COM    M

EP 1 926 616 B1

**FIG. 3**

**FIG. 18**

FIG. 4

EP 1 926 616 B1

**FIG. 5**

FA

AD2

FAM

FSEC

FLB

MFAM

MFSEC

SOUS

VDEB

ER

ER

FLEX-ABS

MLR

DEAV, DEAR

DER

VDEB

VDEB

PB

LR

12

DEB(A)

AD1

DEBF_A

AS

**FIG. 6**

**FIG. 7**

(MDAAV + BAAV)

(MDAAR + BAAR)

PB1

MSUSEAVF
MSUSEARF

COMLOG

PB2

MEM

MSUSEAV
MSUSEAR

MSUSAV
MSUSAR

**FIG. 9**

24

DEBAVMOY

PB3

RED

MMAX

DEBAVMOYF

|DEBAVMOYF|

NMC, NTC

**FIG. 11**

34

$\ddot{X}$, $\ddot{Y}$

341

SHJL, SHJT

342

343

$C_{\varphi 2ant}$
$C_{\theta 2ant}$

SBJL, SBJT

$\ddot{X}_{fmax}$, $\ddot{Y}_{fmax}$

**FIG. 8**

MDAAV + BAAV

S1 — MSUSEAVF

S2 — VVH1 ≤ VVH < VVH2 ? — **NON**

**OUI**

S3 — IO = "fermé" ou VVH > VVH3 — **NON**

**OUI**

S4 — |MSUSEAVF(n) - MSUSEAVF(n-1)| > Δ — **NON**

**OUI**

S5 — MSUSEAV = MSUSEAVF

S6 — MSUSEAV(n) = MSUSEAV(n-1)

S7 — MSU SAV

**FIG. 10**

EP 1 926 616 B1

**FIG. 12**

DEB → | 24 | → NMC, → NTC

DEB, VVH, IO → | 20 | → $I_g$, AS, MSUS, $I_\theta, I_\varphi$, $k_Z, k_\theta, k_\varphi$, RMAvAr

$C_R$, MSUS, $P_{MC}$ → | 33 | → $\ddot{X}$

VVH, MSUS, $\dot\delta$, RMAvAr → | 32 | → $\ddot{Y}$

VVH, MSUS, ACCL, $P_{MC}$, $C_R$ → | 25 | → $\ddot{X}_{COR}$

MSUS, RMAvAr, VVH, $\delta$, ACCT → | 26 | → $\ddot{Y}_{COR}$

| ER 10 | : DEB → $V_{mod} = \dot{Z}G, \dot\theta, \dot\varphi$

| 21 | inputs: NMC, NTC, VVH, IS, MSUS, $I_\theta, I_\varphi$, $k_Z, k_\theta, k_\varphi$

$F_2 = F_{Z2}, C_{\theta 2}, C_{\varphi 2}$

$F_{mod} = F_{Z1}, F_{\theta 1}, F_{\varphi 1} = F1$

$ER_C = ER_{CA}, ER_{CB}, ER_{CC}, ER_{CD}$

| 34 | inputs: $\ddot{X}$, $\ddot{Y}$, $k_Z, k_\theta, k_\varphi$, $I_\theta, I_\varphi$, VVH, IS, MSUS → $\alpha$

| 31 | inputs: RMAvAr, DEB, v, $I_g$ → $V_{mod2} = \dot{Z}G_2, \dot\theta_2, \dot\varphi_2$

| 22 | inputs: VDEB, RMAvAr, VVH, $\left.\begin{array}{l}F_Z\\F_\theta\\F_\varphi\end{array}\right\} F$ → $ER_C$

| 23 | inputs: $\ddot{X}$, $\ddot{Y}$, $\ddot{X}_{COR}$, $\ddot{Y}_{COR}$, IS

$ERP = ERP_A, ERP_B, ERP_C, ERP_D$

$ER_M = ER_{MA}, ER_{MB}, ER_{MC}, ER_{MD}$

| 27 | inputs: $\ddot{X}_{COR}$, $\ddot{Y}_{COR}$, VVH, IS, $\ddot{Y}$

$ERGD = ERGD_A, ERGD_B, ERGD_C, ERGD_D$

| 50 | → $ER_P$

| 60 |

| 28 | → $ER = ER_A, ER_B, ER_C, ER_D$

**FIG. 13**

SL1, SL2, SL3, SL4, SL5

**FIG. 14**

FIG. 15

lois d'amortissement

effort de l'amortisseur (N) — FA1

vitesse de débattement (m/s)

0

VEDB

ER

EP 1 926 616 B1

# FIG. 16

EP 1 926 616 B1

**FIG. 17**

ERGD = ERGD$_A$, ERGD$_B$, ERGD$_C$, ERGD$_D$

**RÉFÉRENCES CITÉES DANS LA DESCRIPTION**

**Documents brevets cités dans la description**

- US 5303155 A